(19) Europäisches Patentamt
European Patent Office
Office européen des brevets

(11) **EP 4 575 974 A1**

(12) **EUROPEAN PATENT APPLICATION**

(43) Date of publication:
**25.06.2025 Bulletin 2025/26**

(21) Application number: **24220674.6**

(22) Date of filing: **17.12.2024**

(51) International Patent Classification (IPC):
*G06T 3/4007* (2024.01)    *G06T 3/4053* (2024.01)
*G06T 3/4046* (2024.01)

(52) Cooperative Patent Classification (CPC):
**H04N 19/59; G06T 3/4007; G06T 3/4046;
G06T 3/4053; H04N 19/117; H04N 19/176;
H04N 19/80**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.12.2023 GB 202319651**

(71) Applicant: **Imagination Technologies Limited
Kings Langley, Hertfordshire WD4 8LZ (GB)**

(72) Inventors:
• **Imber, James
Kings Langley, WD4 8LZ (GB)**
• **Chirkunov, Sergei
Kings Langley, WD4 8LZ (GB)**
• **Heyward, Joseph
Kings Langley, WD4 8LZ (GB)**

(74) Representative: **Slingsby Partners LLP
1 Kingsway
London WC2B 6AN (GB)**

(54) **UPSAMPLING**

(57)      A method and a processing module are provided for applying upsampling to input pixels representing an image region to determine a block of upsampled pixels. The input pixels have locations corresponding to a repeating quincunx arrangement of upsampled pixel locations. The input pixels are analysed to determine one or more weighting parameters, the one or more weighting parameters being indicative of a directionality of filtering to be applied when upsampling is applied to the input pixels within the image region. One or more of the upsampled pixels of the block of upsampled pixels are determined in accordance with the directionality of filtering indicated by the determined one or more weighting parameters.

```
┌────────────────────────────────────────────────────┐
│  Receive input pixels representing an image region   │──  S502
└────────────────────────────────────────────────────┘
                          │
                          ▼
┌────────────────────────────────────────────────────┐
│   Analyse the input pixels to determine one or more  │──  S504
│                 weighting parameters                 │
└────────────────────────────────────────────────────┘
                          │
                          ▼
┌────────────────────────────────────────────────────┐
│  Determine one or more of the upsampled pixels of the│──  S506
│   block of upsampled pixels in accordance with the   │
│                weighting parameter(s)                │
└────────────────────────────────────────────────────┘
                          │
                          ▼
┌────────────────────────────────────────────────────┐
│        Output the block of upsampled pixels          │──  S508
└────────────────────────────────────────────────────┘
```

**FIGURE 5**

EP 4 575 974 A1

**Description**

CROSS-REFERENCE TO RELATED APPLICATION

This application claims priority from UK patent application 2319651.2 filed on 20 December 2023, which is herein incorporated by reference in its entirety.

TECHNICAL FIELD

The present disclosure is directed to upsampling. In particular, upsampling can be applied to input pixels representing an image region to determine a block of upsampled pixels, e.g. for super resolution techniques.

BACKGROUND

The term 'super resolution' refers to techniques of upsampling an image that enhance the apparent visual quality of the image, e.g. by estimating the appearance of a higher resolution version of the image. When implementing super resolution, a system will attempt to find a higher resolution version of a lower resolution input image that is maximally plausible and consistent with the lower-resolution input image. Super resolution is a challenging problem because, for every patch in a lower-resolution input image, there is a very large number of potential higher-resolution patches that could correspond to it. In other words, super resolution techniques are trying to solve an ill-posed problem, since although solutions exist, they are not unique.

Super resolution has important applications. It can be used to increase the resolution of an image, thereby increasing the 'quality' of the image as perceived by a viewer. Furthermore, it can be used as a post-processing step in an image generation process, thereby allowing images to be generated at lower resolution (which is often simpler and faster) whilst still resulting in a high quality, high resolution image. An image generation process may be an image capturing process, e.g. using a camera. Alternatively, an image generation process may be an image rendering process in which a computer, e.g. a graphics processing unit (GPU), renders an image of a virtual scene. Compared to using a GPU to render a high resolution image directly, allowing a GPU to render a low resolution image and then applying a super resolution technique to upsample the rendered image to produce a high resolution image has potential to significantly reduce the latency, bandwidth, power consumption, silicon area and/or compute costs of the GPU. GPUs may implement any suitable rendering technique, such as rasterization or ray tracing. For example, a GPU can render a 960x540 image (i.e. an image with 518,400 pixels arranged into 960 columns and 540 rows) which can then be upsampled by a factor of 2 in both horizontal and vertical dimensions (which is referred to as '2x upsampling') to produce a 1920x1080 image (i.e. an image with 2,073,600 pixels arranged into 1920 columns and 1080 rows). In this way, in order to produce the 1920x1080 image, the GPU renders an image with a quarter of the number of pixels. This results in very significant savings (e.g. in terms of latency, power consumption and/or silicon area of the GPU) during rendering and can for example allow a relatively low-performance GPU to render high-quality, high-resolution images within a low power and area budget, provided a suitably efficient and high-quality super-resolution implementation is used to perform the upsampling. In other examples, different upsampling factors (other than 2x) may be applied.

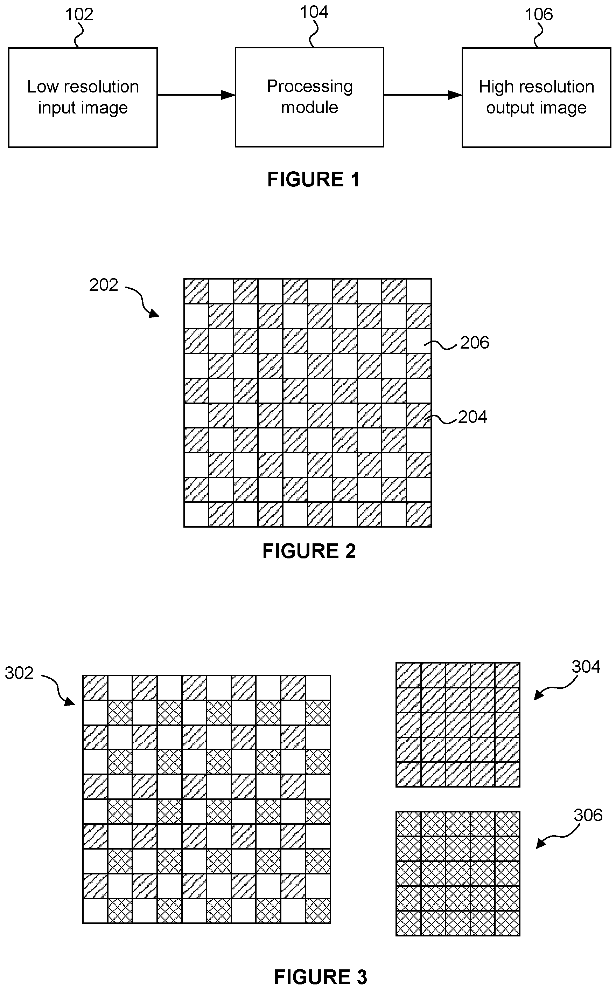

Figure 1 illustrates an upsampling process. An input image 102, which has a relatively low resolution, is processed by a processing module 104 to produce an output image 106 which has a relatively high resolution. In some systems, the processing module 104 may be implemented as a neural network to upsample the input image 102 to produce the upsampled output image 106. Implementing the processing module 104 as a neural network may produce good quality output images, but often requires a high performance computing system (e.g. with large, powerful processing units and memories) to implement the neural network. As such, implementing the processing module 104 as a neural network for performing upsampling of images may be unsuitable for reasons of processing time, latency, bandwidth, power consumption, memory usage, silicon area and compute costs. These considerations of efficiency are particularly important in some devices, e.g. small, battery operated devices with limited compute and bandwidth resources, such as mobile phones and tablets.

Some systems do not use a neural network for performing super resolution on images, and instead use more conventional processing modules. For example, some systems split the problem into two stages: (i) upsampling and (ii) adaptive sharpening. In these systems, the upsampling stage can be performed cheaply, e.g. using bilinear upsampling, and the adaptive sharpening stage can be used to sharpen the image, i.e. reduce the blurring introduced by the upsampling. Bilinear upsampling is known in the art and uses linear interpolation of adjacent input pixels in two dimensions to produce output pixels at positions between input pixels.

General aims for systems implementing super resolution are: (i) high quality output images, i.e. for the output images to be maximally plausible given the low resolution input images, (ii) low latency so that output images are generated quickly, (iii) a low cost processing module in terms of resources such as power, bandwidth and silicon area.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

There is provided a method of applying upsampling to input pixels representing an image region to determine a block of upsampled pixels, wherein the input pixels have locations corresponding to a repeating quincunx arrangement of upsampled pixel locations, the method comprising:

analysing the input pixels to determine one or more weighting parameters, the one or more weighting parameters being indicative of a directionality of filtering to be applied when upsampling is applied to the input pixels within the image region; and

determining one or more of the upsampled pixels of the block of upsampled pixels in accordance with the directionality of filtering indicated by the determined one or more weighting parameters.

The one or more weighting parameters may be indicative of relative horizontal and vertical variation of the input pixels within the image region. The one or more of the upsampled pixels of the block of upsampled pixels may be determined in accordance with the relative horizontal and vertical variation of the input pixels within the image region indicated by the determined one or more weighting parameters.

Determining each of said one or more of the upsampled pixels may comprise applying one or more kernels to at least some of the input pixels in accordance with the determined one or more weighting parameters.

Each of said one or more of the upsampled pixels may be at a respective upsampled pixel location which does not correspond with the location of any of the input pixels.

The input pixels may be represented in two input blocks. One of the two input blocks may comprise the input pixels having locations corresponding to locations within odd rows of the repeating quincunx arrangement of upsampled pixel locations, and the other of the two input blocks may comprise the input pixels having locations corresponding to locations within even rows of the repeating quincunx arrangement of upsampled pixel locations.

The image region may be part of a current frame within a sequence of frames. The input pixels of a first of the input blocks may be rendered for the current frame. The input pixels of a second of the input blocks may be determined by performing temporal resampling on pixels of a previous frame using motion vectors.

Pixels for the previous frame corresponding to the pixel locations of the input pixels of the second input block may have been rendered for the previous frame.

All of the input pixels may be rendered for the image region.

Determining each of said one or more of the upsampled pixels may comprise, in accordance with the determined one or more weighting parameters:

applying one or more first kernels to at least a first subset of the input pixels to determine a horizontal component,

applying one or more second kernels to at least a second subset of the input pixels to determine a vertical component, and

combining the determined horizontal and vertical components,

such that each of said one or more of the upsampled pixels is determined in accordance with the directionality of filtering indicated by the determined one or more weighting parameters.

Said combining the determined horizontal and vertical components may comprise:

multiplying the horizontal component by a first of the weighting parameters, $a$, to determine a weighted horizontal component;

multiplying the vertical component by a second of the weighting parameters, $b$, to determine a weighted vertical component; and

summing the weighted horizontal component and the weighted vertical component.

Said analysing the input pixels to determine one or more weighting parameters may comprise processing the input pixels with an implementation of a neural network. The neural network may have been trained to output an indication of the one or more weighting parameters to be indicative of the directionality of filtering to be applied when upsampling is applied to the input pixels within the image region.

The neural network may comprise:

a first convolution layer which determines a first intermediate tensor based on the input pixels, wherein the first intermediate tensor extends in only one of a horizontal dimension and a vertical dimension with respect to the dimensions of the image region represented by the input pixels;

a second convolution layer which determines a second intermediate tensor based on the first intermediate tensor, wherein the second intermediate tensor does not extend in either the horizontal dimension or the vertical dimension with respect to the dimensions of the image region represented by the input pixels; and

a third convolution layer which determines the indication of the one or more weighting parameters based on the second intermediate tensor.

Said analysing the input pixels to determine one or more weighting parameters may comprise:

determining indications of image gradients for the image region based on the input pixels; and

using the determined indications of image gradients to determine the one or more weighting parameters.

Said determining indications of image gradients for the image region may comprise:

applying a first gradient kernel to the input pixels to determine an indication of an image gradient in a horizontal direction, dx; and

applying a second gradient kernel to the input pixels to determine an indication of an image gradient in a vertical direction, dy.

Said using the determined indications of image gradients to determine the one or more weighting parameters may comprise:

determining a first weighting parameter, $a$, as $a = \text{clip}(m(|dy| - |dx|) + 0.5, 0, 1)$, where $m$ is a tuneable parameter; and

determining a second weighting parameter, $b$, as $b = 1 - a$.

The upsampled pixels in the block of upsampled pixels may be non-sharpened upsampled pixels.
Said applying one or more first kernels to at least a first subset of the input pixels may comprise applying a single first kernel to input pixels horizontally adjacent to the upsampled pixel being determined. Said applying one or more second kernels to at least a second subset of the input pixels may comprise applying a single second kernel to input pixels vertically adjacent to the upsampled pixel being determined.
The input pixels having locations corresponding to the repeating quincunx arrangement of upsampled pixel locations may be used as the upsampled pixels at those upsampled pixel locations of the block of upsampled pixels.
The upsampled pixels in the block of upsampled pixels may be sharpened upsampled pixels.
Said applying one or more first kernels to at least a first subset of the input pixels may comprise applying a first horizontal kernel to input pixels of a first of the image blocks, applying a second horizontal kernel to input pixels of a second of the image blocks, and summing the results of applying the first and second horizontal kernels to determine the horizontal component. Said applying one or more second kernels to at least a second subset of the input pixels may comprise applying a first vertical kernel to input pixels of the first of the image blocks, applying a second vertical kernel to input pixels of the second of the image blocks, and summing the results of applying the first and second vertical kernels to determine the vertical component.
The method may further comprise determining upsampled pixels at locations corresponding to the repeating quincunx arrangement of upsampled pixel locations within the block of upsampled pixels by:

applying a first sharpening kernel to input pixels of a first of the image blocks;

applying a second sharpening kernel to input pixels of a second of the image blocks; and

summing the results of applying the first and second sharpening kernels.

There is provided a method of applying adaptive sharpening to input pixels representing an image region to determine a block of output pixels, the method comprising:

determining a block of non-sharpened upsampled pixels for the image region according to the methods described herein;

determining a block of sharpened upsampled pixels for the image region according to the methods described herein;

determining one or more indications of contrast for the image region based on the input pixels; and

determining each of the output pixels of the block of output pixels by performing a respective weighted sum of: (i) a corresponding non-sharpened upsampled pixel in the block of non-sharpened upsampled pixels and (ii) a corresponding sharpened upsampled pixel in the block of sharpened upsampled pixels,

wherein the weights of the weighted sums are based on the determined one or more indications of contrast for the image region.

There is provided a processing module configured to apply upsampling to input pixels representing an image region to determine a block of upsampled pixels, wherein the input pixels have locations corresponding to a repeating quincunx arrangement of upsampled pixel locations, the processing module comprising:

weighting parameter determination logic configured to analyse the input pixels to determine one or more weighting parameters, the one or more weighting parameters being indicative of a directionality of filtering to be applied when upsampling is applied to the input pixels within the image region; and

pixel determination logic configured to determine one or more of the upsampled pixels of the block of upsampled pixels in accordance with the directionality of filtering indicated by the determined one or more weighting parameters.

The weighting parameter determination logic may comprise an implementation of a neural network configured to process the input pixels, wherein the neural network has been trained to output the one or more weighting parameters to be indicative of the directionality of filtering to be applied when upsampling is applied to the input pixels within the image region.

The neural network may comprise:

a first convolution layer configured to determine a first intermediate tensor based on the input pixels, wherein the first intermediate tensor extends in only one of a horizontal dimension and a vertical dimension with respect to the dimensions of the image region represented by the input pixels;

a second convolution layer configured to determine a second intermediate tensor based on the first intermediate tensor, wherein the second intermediate tensor does not extend in either the horizontal dimension or the vertical dimension with respect to the dimensions of the image region represented by the input pixels; and

a third convolution layer configured to determine the one or more weighting parameters based on the second intermediate tensor.

There may be provided a processing module configured to perform any of the methods described herein.

There may be provided an adaptive sharpening unit configured to apply adaptive sharpening to input pixels representing an image region to determine a block of output pixels, the adaptive sharpening unit comprising:

a first processing module as described herein wherein the upsampled pixels in the block of upsampled pixels determined by the first processing module are non-sharpened upsampled pixels;

a second processing module as described herein wherein the upsampled pixels in the block of upsampled pixels determined by the second processing module are sharpened upsampled pixels;

contrast determination logic configured to determine one or more indications of contrast for the image region based on the input pixels; and

output pixel determination logic configured to determine each of the output pixels of the block of output pixels by performing a respective weighted sum of: (i) a corresponding non-sharpened upsampled pixel in the block of non-sharpened upsampled pixels and (ii) a corresponding sharpened upsampled pixel in the block of sharpened upsampled pixels,

wherein the weights of the weighted sums are based on the determined one or more indications of contrast for the image region.

The processing modules and/or the adaptive sharpening units described herein may be embodied in hardware on an integrated circuit.

There may be provided computer readable code configured to cause any of the methods described herein to be performed when the code is run.

There may be provided an integrated circuit definition dataset that, when processed in an integrated circuit manufacturing system, configures the integrated circuit manufacturing system to manufacture a processing module or an adaptive sharpening unit as described herein.

There may be provided a method of determining a block of sharpened upsampled pixels, the method comprising:

receiving two input blocks of input pixels, wherein one of the two input blocks comprises input pixels having locations corresponding to locations within odd rows of a repeating quincunx arrangement of upsampled pixel locations, and the other of the two input blocks comprises input pixels having locations corresponding to locations within even rows of the repeating quincunx arrangement of upsampled pixel locations; and

for each of the sharpened upsampled pixels in the block of sharpened upsampled pixels:

determining the sharpened upsampled pixel by: (i) applying a respective first set of one or more kernels to input pixels of a first of the input blocks, (ii) applying a respective second set of one or more kernels to input pixels of a second of the input blocks, and (iii) combining the results of applying the first set of one or more kernels and applying the second set of one or more kernels, wherein one of the kernels of the first set has a first subset of values of a full sharp upsampling kernel and one of the kernels of the second set has a second subset of values of the full sharp upsampling kernel, wherein the full sharp upsampling kernel has values which correspond to the upsampled pixel locations and which represent a result of convolving an interpolation kernel with a sharpening kernel, wherein the first subset includes the values of the full sharp upsampling kernel at locations corresponding to the locations of the input pixels in the first of the input blocks, and wherein the second subset includes the values of the full sharp upsampling kernel at locations corresponding to the locations of the input pixels in the second of the input blocks.

For determining the sharpened upsampled pixel at a location corresponding to the location of an input pixel of the first or second input blocks:

the respective first set of one or more kernels may comprise a first single kernel which is applied to the input pixels of the first input block,

the respective second set of one or more kernels may comprise a second single kernel which is applied to the input pixels of the second input block, and

said combining the results may comprise summing the result of applying the first single kernel to the input pixels of the first input block with the result of applying the second single kernel to the input pixels of the second input block.

For determining the sharpened upsampled pixel at the location corresponding to the location of an input pixel of the first or second input blocks, said interpolation kernel may be a bilinear interpolation kernel.

Said bilinear interpolation kernel may be represented as

$$\begin{bmatrix} 0 & 0.25 & 0 \\ 0.25 & 1 & 0.25 \\ 0 & 0.25 & 0 \end{bmatrix}.$$

For determining the sharpened upsampled pixel at a location which falls between corresponding locations of input pixels of the first and second input blocks:

the respective first set of one or more kernels may comprise a first horizontal kernel and a first vertical kernel which are applied to the input pixels of the first input block,

the respective second set of one or more kernels may comprise a second horizontal kernel and a second vertical kernel which are applied to the input pixels of the second input block, and

said combining the results may comprise:

determining a horizontal component by summing the result of applying the first horizontal kernel to the input pixels of the first input block with the result of applying the second horizontal kernel to the input pixels of the second input block;

determining a vertical component by summing the result of applying the first vertical kernel to the input pixels of the first input block with the result of applying the second vertical kernel to the input pixels of the second input block; and

combining the determined horizontal and vertical components.

Said combining the determined horizontal and vertical components may comprise:

multiplying the horizontal component by a first weighting parameter to determine a weighted horizontal component;

multiplying the vertical component by a second weighting parameter to determine a weighted vertical component; and

summing the weighted horizontal component and the weighted vertical component.

The method may further comprise analysing the input pixels of the first and second input blocks to determine the first and second weighting parameters, wherein the first and second weighting parameters may be indicative of a directionality of filtering to be applied when upsampling is applied to the input pixels.

The first and second weighting parameters may be indicative of relative horizontal and vertical variation of the input pixels.

Said analysing the input pixels of the first and second input blocks to determine the first and second weighting parameters may comprise processing the input pixels with an implementation of a neural network. The neural network may have been trained to output an indication of the weighting parameters to be indicative of the directionality of filtering to be applied when upsampling is applied to the input pixels.

The neural network may comprise:

a first convolution layer which determines a first intermediate tensor based on the input pixels, wherein the first intermediate tensor extends in only one of a horizontal dimension and a vertical dimension with respect to the dimensions of an image region represented by the input pixels;

a second convolution layer which determines a second intermediate tensor based on the first intermediate tensor, wherein the second intermediate tensor does not extend in either the horizontal dimension or the vertical dimension with respect to the dimensions of the image region represented by the input pixels; and

a third convolution layer which determines the indication of the weighting parameters based on the second intermediate tensor.

The first horizontal kernel may have a first subset of values of a full horizontal sharp upsampling kernel and the second horizontal kernel may have a second subset of values of the full horizontal sharp upsampling kernel. The full horizontal sharp upsampling kernel may have values which correspond to the upsampled pixel locations and which represent a result of convolving a linear horizontal interpolation kernel with the sharpening kernel. The first vertical kernel may have a first subset of values of a full vertical sharp upsampling kernel and the second vertical kernel may have a second subset of values of the full vertical sharp upsampling kernel, wherein the full vertical sharp upsampling kernel may have values which correspond to the upsampled pixel locations and which represent a result of convolving a linear vertical interpolation kernel with the sharpening kernel.

The first subset of values of the full horizontal sharp upsampling kernel may include the values of the full horizontal sharp upsampling kernel at locations corresponding to the locations of the input pixels in the first of the input blocks. The second subset of values of the full horizontal sharp upsampling kernel may include the values of the full horizontal sharp upsampling kernel at locations corresponding to the locations of the input pixels in the second of the input blocks. The first subset of values of the full vertical sharp upsampling kernel may include the values of the full vertical sharp upsampling kernel at locations corresponding to the locations of the input pixels in the first of the input blocks, and the second subset of values of the full vertical sharp upsampling kernel may include the values of the full vertical sharp upsampling kernel at locations corresponding to the locations of the input pixels in the second of the input blocks.

Said linear horizontal interpolation kernel may be represented as [0.5 1 0.5], and said linear vertical interpolation kernel may be represented as $\begin{bmatrix} 0.5 \\ 1 \\ 0.5 \end{bmatrix}$.

The sharpening kernel may be an unsharp mask kernel.

The sharpening kernel may be a truncated sinc kernel.

The input pixels of the first of the input blocks may be rendered for a current frame within a sequence of frames. The input pixels of the second of the input blocks may be determined by performing temporal resampling on pixels of a previous frame using motion vectors.

Pixels for the previous frame corresponding to the pixel locations of the input pixels of the second input block may have been rendered for the previous frame.

All of the input pixels of the first and second input blocks may be rendered for a current frame within a sequence of frames.

There may be provided a method of applying adaptive sharpening to input pixels representing an image region to determine a block of output pixels, wherein the input pixels are represented in two input blocks, the method comprising:

determining a block of non-sharpened upsampled pixels for the image region;

determining a block of sharpened upsampled pixels for the image region according to the methods described herein;

determining one or more indications of contrast for the image region based on the input pixels; and

determining each of the output pixels of the block of output pixels by performing a respective weighted sum of: (i) a corresponding non-sharpened upsampled pixel in the block of non-sharpened upsampled pixels and (ii) a corresponding sharpened upsampled pixel in the block of sharpened upsampled pixels,

wherein the weights of the weighted sums are based on the determined one or more indications of contrast for the image region.

There may be provided a processing module comprising pixel determination logic configured to determine a block of sharpened upsampled pixels, the pixel determination logic being configured to:

receive two input blocks of input pixels, wherein one of the two input blocks comprises input pixels having locations corresponding to locations within odd rows of a repeating quincunx arrangement of upsampled pixel locations, and the other of the two input blocks comprises input pixels having locations corresponding to locations within even rows of the repeating quincunx arrangement of upsampled pixel locations; and

for each of the sharpened upsampled pixels in the block of sharpened upsampled pixels:

determine the sharpened upsampled pixel by: (i) applying a respective first set of one or more kernels to input pixels of a first of the input blocks, (ii) applying a respective second set of one or more kernels to input pixels of a second of the input blocks, and (iii) combining the results of applying the first set of one or more kernels and applying the second set of one or more kernels,

wherein one of the kernels of the first set has a first subset of values of a full sharp upsampling kernel and one of the kernels of the second set has a second subset of values of the full sharp upsampling kernel, wherein the full sharp upsampling kernel has values which correspond to the upsampled pixel locations and which represent a result of convolving an interpolation kernel with a sharpening kernel, wherein the first subset includes the values of the full sharp upsampling kernel at locations corresponding to the locations of the input pixels in the first of the input blocks, and wherein the second subset includes the values of the full sharp upsampling kernel at locations corresponding to the locations of the input pixels in the second of the input blocks.

The processing module may further comprise weighting parameter determination logic configured to analyse the input pixels of the first and second input blocks to determine the first and second weighting parameters. The first and second weighting parameters may be indicative of a directionality of filtering to be applied when upsampling is applied to the input pixels.

The weighting parameter determination logic may comprise an implementation of a neural network configured to process the input pixels. The neural network may have been trained to output an indication of the weighting parameters to be indicative of the directionality of filtering to be applied when upsampling is applied to the input pixels.

The neural network may comprise:

a first convolution layer configured to determine a first intermediate tensor based on the input pixels, wherein the first intermediate tensor extends in only one of a horizontal dimension and a vertical dimension with respect to the dimensions of an image region represented by the input pixels;

a second convolution layer configured to determine a second intermediate tensor based on the first intermediate tensor, wherein the second intermediate tensor does not extend in either the horizontal dimension or the vertical dimension with respect to the dimensions of the image region represented by the input pixels; and

a third convolution layer configured to determine the indication of the weighting parameters based on the second intermediate tensor.

There may be provided an adaptive sharpening unit configured to apply adaptive sharpening to input pixels representing an image region to determine a block of output pixels, wherein the input pixels are represented in two input blocks, the adaptive sharpening unit comprising:

a processing module as described herein configured to determine a block of sharpened upsampled pixels for the image region;

further pixel determination logic configured to determine a block of non-sharpened upsampled pixels for the image region;

contrast determination logic configured to determine one or more indications of contrast for the image region based on the input pixels; and

output pixel determination logic configured to determine each of the output pixels of the block of output pixels by performing a respective weighted sum of: (i) a corresponding non-sharpened upsampled pixel in the block of non-sharpened upsampled pixels and (ii) a corresponding sharpened upsampled pixel in the block of sharpened upsampled pixels,

wherein the weights of the weighted sums are based on the determined one or more indications of contrast for the image region.

There may be provided a method of determining an indication of one or more weighting parameters for use in applying upsampling to input pixels representing an image region to determine a block of upsampled pixels, the method comprising:

receiving the input pixels at an implementation of a neural network, wherein the neural network has been trained to output an indication of the one or more weighting parameters to be indicative of a directionality of filtering to be applied when upsampling is applied to the input pixels within the image region;

processing the input pixels with the implementation of the neural network to determine the indication of the one or more weighting parameters; and

outputting the determined indication of the one or more weighting parameters for use in applying upsampling to the input pixels representing the image region to determine a block of upsampled pixels.

The one or more weighting parameters may be indicative of relative horizontal and vertical variation of the input pixels within the image region.

The neural network may comprise a first convolution layer, and said processing the input pixels with the implementation of the neural network may comprise: using the first convolution layer to determine a first intermediate tensor based on the input pixels, wherein the first intermediate tensor extends in only one of a horizontal dimension and a vertical dimension with respect to the dimensions of the image region represented by the input pixels.

The image region may be part of an input image, and it may be the case that the upsampling is to be performed iteratively for a plurality of partially overlapping image regions within the input image. Said processing the input pixels with the implementation of the neural network may further comprise storing the first intermediate tensor in a buffer. It may be the case that the first convolution layer operates on input pixels within a first portion of a current image region that does not overlap with a previous image region, but does not operate on input pixels within a second portion of the current image region that does overlap with the previous image region, to determine the first intermediate tensor.

The neural network may further comprise a second convolution layer and a third convolution layer. Said processing the input pixels with the implementation of the neural network may further comprise:

> using the second convolution layer to determine a second intermediate tensor based on the first intermediate tensor, wherein the second intermediate tensor does not extend in either the horizontal dimension or the vertical dimension with respect to the dimensions of the image region represented by the input pixels; and

> using the third convolution layer to determine the indication of the one or more weighting parameters based on the second intermediate tensor.

The neural network may further comprise a first rectified linear unit implemented between the first convolution layer and the second convolution layer, and a second rectified linear unit implemented between the second convolution layer and the third convolution layer. Said processing the input pixels with the implementation of the neural network may further comprise:

> using the first rectified linear unit to set negative values in the first intermediate tensor to zero; and

> using the second rectified linear unit to set negative values in the second intermediate tensor to zero.

The input pixels may have locations corresponding to a repeating quincunx arrangement of upsampled pixel locations.

The input pixels may be represented in two input blocks, wherein one of the two input blocks may comprise the input pixels having locations corresponding to locations within odd rows of the repeating quincunx arrangement of upsampled pixel locations, and the other of the two input blocks may comprise the input pixels having locations corresponding to locations within even rows of the repeating quincunx arrangement of upsampled pixel locations.

The neural network may have been trained using Quantization Aware Training (QAT).

The neural network may be hardcoded in hardware of the implementation of the neural network. Each coefficient of the neural network may have been determined individually. The determining of each of the coefficients may comprise one or both of: (i) learning an individual bit depth of the coefficient, and (ii) removing the coefficient from the neural network if a bit depth of the coefficient is learnt to be zero.

The method may further comprise applying upsampling to the input pixels representing the image region. Said upsampling may comprise determining one or more of the upsampled pixels of the block of upsampled pixels in accordance with the directionality of filtering indicated by the one or more weighting parameters.

Each of said one or more of the upsampled pixels may be at a respective upsampled pixel location which does not correspond with the location of any of the input pixels.

Determining each of said one or more of the upsampled pixels may comprise, in accordance with the determined one or more weighting parameters:

> applying one or more first kernels to at least a first subset of the input pixels to determine a horizontal component,

> applying one or more second kernels to at least a second subset of the input pixels to determine a vertical component, and

> combining the determined horizontal and vertical components,

> such that each of said one or more of the upsampled pixels is determined in accordance with the directionality of filtering indicated by the determined one or more weighting parameters.

Said combining the determined horizontal and vertical components may comprise:

> multiplying the horizontal component by a first of the weighting parameters to determine a weighted horizontal component;

> multiplying the vertical component by a second of the weighting parameters to determine a weighted vertical component; and

> summing the weighted horizontal component and the weighted vertical component.

The upsampled pixels in the block of upsampled pixels may be non-sharpened upsampled pixels.

The upsampled pixels in the block of upsampled pixels may be sharpened upsampled pixels.

There may be provided a processing module configured to determine an indication of one or more weighting parameters for use in applying upsampling to input pixels representing an image region to determine a block of upsampled pixels, the processing module comprising:

an implementation of a neural network, wherein the neural network has been trained to output an indication of the one or more weighting parameters to be indicative of a directionality of filtering to be applied when upsampling is applied to the input pixels within the image region, wherein the implementation of the neural network is configured to:

receive the input pixels;

process the input pixels to determine the indication of the one or more weighting parameters; and

output the determined indication of the one or more weighting parameters for use in applying upsampling to the input pixels representing the image region to determine a block of upsampled pixels.

The neural network may comprise:
a first convolution layer configured to determine a first intermediate tensor based on the input pixels, wherein the first intermediate tensor extends in only one of a horizontal dimension and a vertical dimension with respect to the dimensions of the image region represented by the input pixels.

The image region may be part of an input image. It may be the case that the upsampling is to be performed iteratively for a plurality of partially overlapping image regions within the input image. The neural network may further comprise a buffer configured to store the first intermediate tensor. It may be the case that the first convolution layer is configured to operate on input pixels within a first portion of a current image region that does not overlap with a previous image region, but to not operate on input pixels within a second portion of the current image region that does overlap with the previous image region, to determine the first intermediate tensor.

The neural network may further comprise:

a second convolution layer configured to determine a second intermediate tensor based on the first intermediate tensor, wherein the second intermediate tensor does not extend in either the horizontal dimension or the vertical dimension with respect to the dimensions of the image region represented by the input pixels; and

a third convolution layer configured to determine the indication of the one or more weighting parameters based on the second intermediate tensor.

The neural network may further comprise a first rectified linear unit implemented between the first convolution layer and the second convolution layer, and a second rectified linear unit implemented between the second convolution layer and the third convolution layer. The first rectified linear unit may be configured to set negative values in the first intermediate tensor to zero. The second rectified linear unit may be configured to set negative values in the second intermediate tensor to zero.

The implementation of the neural network may not comprise any linestores.

The neural network may have been trained using Quantization Aware Training (QAT).

The processing module may further comprise pixel determination logic configured to determine one or more of the upsampled pixels of the block of upsampled pixels in accordance with the directionality of filtering indicated by the determined one or more weighting parameters.

There may be provided a method of training a neural network to output an indication of one or more weighting parameters for use in applying upsampling to input pixels to determine a block of upsampled pixels, the method comprising:
receiving a reference image having pixels at upsampled pixel locations; and iteratively:

providing input pixels to an implementation of the neural network, wherein the input pixels are a subset of the pixels of the reference image representing an image region;

processing the input pixels with the implementation of the neural network to determine an indication of one or more weighting parameters indicative of a directionality of filtering to be applied when upsampling is applied to the input pixels within the image region;

applying upsampling to the input pixels to determine a block of upsampled pixels, said applying upsampling comprising determining one or more of the upsampled pixels of the block of upsampled pixels in accordance with the directionality of filtering indicated by the one or more weighting parameters;

comparing upsampled pixels of the block of upsampled pixels, at locations which do not correspond to locations of pixels in the subset of pixels of the reference image, with pixels of the reference image at corresponding locations; and

updating one or more parameters of the neural network based on a result of said comparing.

The one or more weighting parameters may be indicative of relative horizontal and vertical variation of the input pixels within the image region. The one or more of the upsampled pixels of the block of upsampled pixels may be determined in accordance with the relative horizontal and vertical variation of the input pixels within the image region indicated by the determined one or more weighting parameters.

The input pixels may have locations corresponding to a repeating quincunx arrangement of upsampled pixel locations.

Said providing input pixels to an implementation of the neural network may comprise providing two input blocks to the implementation of the neural network, wherein one of the two input blocks may comprise the input pixels having locations corresponding to locations within odd rows of the repeating quincunx arrangement of upsampled pixel locations, and the other of the two input blocks may comprise the input pixels having locations corresponding to locations within even rows of the repeating quincunx arrangement of upsampled pixel locations.

Said comparing may comprise calculating an indication of errors between the upsampled pixels of the block of upsampled pixels, at locations which do not correspond to locations of pixels in the subset of pixels of the reference image, and the pixels of the reference image at the corresponding locations, wherein in a current iteration said updating may comprise updating the one or more parameters of the neural network based on the calculated indication of the errors.

The indication of the errors may be calculated using an L1 loss function.

Said updating may comprise updating the one or more parameters of the neural network by an amount per iteration based on a predetermined learning rate.

The neural network may comprise a first convolution layer. Said processing the input pixels with the implementation of the neural network may comprise: using the first convolution layer to determine a first intermediate tensor based on the input pixels, wherein the first intermediate tensor extends in only one of a horizontal dimension and a vertical dimension with respect to the dimensions of the image region represented by the input pixels.

The neural network may further comprise a second convolution layer and a third convolution layer. Said processing the input pixels with the implementation of the neural network may further comprise:

  using the second convolution layer to determine a second intermediate tensor based on the first intermediate tensor, wherein the second intermediate tensor does not extend in either the horizontal dimension or the vertical dimension with respect to the dimensions of the image region represented by the input pixels; and

  using the third convolution layer to determine the indication of the one or more weighting parameters based on the second intermediate tensor.

Said updating one or more parameters of the neural network may comprise updating a parameter of one or more of the first, second and third convolution layers.

The neural network may further comprise a first rectified linear unit implemented between the first convolution layer and the second convolution layer, and a second rectified linear unit implemented between the second convolution layer and the third convolution layer. Said processing the input pixels with the implementation of the neural network may further comprise:

  using the first rectified linear unit to set negative values in the first intermediate tensor to zero; and

  using the second rectified linear unit to set negative values in the second intermediate tensor to zero.

The neural network may be trained using Quantization Aware Training (QAT).

Each coefficient of the neural network may be determined individually. The determining of each of the coefficients may comprise one or both of: (i) learning an individual bit depth of the coefficient, and (ii) removing the coefficient from the neural network if a bit depth of the coefficient is learnt to be zero.

The trained neural network may be hardcoded in a hardware implementation of the neural network. The hardware implementation of the neural network may be configured to process input pixels representing an image region and output an indication of one or more weighting parameters for use in applying upsampling to the input pixels to determine a block of upsampled pixels.

Determining each of said one or more of the upsampled pixels may comprise, in accordance with the determined one or more weighting parameters:

  applying one or more first kernels to at least a first subset of the input pixels to determine a horizontal component,

  applying one or more second kernels to at least a second subset of the input pixels to determine a vertical component, and

  combining the determined horizontal and vertical components,

  such that each of said one or more of the upsampled pixels is determined in accordance with the directionality of filtering indicated by the determined one or more weighting parameters.

Said combining the determined horizontal and vertical components may comprise:

  multiplying the horizontal component by a first of the weighting parameters to determine a weighted horizontal component;

multiplying the vertical component by a second of the weighting parameters to determine a weighted vertical component; and

summing the weighted horizontal component and the weighted vertical component.

There may be provided a training module configured to train a neural network to output an indication of one or more weighting parameters for use in applying upsampling to input pixels to determine a block of upsampled pixels, the training module comprising:

an implementation of the neural network;

upsampling logic;

comparison logic; and

updating logic,

wherein the training module is configured to:

receive a reference image having pixels at upsampled pixel locations; and

iteratively:

provide input pixels to the implementation of the neural network, wherein the input pixels are a subset of the pixels of the reference image representing an image region;

process the input pixels with the implementation of the neural network to determine an indication of one or more weighting parameters indicative of a directionality of filtering to be applied when upsampling is applied to the input pixels within the image region;

use the upsampling logic to apply upsampling to the input pixels to determine a block of upsampled pixels, said applying upsampling comprising determining one or more of the upsampled pixels of the block of upsampled pixels in accordance with the directionality of filtering indicated by the one or more weighting parameters;

use the comparison logic to compare upsampled pixels of the block of upsampled pixels, at locations which do not correspond to locations of pixels in the subset of pixels of the reference image, with pixels of the reference image at corresponding locations; and

use the updating logic to update one or more parameters of the neural network based on a result of said comparing.

Said comparison logic may be configured to calculate an indication of errors between the upsampled pixels of the block of upsampled pixels, at locations which do not correspond to locations of pixels in the subset of pixels of the reference image, and the pixels of the reference image at the corresponding locations. Said updating logic may be configured to, in a current iteration, update the one or more parameters of the neural network based on the calculated indication of the errors.

The neural network may comprise:

a first convolution layer configured to determine a first intermediate tensor based on the input pixels, wherein the first intermediate tensor extends in only one of a horizontal dimension and a vertical dimension with respect to the dimensions of the image region represented by the input pixels.

The neural network may further comprise:

a second convolution layer configured to determine a second intermediate tensor based on the first intermediate tensor, wherein the second intermediate tensor does not extend in either the horizontal dimension or the vertical dimension with respect to the dimensions of the image region represented by the input pixels; and

a third convolution layer configured to determine the indication of the one or more weighting parameters based on the second intermediate tensor.

The neural network may further comprise a first rectified linear unit implemented between the first convolution layer and the second convolution layer, and a second rectified linear unit implemented between the second convolution layer and the third convolution layer. The first rectified linear unit may be configured to set negative values in the first intermediate tensor to zero. The second rectified linear unit may be configured to set negative values in the second intermediate tensor to zero.

The implementation of the neural network might not comprise any linestores.

The training module may be configured to train the neural network using Quantization Aware Training (QAT).

There may be provided a training module configured to perform the training methods described herein.

The training module may be embodied in hardware on an integrated circuit.

There may be provided computer readable code configured to cause any of the methods described herein to be performed when the code is run.

There may be provided an integrated circuit definition dataset that, when processed in an integrated circuit manufacturing system, configures the integrated circuit manufacturing system to manufacture a training module as described herein.

The processing modules described herein may be embodied in hardware on an integrated circuit. There may be provided a method of manufacturing, at an integrated circuit manufacturing system, a processing module. There may be provided an integrated circuit definition dataset that, when processed in an integrated circuit manufacturing system, configures the system to manufacture a processing module. There may be provided a non-transitory computer readable storage medium having stored thereon a computer readable description of a processing module that, when processed in an integrated circuit manufacturing system, causes the integrated circuit manufacturing system to manufacture an integrated circuit embodying a processing module.

There may be provided an integrated circuit manufacturing system comprising: a non-transitory computer readable storage medium having stored thereon a computer readable description of the processing module; a layout processing system configured to process the computer readable description so as to generate a circuit layout description of an integrated circuit embodying the processing module; and an integrated circuit generation system configured to manufacture the processing module according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

Figure 1 illustrates an upsampling process;
Figure 2 shows input pixels having locations corresponding to a repeating quincunx arrangement of upsampled pixel locations;
Figure 3 shows the input pixels being represented in two input blocks;
Figure 4 shows a processing module configured to upsample input pixels to determine a block of upsampled pixels;
Figure 5 is a flow chart for a method of applying upsampling to input pixels representing an image region to determine a block of upsampled pixels;
Figure 6 is a flow chart of method steps for determining an upsampled pixel;

Figure 7 shows a portion of the input pixels and illustrates how a block of upsampled pixels relate to the input pixels;
Figure 8a shows a first kernel for applying a first weighting parameter;
Figure 8b shows a second kernel for applying a second weighting parameter;
Figure 9 illustrates an implementation of a neural network configured to output an indication of one or more weighting parameters;
Figure 10 is a flow chart for a method of determining an indication of the weighting parameter(s) using the implementation of the neural network;
Figure 11 shows a second embodiment of weighting parameter determination logic which is configured to output an indication of one or more weighting parameters;
Figure 12 is a flow chart for a method of determining the weighting parameter(s) using the weighting parameter determination logic shown in Figure 11;
Figure 13 illustrates pixel determination logic configured to determine sharpened upsampled pixels;
Figure 14 is a flow chart for a method of determining a block of sharpened upsampled pixels;
Figure 15 shows a bilinear interpolation kernel for use with input pixels which have locations corresponding to a repeating quincunx arrangement;
Figure 16a illustrates an identity function for an identity kernel;
Figure 16b illustrates a spatial Gaussian function for a spatial Gaussian kernel;
Figure 16c illustrates the difference between the identity function and the spatial Gaussian function for a difference kernel;
Figure 16d illustrates an unsharp mask function for an unsharp mask kernel;
Figure 16e shows a graph illustrating the brightness of an image across an edge in the image, and also illustrating an ideal brightness across a sharper version of the edge;
Figure 16f shows the graph of Figure 16e with an additional line to illustrate the brightness across a smoothed version of the edge in the image when the image has been smoothed using the spatial Gaussian kernel;
Figure 16g illustrates the result of applying the difference kernel to the edge in the image;
Figure 16h shows the graph of Figure 16e with an additional line to illustrate the brightness across a sharpened version of the edge in the image when the image has been sharpened using the unsharp mask kernel;
Figure 17 illustrates a first full sharp upsampling kernel as a result of convolving the bilinear interpolation kernel with a sharpening kernel;
Figure 18 illustrates how the first full sharp upsampling kernel can be deconstructed into: (i) a kernel to be applied to a first input block of input pixels, and (ii) a kernel to be applied to a second input block of input pixels, for determining the sharpened upsampled pixel in the top left of the block of sharpened upsampled pixels;

Figure 19 illustrates how the first full sharp upsampling kernel can be deconstructed into: (i) a kernel to be applied to the first input block of input pixels, and (ii) a kernel to be applied to the second input block of input pixels, for determining the sharpened upsampled pixel in the bottom right of the block of sharpened upsampled pixels;

Figure 20 illustrates a full horizontal sharp upsampling kernel as a result of convolving a linear horizontal interpolation kernel with a sharpening kernel;

Figure 21 illustrates a full vertical sharp upsampling kernel as a result of convolving a linear vertical interpolation kernel with a sharpening kernel;

Figure 22 is a flow chart for a method of combining the results of applying kernels to the input blocks to determine a sharpened upsampled pixel at a location which falls between corresponding locations of the input pixels;

Figure 23 illustrates how the full horizontal sharp upsampling kernel can be deconstructed into: (i) a kernel to be applied to a first input block of input pixels, and (ii) a kernel to be applied to a second input block of input pixels, for determining a horizontal component for the sharpened upsampled pixel in the top right of the block of sharpened upsampled pixels;

Figure 24 illustrates how the full vertical sharp upsampling kernel can be deconstructed into: (i) a kernel to be applied to a first input block of input pixels, and (ii) a kernel to be applied to a second input block of input pixels, for determining a vertical component for the sharpened upsampled pixel in the top right of the block of sharpened upsampled pixels;

Figure 25 illustrates how the full horizontal sharp upsampling kernel can be deconstructed into: (i) a kernel to be applied to a first input block of input pixels, and (ii) a kernel to be applied to a second input block of input pixels, for determining a horizontal component for the sharpened upsampled pixel in the bottom left of the block of sharpened upsampled pixels;

Figure 26 illustrates how the full vertical sharp upsampling kernel can be deconstructed into: (i) a kernel to be applied to a first input block of input pixels, and (ii) a kernel to be applied to a second input block of input pixels, for determining a vertical component for the sharpened upsampled pixel in the bottom left of the block of sharpened upsampled pixels;

Figure 27 illustrates an adaptive sharpening unit configured to apply adaptive sharpening to input pixels representing an image region to determine a block of output pixels;

Figure 28 is a flow chart for a method of applying adaptive sharpening to input pixels representing an image region to determine a block of output pixels;

Figure 29 shows a training module configured to train a neural network to output an indication of one or more weighting parameters for use in applying upsampling to input pixels to determine a block of upsampled pixels;

Figure 30 is a flow chart for a method of training a neural network to output an indication of one or more weighting parameters for use in applying upsampling to input pixels to determine a block of upsampled pixels;

Figure 31 shows a computer system in which a processing module is implemented; and

Figure 32 shows an integrated circuit manufacturing system for generating an integrated circuit embodying a processing module.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only. Figure 2 shows input pixels 202 having locations corresponding to a repeating quincunx arrangement of upsampled pixel locations. In this arrangement, half of the upsampled (output) pixel locations (e.g. location 204) are shown with hatching in Figure 2 and correspond to the location of an input pixel; whereas the other half of the upsampled pixel locations (e.g. location 206) are shown without hatching in Figure 2 and do not correspond to the location of an input pixel. The repeating quincunx arrangement can be considered to be a 'chequer board' pattern. The input pixels 202 are processed, as described herein, to determine a block of upsampled pixels which includes an upsampled pixel at some of the upsampled pixel locations shown in Figure 2 which do not correspond to the location of an input pixel. In this way, the density of upsampled pixels is double the density of input pixels. Furthermore, the use of the repeating quincunx arrangement means that output pixel locations that do not correspond to the location of an input pixel (shown without hatching in Figure 2) are horizontally adjacent to two output pixel locations that do correspond to the location of an input pixel (shown with hatching in Figure 2) and are vertically adjacent to two output pixel locations that do correspond to the location of an input pixel (shown with hatching in Figure 2). As such, errors in the output pixels at those output pixel locations (shown without hatching in Figure 2) that do not correspond to the location of an input pixel can be kept small relative to what might be achievable with a sparser pattern of input pixels, such as only the top-left of every 2x2 block being available. Additionally, upsampling algorithms for a quincunx pattern input can be more regular than those for sparser input patterns, due to the fact that all missing output pixel locations have the same arrangement of neighbouring pixels.

Furthermore, the upsampling process described in examples herein can take account of horizontal variation and vertical variation of the input pixels. The horizontal and vertical variation of the input pixels may be indicative of, for example, edges, texture and/or high frequency content in the image region represented by the input pixels. For example, the relative horizontal and vertical variation of the input pixels might represent an image gradient within the image region. For example, an edge in an image causes a high image gradient in a direction perpendicular to the edge, but a low image gradient in a direction parallel to the edge. When determining an upsampled pixel by performing a weighted sum of input pixels the upsampling process can weight the input pixels differently according to the image gradients. This can reduce blurring and staircasing artefacts near edges or other anisotropic image features, e.g. compared to when a bilinear upsampling technique is used. Furthermore, the examples described below are efficient to implement, e.g. in hardware, such that they have low latency, low power consumption and small silicon area (when implemented in fixed function hardware).

At least one weighting parameter is determined which is indicative of the weights used in the weighted sums for determining the upsampled pixels. In some examples described herein the weighting parameter(s) are determined using an implementation of a neural network. The neural network has been trained to output an indication of the weighting parameter(s) to be indicative of a directionality of filtering to be applied when upsampling is applied to the input pixels. For example, the one or more weighting parameters may be indicative of the relative horizontal and vertical variation of the input pixels within the image region. The indication of the weighting parameter(s) could be the weighting parameter(s). The indication of the weighting parameter(s) could be something other than the weighting parameter(s) from which the weighting parameter(s) can be determined. In some examples, there are multiple weighting parameters, and the indication of the weighting parameters may be some but not all of the weighting parameters, wherein the other weighting parameter(s) can be derived from the weighting parameter(s) that are explicitly included in the indication. For example, there may be two weighting parameters (denoted $a$ and $b$ in the examples given below), and the indication of the weighting parameters may be a value of (only) a first one of the weighting parameters (e.g. the value of $a$), wherein the value of the other weighting parameter (e.g. the value of $b$) can be derived from the value of the first weighting parameter, e.g. using a predetermined relationship between the values of the two weighting parameters (e.g. it may be known that $a + b = 1$).

Using a neural network to determine the weighting parameter(s) allows the determination of the weighting parameter(s) to adapt to give perceptually good results without needing to design an algorithm to explicitly exploit directional cues in the image region, be they edges, textures, high frequency content or otherwise. This is advantageous because hand-engineering a system to exploit some or all of these directional cues is difficult and time consuming, and in addition, is liable to miss subtle useful properties of the input region that a suitable neural network is better able to identify and exploit. The neural network can be trained as described herein. By using the neural network just to determine the weighting parameter(s) rather than to determine directly the upsampled output pixel values themselves, the neural network can be kept small and simple. This means that the implementation of the neural network can be small and simple too, such that it can have a low silicon area, a low latency and low power consumption. In this way, a neural network is used for the part of the process (e.g. the determination of the weighting parameter(s)) which benefits the most from being implemented in a neural network, whilst other parts of the process (e.g. the rest of the upsampling and sharpening process) are not implemented using a neural network, so that the neural network does not become too large and complex to implement, e.g. on a low cost device which has tight restrictions on power consumption and silicon area. An additional advantage to outputting the weighting parameter(s) rather than pixel values is that it is more straightforward to combine such a network trained for unsharpened upsampling with a tuneable adaptive sharpening algorithm (as explained below) without introducing wasteful intermediate buffering.

In some examples, the input pixels are received in two input blocks. Figure 3 shows the input pixels 302 being represented in two input blocks 304 and 306. The first input block 304 comprises the input pixels having locations corresponding to locations within odd rows of the repeating quincunx arrangement of upsampled pixel locations (illustrated with line hatching in Figure 3), and the second input block 306 comprises the input pixels having locations corresponding to locations within even rows of the repeating quincunx arrangement of upsampled pixel locations (illustrated with cross-hatching in Figure 3). Using the two input blocks 304 and 306 means that the inputs are denser than if the input pixels were received as a block having the repeating quincunx arrangement, as represented as 302 in Figure 3.

Some of the super resolution techniques described in examples herein implement upsampling and adaptive sharpening. In examples described herein a memory for storing an upsampled image prior to applying adaptive sharpening is not needed. Furthermore, the upsampling and sharpening processes can be combined into a unified process. This can be achieved by applying a sharp upsampling kernel to the input pixels, where the sharp upsampling kernel represents a result of convolving an interpolation kernel with a sharpening kernel. The sharp upsampling kernel can be deconstructed into a first set of one or more kernels to be applied to the first input block and a second set of one or more kernels to be applied to the second input block.

An adaptive sharpening process described herein does not need to alter the weights in the kernels applied to blocks of input pixels in order to alter the amount of sharpening that is applied to different regions of output pixels. This is achieved by obtaining both: (i) a block of non-sharp upsampled pixels, and (ii) a block of sharp upsampled pixels, and then performing weighted sums of the corresponding pixels in the two blocks of upsampled pixels in order to determine a block of output pixels to which adaptive sharpening has been applied. This adaptive sharpening is achieved by means of determining the weights of each weighted sum based on an indication of contrast for the corresponding block of input pixels. For example, for blocks of input pixels with low contrast, the weight for the sharp upsampled pixels is chosen to be larger than the weight for the non-sharp upsampled pixels so that the output pixels are similar to the sharp upsampled pixels. However, for blocks of input pixels with high contrast, the weight for the sharp upsampled pixels is chosen to be smaller than the weight for the non-sharp upsampled pixels so that the output pixels are similar to the non-sharp upsampled pixels. In this way, more sharpening is applied to regions of low contrast in the image than to regions of high contrast in the image. This can help to boost the appearance of detail in regions of low contrast, whilst avoiding artefacts (such as 'overshoot') which can occur when too much sharpening is applied in regions of high contrast (e.g. around edges between regions with large differences in pixel value).

The format of the pixels could be different in different examples. For example, the pixels could be in YUV format (in which each pixel has a value in each of Y, U and V channels), and upsampling may be applied to each of the Y, U and V channels separately. The upsampling described herein may be applied to just the Y channel, with the upsampling of the U and V channels being performed in a simpler manner, e.g. using bilinear interpolation. In other examples, the upsampling described herein may be applied to each of the Y, U and V channels. In yet other examples, results from some or all of the computation (e.g. of contrast or weighting parameters) from processing pixel values in the Y channel may be applied to U and V channels to save computation and promote consistency of reconstructed edges. The human visual system is not as perceptive to spatial resolution in the U and V channels as in the Y channel, so the U and V channels may or may not be adaptively sharpened and/or upsampled taking account of local context. If the input pixel data is in RGB format then it could be converted into YUV format (e.g. using a known colour space conversion technique) and then processed as data in Y, U and V channels. Alternatively, if the input pixel data is in RGB format (in which each pixel has a value in each of R, G and B channels) then the techniques described herein could be implemented on the R, G and B channels as described herein, wherein the G channel may be considered to be a proxy for the Y channel. If the input data includes an alpha channel then upsampling (e.g. using bilinear interpolation) may be applied to the alpha channel separately.

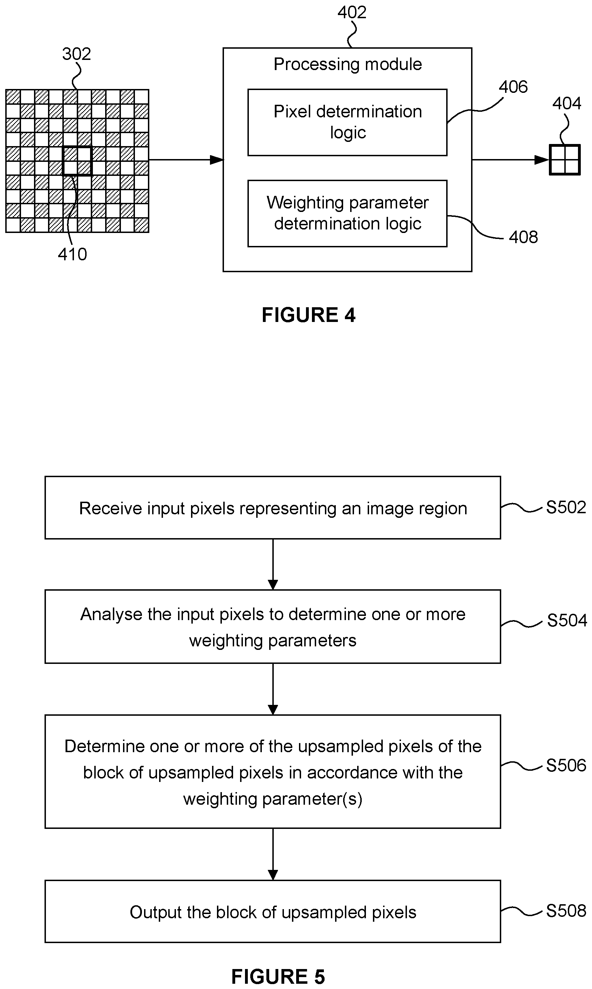

Figure 4 shows a processing module 402 configured to apply upsampling to input pixels 302, which represent an image region, to determine a block of upsampled pixels 404, e.g. for use in implementing a super resolution technique. The block of upsampled pixels 404 represents a location within the image region indicated with the square 410 in Figure 4. In this example, the input pixels 302 have locations corresponding to a 10x10 block of upsampled pixel locations, and the block of upsampled pixels 404 is a 2x2 block of upsampled pixels representing the central 2x2 portion of the 10x10 block of upsampled pixel locations. However, it is noted that in other examples the shapes and/or sizes of the image region represented by the input pixels and the block of upsampled pixels may be different. The processing module 402 comprises pixel determination logic 406 and weighting parameter determination logic 408. The logic of the processing module 402 may be implemented in hardware, software, or a combination thereof. A hardware implementation normally provides for a reduced latency and power consumption and higher throughput compared to a software implementation, at the cost of inflexibility of operation. The processing module 402 is likely to be used in the same manner a large number of times on each image being upsampled, and since latency is very important in, for example, real time super resolution applications, it is likely that implementing the logic of the processing module 402 in hardware (e.g. in fixed function circuitry) will be preferable to implementing the logic in software. However, a software implementation is still possible and may be preferable in some situations (for example, where there is insufficient microchip area to include additional fixed-function hardware).

Rather than using bilinear upsampling (which is the most common conventional upsampling approach), the processing module 402 performs upsampling which is dependent upon a directionality of filtering to be applied, e.g. based on relative horizontal and vertical variation of the input pixels 302 within the image region. In this way, the upsampling takes account of anisotropic features (e.g. edges) in the image, to reduce 'staircasing' and 'crenulation' artefacts and blurring that can occur near anisotropic features (e.g. edges, particularly diagonal edges of computer-generated images), compared to the case where bilinear upsampling is used.

A method of using the processing module 402 to apply upsampling to the input pixels 302 to determine the block of upsampled pixels 404, e.g. for use in implementing a super resolution technique, is described with reference to the flow chart of Figure 5.

In step S502 the input pixels 302 are received at the processing module 402. In the main examples described herein the input pixels 302 are represented in two input blocks 304 and 306, as shown in Figure 3. However, in other examples the input pixels are not necessarily represented in two input blocks, e.g. they may be represented in a single block. As described above, the input pixels 302 have locations corresponding to a repeating quincunx arrangement (or 'chequer board pattern') of upsampled pixel locations, wherein the first input block 304 ('input block 1') comprises the input pixels having locations corresponding to locations within odd rows of the repeating quincunx arrangement of upsampled pixel locations (illustrated with line hatching in Figure 3), and the second input block 306 ('input block 2') comprises the input pixels having locations corresponding to locations within even rows of the repeating quincunx arrangement of upsampled pixel locations (illustrated with cross-hatching in Figure 3). The input blocks can be considered to be low resolution representations of the image region represented by the input pixels. In the examples described herein, each of the input blocks is a 5x5 block of input pixels, and the block of upsampled pixels is a 2x2 block of upsampled pixels, but in other examples, the input blocks and the block of upsampled pixels may have different shapes and/or sizes.

The origin of the input pixels does not affect the upsampling process described herein. For example, the input pixels may be captured (e.g. by a camera) or may be computer-generated (e.g. rendered by a Graphics Processing Unit (GPU) to represent an image of a scene using a rendering technique such as rasterization or ray tracing). For example, a GPU may render all of the input pixels for the image region, i.e. all of the input pixels in the repeating quincunx arrangement shown in Figure 4. In this example, the upsampling will double the number of pixels. Therefore, in this example, the GPU can render half the number of pixels in the final (upsampled) image, which allows the GPU to have reduced latency, power consumption and/or silicon area compared to a GPU that renders all of the pixels of the final image.

As another example, a sequence of frames may be rendered, e.g. representing images of a scene at a sequence of time instances. For example, this may be useful for rendering images for a computer game as a user interacts with a scene. In this example, on each frame of the sequence of frames, the input pixels of just one of the input blocks (304 or 306) are rendered, with the input block that is rendered alternating over the sequence of frames. Usually, a current frame will be very similar to a previous frame (e.g. the immediately preceding frame), and a process of temporal resampling can be performed to estimate some of the input pixels for the current frame based on the rendered pixels of the previous frame. As known to those skilled in the art, a temporal resampling process can use motion vectors to estimate input pixels for a current frame based on rendered pixels of the previous frame (e.g. the immediately preceding frame). In this way, when the image region represented by the input pixels 302 is part of a current frame within the sequence of frames, the input pixels of the first of the input blocks 304 may be rendered for the current frame, whereas the input pixels of the second of the input blocks 306 may be determined by performing temporal resampling on pixels of a previous frame (e.g. the immediately preceding frame) using motion vectors. In examples which use temporal resampling to determine half of the input pixels for each frame, the number of input pixels that are rendered by a GPU for each frame is a quarter of the number of pixels in the final (upsampled) image, which allows the GPU to have even further reduced latency, power consumption and/or silicon area compared to a GPU that renders half of the pixels of the final image for each frame.

In step S504 the weighting parameter determination logic 408 analyses the input pixels 302 to determine one or more weighting parameters. The one or more weighting parameters are indicative of a directionality of filtering to be applied when upsampling is applied to the input pixels within the image region. For example, the one or more weighting parameters may be indicative of relative horizontal and vertical variation of the input pixels 302 within the image region. As such, the weighting parameters may be referred to as directional weighting parameters. For example, two weighting parameters ($a$ and $b$) may be determined in step S504. The weighting parameters may be normalised, so that $a + b = 1$. This means that as one of $a$ or $b$ increases the other decreases. As will become apparent from the description below, if the parameters are set such that $a = b = 0.5$ then the system will give the same outputs as a bilinear upsampler. However, in the system described herein, $a$ and $b$ can be different, i.e. we can have $a \neq b$. Furthermore, since $b = 1 - a$, the weighting parameter determination logic 408 might output an indication of a single weighting parameter, e.g. $a$, and this can be used to determine the second weighting parameter, $b$, as $1 - a$. An indication of the one or more weighting parameters is provided to the pixel determination logic 406. Further details of the way in which the weighting parameter determination logic 408 determines the one or more weighting parameters in various examples are given below.

In step S506 the pixel determination logic 406 determines one or more of the upsampled pixels of the block of upsampled pixels 404 in accordance with the directionality of filtering to be applied (e.g. in accordance with the relative horizontal and vertical variation of the input pixels within the image region) indicated by the determined one or more weighting parameters.

In step S508 the block of upsampled pixels 404 is output from the pixel determination logic 406. In some systems this could be the end of the processing on the block of upsampled pixels 404 and it could be output from the processing module 402 as shown in Figure 4. In other examples, e.g. as described below, adaptive sharpening may be applied to the upsampled pixel values (e.g. by blending with sharpened upsampled pixel values) before they are output from the processing module.

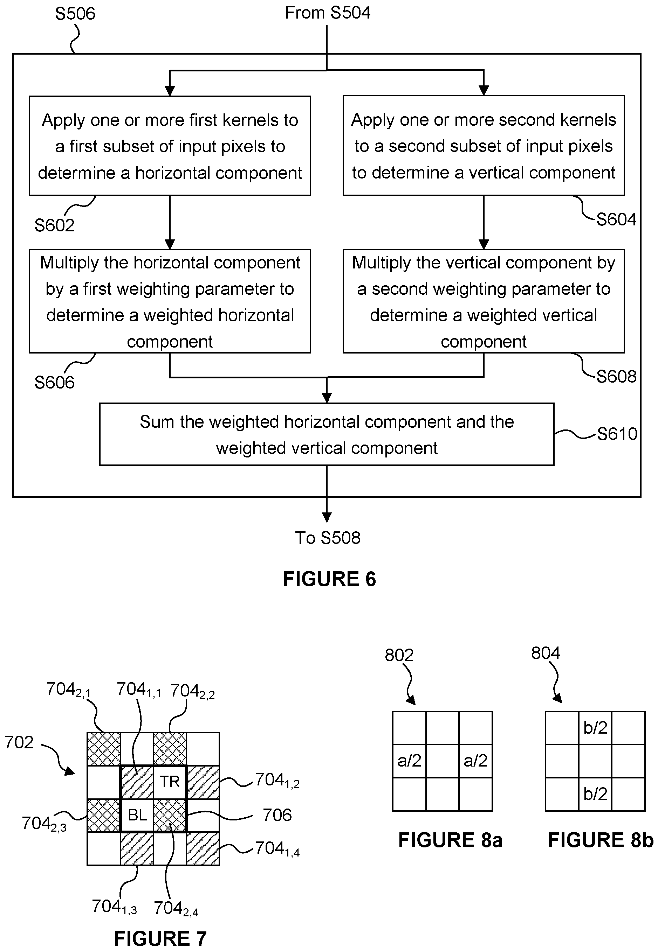

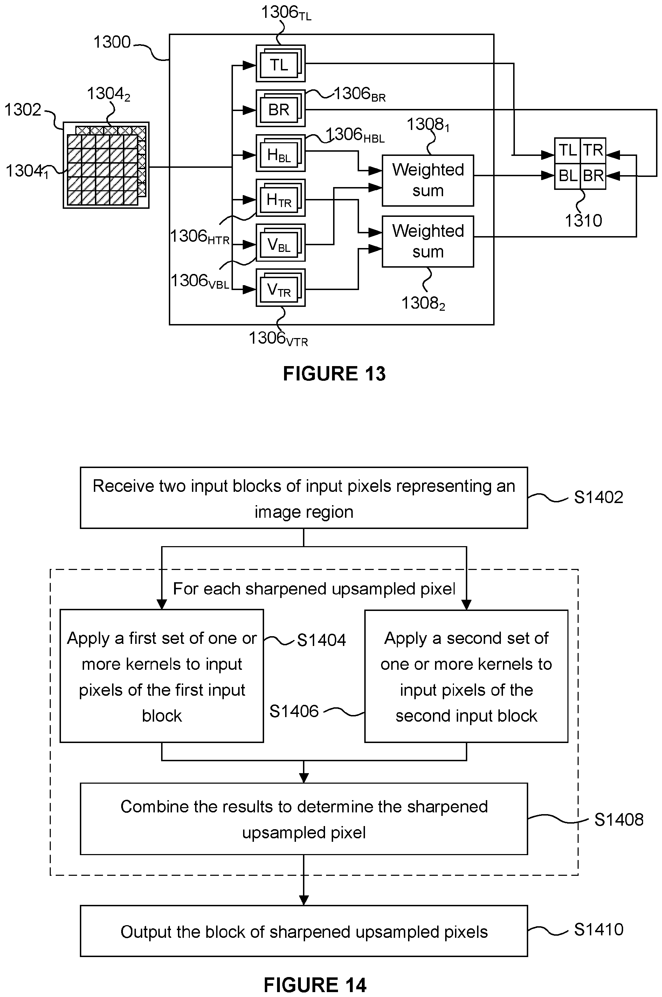

In examples described herein the weighting parameter(s) are indicative of the relative horizontal and vertical variation of the input pixels within the image region, but it is to be understood that this is just one example, and that more generally the weighting parameter(s) are indicative of a directionality of filtering to be applied when upsampling is applied to the input pixels within the image region. Figure 6 is a flow chart showing how the pixel determination logic 406 can determine an unsharpened upsampled pixel in step S506 in accordance with the relative horizontal and vertical variation of the input pixels within the image region. Figure 7 shows a portion of the input pixels 702 and illustrates how the location of a block of upsampled pixels 706 relates to the locations of the input pixels 704. Each of the upsampled pixels that is determined in accordance with the relative horizontal and vertical variation of the input pixels within the image region, in step S506, is at a respective upsampled pixel location which does not correspond with the location of any of the input pixels. In other words the top right and the bottom left upsampled pixel in the block of upsampled pixels (denoted "TR" and "BL" in Figure 7) are determined in step S506 in accordance with the relative horizontal and vertical variation of the input pixels within the image region. If no sharpening is being applied then the input pixels having locations corresponding to the repeating quincunx arrangement of upsampled pixel locations are used as the upsampled pixels at those upsampled pixel locations of the block of upsampled pixels (e.g. the input pixels at the top left and bottom right locations of the block of upsampled pixels 706 are "passed through" to the corresponding locations in the output block). If sharpening is applied then some processing is performed on the input pixels to determine all of the upsampled pixels in the block of upsampled pixels, as described in more detail below with reference to Figures 13 to 26.

As described above, the input pixels 704 are represented in two input blocks (e.g. 304 and 306). In Figure 7, input pixels $704_{1,1}$, $704_{1,2}$, $704_{1,3}$ and $704_{1,4}$, which are shown with line hatching, are part of the first input block 304; whereas input pixels $704_{2,1}$, $704_{2,2}$, $704_{2,3}$ and $704_{2,4}$, which are shown with cross hatching, are part of the second input block 306.

As shown in Figure 6, step S506 of determining each of said one or more of the upsampled pixels comprises applying one or more kernels to at least some of the input pixels in accordance with the determined one or more weighting parameters. In particular, in step S602 the pixel determination logic 406 applies one or more first kernels (which may be referred to as horizontal kernels) to at least a first subset of the input pixels to determine a horizontal component. For example, a kernel of [0.5,0.5] can be applied to the input pixels which are horizontally adjacent and either side of the upsampled pixel location for which an upsampled pixel is being determined. For example, when step S602 is performed for the upsampled pixel denoted "TR" in Figure 7 then the horizontal kernel is applied to pixels $704_{1,1}$ and $704_{1,2}$ from input block 1. When step S602 is performed for the upsampled pixel denoted "BL" in Figure 7 then the horizontal kernel is applied to pixels $704_{2,3}$ and $704_{2,4}$ from input block 2.

In step S604 the pixel determination logic 406 applies one or more second kernels (which may be referred to as vertical kernels) to at least a second subset of the input pixels to determine a vertical component. For example, a kernel of $\begin{bmatrix} 0.5 \\ 0.5 \end{bmatrix}$ can be applied to the input pixels which are vertically adjacent and either side of the upsampled pixel location for which an upsampled pixel is being determined. For example, when step S604 is performed for the upsampled pixel denoted "TR" in Figure 7 then the vertical kernel is applied to pixels $704_{2,2}$ and $704_{2,4}$ from input block 2. When step S604 is performed for the upsampled pixel denoted "BL" in Figure 7 then the vertical kernel is applied to pixels $704_{1,1}$ and $704_{1,3}$ from input block 1.

It is noted that each of the one or more of the upsampled pixels for which step S506 is performed has two horizontally adjacent pixels which are both from the same input block (either from input block 1 or input block 2) and has two vertically adjacent pixels which are both from the other input block (either from input block 2 or input block 1). It is also noted that steps S602 and S604 may be performed in any order, e.g. sequentially, or may be performed in parallel.

In steps S606 to S610 the pixel determination logic 406 combines the determined horizontal and vertical components, such that each of said one or more of the upsampled pixels is determined in accordance with the relative horizontal and vertical variation of the input pixels within the image region as indicated by the one or more weighting parameters determined in step S504. In particular, in step S606 the pixel determination logic 406 multiplies the horizontal component (determined in step S602) by a first of the weighting parameters, *a*, to determine a weighted horizontal component.

In step S608 the pixel determination logic 406 multiplies the vertical component (determined in step S604) by a second of the weighting parameters, *b*, to determine a weighted vertical component. Steps S606 and S608 may be performed in any order, e.g. sequentially, or may be performed in parallel.

In step S610 the pixel determination logic 406 sums the weighted horizontal component and the weighted vertical component to determine the upsampled pixel. In some examples, the kernels applied in S602 and S604 may be multiplied by the first and second weighting parameters respectively before, or during, application to the input pixels. This is expected to be less power- and area-efficient in hardware than the method described with reference to Figure 6, since the application of kernels of Figures 8a and 8b may be obtained using only cheap fixed bit shifts and additions, and the number of variable multiplies required is considerably lower.

Figure 8a shows a 3x3 kernel 802 (which may be implemented as a 1x3 kernel) which can be applied to the input pixels 702 to represent the effect of performing steps S602 and S606 for an upsampled pixel location being determined. For example, the kernel 802 could be centred on the upsampled pixel being determined and applied to the input pixels 702 such that the result would be given by the dot product $\left[\frac{a}{2}, \frac{a}{2}\right] \cdot \boldsymbol{h}$, where $\boldsymbol{h}$ is a vector of the horizontally adjacent pixel values. For example, if the upsampled pixel denoted "TR" is being determined then $\boldsymbol{h} = [p_{1,1}, p_{1,2}]$, where $p_{1,1}$ is the value of input pixel $704_{1,1}$ and $p_{1,2}$ is the value of input pixel $704_{1,2}$. Similarly, if the upsampled pixel denoted "BL" is being determined then $\boldsymbol{h} = [p_{2,3}, p_{2,4}]$, where $p_{23}$ is the value of input pixel $704_{2,3}$ and $p_{2,4}$ is the value of input pixel $704_{2,4}$.

Similarly, Figure 8b shows a 3x3 kernel 804 (which may be implemented as a 3x1 kernel) which can be applied to the input pixels 702 to represent the effect of performing steps S604 and S608 for an upsampled pixel location being determined. For example, the kernel 804 could be centred on the upsampled pixel being determined and applied to the input pixels 702 such that the result would be given by the dot product $\left[\frac{b}{2}, \frac{b}{2}\right] \cdot \boldsymbol{v}$, where $\boldsymbol{v}$ is a vector of the vertically adjacent pixel values. For example, if the upsampled pixel denoted "TR" is being determined then $\boldsymbol{v} = [p_{2,2}, p_{2,4}]$, where $p_{2,2}$ is the value of input pixel $704_{2,2}$ and $p_{2,4}$ is the value of input pixel $704_{2,4}$. Similarly, if the upsampled pixel denoted "BL" is being determined then $\boldsymbol{v} = [p_{1,1}, p_{1,3}]$, where $p_{1,1}$ is the value of input pixel $704_{1,1}$ and $p_{1,3}$ is the value of input pixel $704_{1,3}$.

As such, steps S602 to S610 can be summarised as determining the upsampled pixels denoted TR and BL as the sum of dot products:

$$\left[\frac{a}{2}, \frac{a}{2}\right] \cdot \boldsymbol{h} + \left[\frac{b}{2}, \frac{b}{2}\right] \cdot \boldsymbol{v}$$

, where $\boldsymbol{h}$ and $\boldsymbol{v}$ are vectors of adjacent pixel values as described above for the TR and BL pixels respectively.

The values of the weighting parameters, *a* and *b*, are set in dependence on the local context, such that by determining the upsampled pixels in step S506 in accordance with the determined weighting parameters the upsampled pixels are determined in accordance with the relative horizontal and vertical variation of the input pixels within the image region. In this way, the weighting parameters can be used to reduce artefacts and blurring over anisotropic features (e.g. edges) in the image, which may otherwise result from an upsampling process. As described above, the weighting parameter determination logic 408 analyses the input pixels in step S504 to determine the one or more weighting parameters. In this way the one or more weighting parameters are determined for the particular image region being processed, such that different weighting parameters can be used in the upsampling process for different image regions. In other words, the weighting parameters can be adapted to suit the particular local context of the image region for which upsampled pixels are being determined. This allows suitable weighting parameters to be used for different image regions based on the different anisotropic image features present in the different image regions. Some examples of how the weighting parameter determination logic 408 can be implemented are described below.

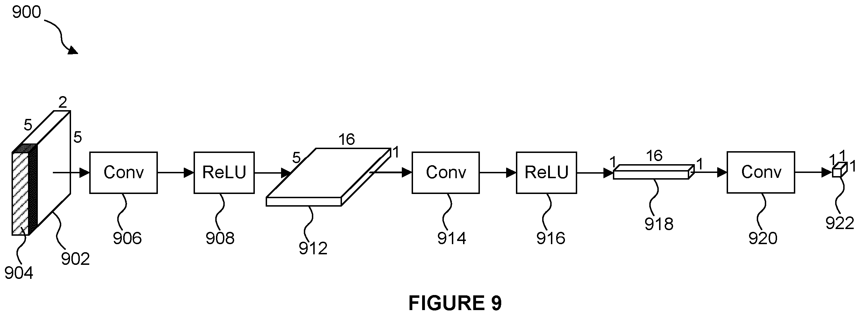

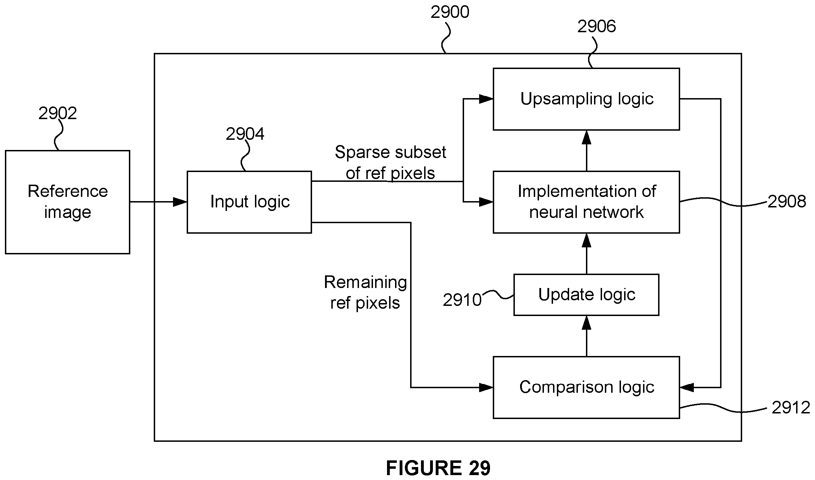

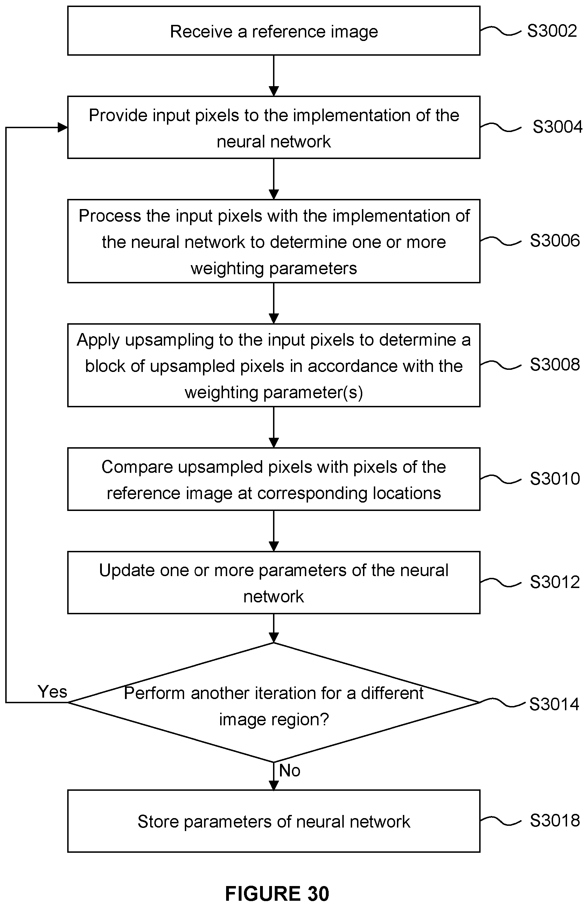

For example, the weighting parameter determination logic 408 of the processing module 402 may comprise an implementation of a neural network for determining the weighting parameter(s). Figure 9 illustrates an implementation of a convolutional neural network 900 configured to output an indication of the weighting parameter(s) for use in applying upsampling to input pixels representing an image region to determine a block of upsampled pixels. The implementation of the neural network 900 may be implemented on any suitable hardware, e.g. a GPU or a neural network accelerator (NNA), or as fixed-function hardware with predetermined, fixed weights (i.e. the neural network may be hardcoded into a hardware implementation of the neural network, that is, the neural network may be implemented directly in silicon, rather than being run on more general hardware (NNA, GPU, CPU etc.) by means of software). As described in more detail below with reference to Figures 29 and 30, the neural network has been trained, e.g. using Quantization Aware Training (QAT), to output an indication of the one or more weighting parameters indicative of relative horizontal and vertical variation of the input pixels within the image region.

In particular, the implementation of the neural network 900 is configured to receive the input pixels 902, process the input pixels to determine an indication of the one or more weighting parameters, and output the determined indication of the one or more weighting parameters for use in applying upsampling to the input pixels representing the image region to determine a block of upsampled pixels. As described above, the input pixels are represented in two input blocks, wherein one of the two input blocks comprises the input pixels having locations corresponding to locations within odd rows of a repeating quincunx arrangement of upsampled pixel locations, and the other of the two input blocks comprises the input pixels having locations corresponding to locations within even rows of the repeating quincunx arrangement of upsampled pixel locations. In the example shown in Figure 9, each of the input blocks is a 5x5 block of input pixels, such that the input pixels 902 are shown as a 5x5x2 array to indicate that the input pixels are organised as two 5x5 input blocks of input pixels.

As mentioned above, the neural network is trained to output an indication of the one or more weighting parameters to be indicative of relative horizontal and vertical variation of the input pixels within the image region, rather than attempting to train the neural network to output the upsampled pixels themselves. This is because a neural network is well suited to determining suitable weighting parameters to represent the relative horizontal and vertical variation of anisotropic image features within the image region, and this task can be achieved with a small neural network. As such, the complexity of the implementation of the neural network 900 is low, so it can have a small silicon area, and low latency and power consumption.

In particular, the implementation of the neural network 900 comprises a first convolution layer 906, a first rectified linear unit (ReLU) 908, a second convolution layer 914, a second ReLU 916 and a third convolution layer 920. It is noted that convolution layers and ReLUs are simple to implement. The first ReLU 908 is implemented between the first convolution layer 906 and the second convolution layer 914, and the second ReLU 916 is implemented between the second convolution layer 914 and the third convolution layer 920. The neural network may be implemented in hardware (e.g. in fixed function circuitry), software, or a combination thereof.

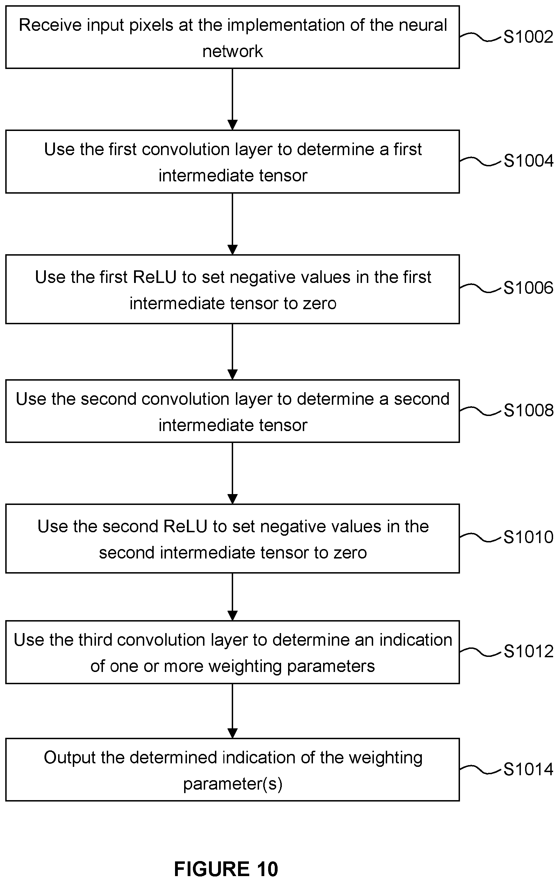

Figure 10 is a flow chart for a method of determining an indication of the weighting parameter(s) using the implementation of the neural network 900. In step S1002 the input pixels 902 are received at the implementation of the neural network 900.

In step S1004 the first convolution layer 906 is used to determine a first intermediate tensor based on the input pixels 902. In step S1006 the first ReLU 908 is used to set negative values in the first intermediate tensor to zero. In fixed function hardware, the first ReLU 908 could be implemented trivially by combining with the preceding convolution, e.g. by AND-ing the result of the preceding convolution with the NOT of the sign bit. The first intermediate tensor 912 output from the first ReLU 908 is shown in Figure 9. The first intermediate tensor 912 extends in only one of a horizontal dimension and a vertical dimension with respect to the dimensions of the image region represented by the input pixels 902. In the example shown in Figure 9, the first intermediate tensor 912 extends in only a horizontal dimension (and not a vertical dimension), e.g. where the processing is performed along the rows of the image. However, in other examples, the first intermediate tensor could extend in only a vertical dimension (and not a horizontal dimension), e.g. if the processing were to be performed down the columns of the image. In the example shown in Figure 9, the first intermediate tensor 912 is a 5x1x16 array.

In step S1008 the second convolution layer 914 is used to determine a second intermediate tensor based on the first intermediate tensor 912. To save computation, this layer may be a depthwise convolution, i.e. processing each channel of the input separately without a cross-channel component to the operation. In step S1010 the second ReLU 916 is used to set negative values in the second intermediate tensor to zero. The second intermediate tensor 918 output from the second ReLU 916 is shown in Figure 9. The second intermediate tensor does not extend in either the horizontal dimension or the vertical dimension with respect to the dimensions of the image region represented by the input pixels 902. In the example shown in Figure 9, the second intermediate tensor 918 is a 1x1x16 array.

In step S1012 the third convolution layer 920 is used to determine the indication of the one or more weighting parameters 922 based on the second intermediate tensor 918. The indication of the one or more weighting parameters 922 is shown in Figure 9 as a 1x1x1 array (i.e. a scalar value for each input region). For example, the indication of the one or more weighting parameters 922 may be the value of the first weighting parameter $a$ described herein, where the value of the second weighting parameter $b$ is inferred from the value of $a$, as $1 - a$. In other examples, the indication of the one or more weighting parameters may be treated as if it were dy or dx, or the quantity $|dy|-|dx|$, and input into weighting parameter calculation logic 1106 as described below. This provides an opportunity to adjust the way interpolation is performed after training by means of a parameter (given as '$m$' herein). In some other examples, the indication of the one or more weighting parameters may be a 1x1x2 array (i.e. there may be two output channels), representing two values of the weighting parameter, $a$, for separate use for two different pixel locations (e.g. the top right and bottom left pixel locations of a 2x2 block of pixel locations).

Splitting the processing into separate vertical, horizontal and channel passes (in the first, second and third convolution layers respectively) keeps the number of Multiply and Accumulate (MAC) units low in the implementation of the neural network 900. The first convolution 906 in the present example performs 1x5x2x16 = 160 MACs (multiply-accumulates) per output block; the second convolution 914 performs 5x1x16x1 = 80 MACs per output block; and the final convolution 920 performs 16 MACs per output block. In total, therefore, this network performs 256 MACs per output block, which is significantly lower than typical upsampling neural networks, which typically require many orders of magnitude more operations for the same output resolution. Further significant savings are possible by removing unused channels from the trained network, and using low-precision integer arithmetic by means of QAT. Such savings translate directly into lower area, power and latency requirements when implemented in fixed-function hardware.

In step S1014 the determined indication of the one or more weighting parameters 922 (e.g. the value of *a*) is output from the implementation of the neural network 900, e.g. output from the weighting parameter determination logic 408 and provided to the pixel determination logic 406 for use in upsampling as described herein. In some examples, the output value a may be constrained to lie between 0 and 1, for example by means of a sigmoid activation function.

In some examples, the image region is part of an input image, wherein the upsampling is to be performed iteratively for a plurality of partially overlapping image regions within the input image. In this sense, each of the image regions can be thought of as a window that slides across the input image. In these cases, some of the input pixels 902 of a current image region are the same as some of the input pixels of a previous image region. The 'previous image region' may be the image region that was processed in the preceding iteration. In these examples, the processing of the input pixels with the implementation of the neural network 900 may further comprise storing the first intermediate tensor 912 in a buffer which functions as a queue/shift register. This storing step can be performed between steps S1006 and S1008 in the flow chart of Figure 10. The first convolution layer 906 may operate on input pixels (e.g. shown with hatching and denoted 904 in Figure 9) within a first portion of the current image region that does not overlap with a previous image region, but does not need to operate on input pixels (i.e. the rest of the input pixels 902 which are not shown with hatching in Figure 9) within a second portion of the current image region that does overlap with the previous image region. The use of the buffer for storing the first intermediate tensor 912 means that the first convolution layer 906 can avoid performing an entire convolution of all of the input pixels, and can instead reuse values that were determined in one or more previous iterations. On each iteration, the window may slide by one pixel position in both of the input blocks, such that the second portion of the current image region 904 is a line (e.g. a column or a row) of pixels in both of the input blocks. This means that the overlapping region (i.e. the first portion of the current image region 904) is a 5x4 block of input pixels in each of the input blocks. It can be appreciated that in this case most of the input pixels of the current image region overlap with input pixels of the previous image region. Furthermore, since in the example shown in Figure 9, the second portion of the image region 904 is a column of input pixels from each of the input blocks and since the first convolution layer 906 removes the vertical extent from the first intermediate tensor 912 without removing horizontal extent from the first intermediate tensor 912, the first convolution layer does not need to operate on the input pixels in the first portion of the image region. In the example of Figure 9, the second portion 904 is shown on the left of the image region 902 which would be appropriate when the processing proceeds in a right-to-left order; whereas in other examples, the second portion could be on the right of the image region which would be appropriate if the processing were to proceed in a left-to-right order. It is noted that in other examples, the window may slide vertically rather than horizontally such that the nonoverlapping portion of the input pixels is a row of input pixels from each of the input blocks, and in this case the first convolution layer could remove the horizontal extent from the first intermediate tensor without removing vertical extent from the first intermediate tensor, such that the first convolution layer would again not need to operate on the input pixels in the overlapping portion of the input pixels. In examples in which the window slides vertically, the second portion could be at the bottom of the image region which would be appropriate if the processing were to proceed in a top-to-bottom order; whereas in other examples, the second portion could be at the top of the image region which would be appropriate if the processing were to proceed in a bottom-to-top order. The implementation of the neural network does not comprise any linestores. Linestores store lines (e.g. rows) of pixel values, and require large memories. By avoiding including any linestores in the implementation of the neural network 900 the silicon area and the power consumption of the implementation of the neural network can be kept low.

In some examples, N-times higher throughput could be achieved by implementing N instances of the neural network in fixed-function hardware. These instances would operate on adjacent input regions. The same idea of a sliding window could be used in these examples, with the image region being (4+N) columns wide (rather than 5-wide, in the example shown in Figure 9 in which N=1), and would be shifted by N locations when we move the input window between iterations. When implementing in fixed-function hardware, the value of N may be a configuration option.

Furthermore, as described in more detail below, the neural network can be trained using Quantization Aware Training (QAT). In this way, the neural network can be trained for sparsity and low bit depths. Any MACs for missing weights can be skipped (i.e. not synthesised). The implementation of the neural network 900 does not need to use the same bit depth for all layers or weights within a layer, and the QAT scheme can be used to optimise the layers and weights of the neural network appropriately. The neural network is defined using coefficients (e.g. the weights). The neural network may be hardcoded in hardware (e.g. hardcoded in silicon) of the implementation of the neural network. When the neural network is hardcoded into hardware (rather than being implemented on general neural network inference hardware, such as a neural network accelerator (NNA) or a graphics processing unit (GPU)), each coefficient of the neural network may be compressed individually, e.g. individual coefficient bit depths are possible. Each of the coefficients may be determined to have a low bit-depth, and the bit depths of the coefficients may be determined individually, e.g. learned/trained individually, thereby allowing for more optimal (i.e. smaller) bit-depths to be used (compared to determining a shared bit depth for an entire layer or channel of the neural network). Each of the coefficients may be removed from the network, e.g. by means of training for sparsity. In other words, a coefficient may be removed from the neural network if a bit depth of the coefficient is learnt to be zero. That is, each of the coefficients may be removed from the neural network if its effect on a quality of the indications of the one or more weighting parameters output from the neural network is determined to be sufficiently small. Removing individual coefficients from the neural network in an unstructured fashion, and reducing the bit depths of the remaining coefficients individually, allows for greater sparsity and lower overall bit depths than would be possible with the structured sparsity and uniform bit depths typically required by more general hardware, such as NNAs and GPUs. A direct hardware implementation is able to exploit this kind of compression since there is no requirement for uniformity or generality, which is the case in NNAs and GPUs. For example, multipliers corresponding to an eliminated coefficient would simply be excluded from the implementation, meaning no power or area is consumed, and a silicon multiplier corresponding to a low bit depth weight may be reduced in area and power consumption. This means that the latency, power consumption and/or silicon area of the implementation of the neural network can be reduced. For example, coefficients with a zero value (or with a value that is closer to zero than a threshold) can often be removed from the neural network without having a significant detrimental effect on the quality of the outputs from the neural network. When the neural network is to be hardcoded in hardware, sparsity can be implemented in an unstructured, per-coefficient manner, which would ordinarily be hard to exploit. This may allow entire multiplies to be skipped.

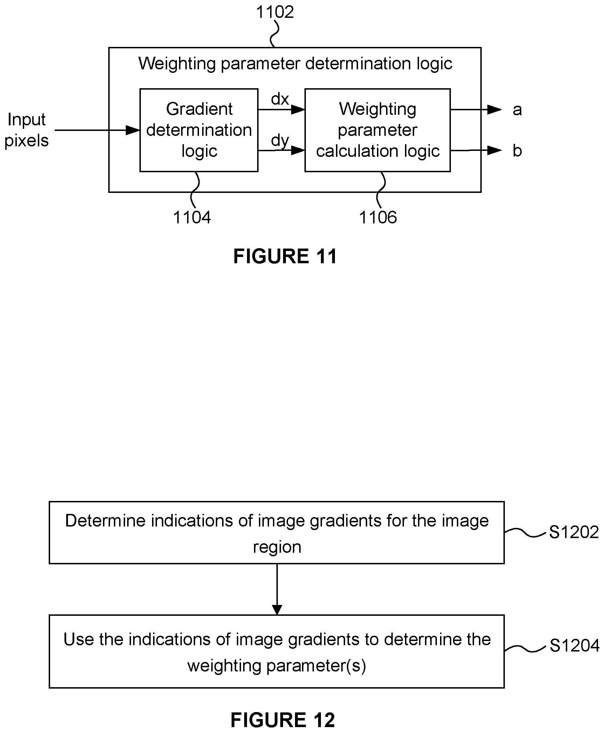

Another example of how the weighting parameter determination logic 408 can be implemented is described with reference to Figures 11 and 12. In particular, Figure 11 shows weighting parameter determination logic 1102 which is configured to analyse the input pixels and output an indication of one or more weighting parameters, and Figure 12 is a flow chart for a method of determining the weighting parameter(s) using the weighting parameter determination logic 1102. The weighting parameter determination logic 1102 comprises gradient determination logic 1104 and weighting parameter calculation logic 1106.

In step S1202 the gradient determination logic 1104 determines indications of image gradients for the image region based on the input pixels. In order to determine the indications of image gradients for the block of input pixels, the gradient determination logic 1104 receives and operates on a patch of input pixels. Indications of two image gradients in different directions may be determined. In this case, the gradient determination logic 1104 applies a first gradient kernel (which may be referred to as a horizontal gradient kernel) to the input pixels to determine an indication of an image gradient in a horizontal direction, dx. The gradient determination logic 1104 also applies a second gradient kernel (which may be referred to as a vertical gradient kernel) to the input pixels to determine an indication of an image gradient in a vertical direction, dy. The indications of the image gradients in the horizontal and vertical directions (dx and dy) are provided to the weighting parameter calculation logic 1106.

In step S1204 the weighting parameter calculation logic 1106 uses the determined indications of image gradients to determine the one or more weighting parameters. In particular, as shown in Figure 11, the weighting parameter calculation logic 1106 determines and outputs the two weighting parameters $a$ and b.

To give an example, the horizontal gradient kernel which is applied to the input pixels may be

$$\begin{bmatrix} 0 & 0 & 0 & 0 & 0 \\ -1 & -1 & 0 & 1 & 1 \\ -1 & -1 & 0 & 1 & 1 \\ -1 & -1 & 0 & 1 & 1 \\ 0 & 0 & 0 & 0 & 0 \end{bmatrix}$$

, and this may be applied to a 5x5 block of input pixels. This horizontal gradient kernel

$$\begin{bmatrix} -1 & -1 & 0 & 1 & 1 \\ -1 & -1 & 0 & 1 & 1 \\ -1 & -1 & 0 & 1 & 1 \end{bmatrix}$$

may be represented as $\phantom{x}$ because the weights in the top and bottom rows are all zeros. "Applying" a kernel to the input pixels means that a weighted sum of the input pixels is performed using the kernel values as weights of the weighted sum. Applying the horizontal gradient kernel to the input pixels and taking the absolute value will output a scalar value, dx, which indicates an image gradient strength in the x direction. In other examples, the horizontal gradient kernel could be defined to be the negative of the kernel given above.

The vertical gradient kernel which is applied to

$$\begin{bmatrix} 0 & -1 & -1 & -1 & 0 \\ 0 & -1 & -1 & -1 & 0 \\ 0 & 0 & 0 & 0 & 0 \\ 0 & 1 & 1 & 1 & 0 \\ 0 & 1 & 1 & 1 & 0 \end{bmatrix}$$

the input pixels may be $\phantom{x}$, and this may be applied to a 5x5 block of input pixels. The vertical gradient kernel may be represented as

$$\begin{bmatrix} -1 & -1 & -1 \\ -1 & -1 & -1 \\ 0 & 0 & 0 \\ 1 & 1 & 1 \\ 1 & 1 & 1 \end{bmatrix}$$

because the weights in the leftmost and rightmost columns are all zeros. Applying the vertical gradient kernel to the input pixels and taking the absolute value will output a scalar value, dy, which indicates an image gradient strength in the y direction. In other examples, the vertical gradient kernel could be defined to be the negative of the kernel given above.

The values of dx and dy can be considered to be components of an image gradient vector [dx, dy], with dx and dy being scalar values. A line that is perpendicular to the image gradient vector can be considered to represent an edge direction because by definition an image gradient on an edge is perpendicular to the direction of the edge. As described above, in step S1204 the weighting parameter calculation logic 1106 uses the determined indications of image gradients (e.g. dx and dy) to determine one or more weighting parameters (e.g. "*a*" and "*b*"). For example, a first weighting parameter, *a*, could be determined as $a = \mathrm{clip}(m(|dy| - |dx|) + 0.5, 0, 1)$, and a second weighting parameter, *b*, could be determined as $b = 1 - a$, where *m* is a tuneable parameter.

As described above, $a + b = 1$. This means that as one of *a* or *b* increases the other decreases. If the parameters are set such that $a = b = 0.5$ then the system in this example will give the same outputs as a bilinear upsampler, and the weights may be said to be "isotropic". However, in the system described herein, *a* and *b* can be different, i.e. we can have $a \neq b$. In this way, if the determined indications of image gradients are not equal (such that $|dx| \neq |dy|$), then the weighting parameters (*a* and *b*) are determined to be indicative of anisotropic weights.

There are different ways in which the weighting parameters can be determined from the determined indications of image gradients (e.g. dx and dy) that satisfy the conditions mentioned above, some of which are given below. Furthermore, in some examples only a single weighting parameter (e.g. *a*) is calculated, and the value of the other weighting parameter (e.g. *b*) is determined from the calculated weighting parameter, e.g. as (1 - *a*).

In a first example, the weighting parameters are determined as $a = \frac{|dy|}{(|dx| + |dy|)}$ and b =

In a second example, the weighting parameters are determined as $a = \begin{cases} 1 & \text{where } dy \geq dx \\ 0 & \text{where } dx > dy \end{cases}$ and $b = \begin{cases} 0 & \text{where } dy \geq dx \\ 1 & \text{where } dx > dy \end{cases}$.

In a third example, the weighting parameters are determined as $a = f(dx - dy, m)$ and $b = f(dy - dx, m)$ or $b = 1 - a$, wherein *f* is a function such that $f(x, m) = \left[ \frac{1}{2} - mx \right]_0^1$, where *m* is a tuneable parameter and $[\cdot]_0^1$ clips the output between 0 and 1. Tuneable parameters may be set, e.g. via registers, to change the behaviour of the processing module as desired.

In the examples described above, the upsampled pixels in the block of upsampled pixels 404 are non-sharpened upsampled pixels, i.e. no sharpening is applied when the upsampling is performed. In these examples in which no sharpening is applied, as described above, step S602 involves applying a single first kernel to input pixels horizontally adjacent to the upsampled pixel being determined to determine the horizontal component, and step S604 involves applying a single second kernel to input pixels vertically adjacent to the upsampled pixel being determined to determine the vertical component. However, in other examples, described in detail below with reference to Figures 13 to 26, the upsampled pixels in the block of upsampled pixels are sharpened upsampled pixels, i.e. sharpening is applied when the upsampling is performed.

Figure 13 illustrates pixel determination logic 1300 configured to determine sharpened upsampled pixels. The pixel determination logic 1300 may be implemented on a processing module (e.g. processing module 402 shown in Figure 4). The pixel determination logic 1300 is configured to receive input pixels 1302, process the input pixels and output a block of sharpened upsampled pixels 1310. As described above, the input pixels 1302 are represented with two input blocks (denoted $1304_1$ and $1304_2$ in Figure 13), which correspond to the input blocks 304 and 306 described above. In particular, one of the two input blocks (e.g. input block $1304_1$) comprises input pixels having locations corresponding to locations within odd rows of a repeating quincunx arrangement of upsampled pixel locations, and the other of the two input blocks (e.g. input block $1304_2$) comprises input pixels having locations corresponding to locations within even rows of the repeating quincunx arrangement of upsampled pixel locations. Representing the input pixels with two input blocks in this way means that the format in which the input pixels are provided to the pixel determination logic 1300 is denser than if the input pixels were received in one block (e.g. as block 302 shown in Figure 3). Increasing the density of the format in which the input pixels are received is beneficial since it reduces the bandwidth (i.e. the amount of data being transferred) to the pixel determination logic 1300, and the amount of storage required at the input. The pixel determination logic 1300 comprises six pairs of kernels 1306, wherein each pair of kernels 1306 comprises one kernel to be applied to the first input block $1304_1$ and another kernel to be applied to the second input block $1304_2$. The pixel determination logic 1300 also comprises two blocks of weighted sum logic 1308. The logic of the processing module comprising the pixel determination logic 1300 may be implemented in hardware, software, or a combination thereof. A hardware implementation normally provides for a reduced latency and power consumption compared to a software implementation. The pixel determination logic 1300 is likely to be used in the same manner a large number of times on each image being upsampled, and since latency is very important in, for example, real-time super resolution applications, it is likely that implementing the pixel determination logic 1300 in hardware (e.g. in fixed function circuitry) will be preferable to implementing the logic in software. However, a software implementation is still possible and may be preferable in some situations.

Figure 14 is a flow chart for a method of determining a block of sharpened upsampled pixels using the pixel determination logic 1300. In step S1402 the two input blocks of input pixels $1304_1$ and $1304_2$ are received at the pixel determination logic 1300. The pixel determination logic 1300 then determines each of the sharpened upsampled pixels in the block of sharpened upsampled pixels 1310 by performing steps S1404, S1406 and S1408.

For each sharpened upsampled pixel in the block of sharpened upsampled pixels 1310 the pixel determination logic 1300: (i) in step S1404, applies a first set of one or more kernels to input pixels of the first input block $1304_1$; (ii) in step S1406, applies a second set of one or more kernels to input pixels of the second input block $1304_2$; and (iii) in step S1408, combines the results of applying the first set of one or more kernels and applying the second set of one or more kernels to determine the sharpened upsampled pixel. Each of the kernels 1306 is configured to perform upsampling and sharpening. In other words, sharpening and upsampling (e.g. interpolation) are performed in a single linear kernel. This is possible because the two operations (interpolation and sharpening) are linear operations so can be composed (or "folded") into a single linear operation, which is advantageous because it avoids the need for costly intermediate buffering of data before a separate sharpening pass. As described in more detail below, one of the kernels of the first set (that is applied to input pixels of the first input block $1304_1$) has a first subset of values of a full sharp upsampling kernel and one of the kernels of the second set (that is applied to input pixels of the second input block $1304_2$) has a second subset of values of the full sharp upsampling kernel. As described below, the full sharp upsampling kernel has values which correspond to the upsampled pixel locations and which represent a result of convolving an interpolation kernel with a sharpening kernel. The first subset of values of the full sharp upsampling kernel (that are in said one of the kernels of the first set that is applied to input pixels of the first input block $1304_1$) includes the values of the full sharp upsampling kernel at locations corresponding to the locations of the input pixels in the first input block $1304_1$; and the second subset of values of the full sharp upsampling kernel (that are in said one of the kernels of the second set that is applied to input pixels of the second input block $1304_2$) includes the values of the full sharp upsampling kernel at locations corresponding to the locations of the input pixels in the second input block $1304_2$.

In step S1410 the block of sharpened upsampled pixels 1310 is output from the pixel determination logic 1300. In some systems this could be the end of the processing on the block of upsampled pixels 1310 and it could be output from the processing module. In other examples, e.g. as described below, adaptive sharpening may be applied to the upsampled pixel values (e.g. by blending with non-sharp upsampled pixel values) before they are output from the processing module.

For determining the sharpened upsampled pixel value at a location corresponding to the location of an input pixel of the first or second input blocks (e.g. for the top left upsampled pixel (denoted "TL" in Figure 13) and for the bottom right upsampled pixel (denoted "BR" in Figure 13) in the block of upsampled pixels 1310): (i) the first set of one or more kernels (that is applied to input pixels of the first input block $1304_1$ in step S1404) comprises a first single kernel which is applied to the input pixels of the first input block $1304_1$; (ii) the second set of one or more kernels (that is applied to input pixels of the second input block $1304_2$ in step S1406) comprises a second single kernel which is applied to the input pixels of the second input block $1304_2$; and (iii) the combining of the results in step S1408 comprises summing the result of applying the first single kernel to the input pixels of the first input block $1304_1$ with the result of applying the second single kernel to the input pixels of the second input block $1304_2$. For these cases, i.e. for determining a sharpened upsampled pixel at a location corresponding to the location of an input pixel of the first or second input block, the interpolation kernel that is convolved with the sharpening kernel is a bilinear interpolation kernel configured for use with the input blocks described herein which represent the input pixels in the repeating quincunx arrangement.

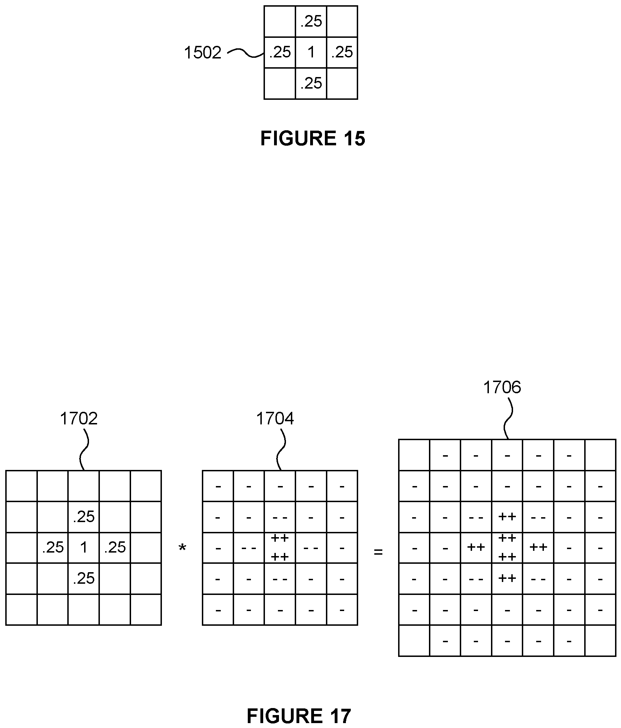

Figure 15 shows a bilinear interpolation kernel 1502 for use with input pixels which have locations corresponding to a repeating quincunx arrangement. In particular, as shown in Figure 15, the bilinear interpolation kernel 1502 can be represented as

$$\begin{bmatrix} 0 & 0.25 & 0 \\ 0.25 & 1 & 0.25 \\ 0 & 0.25 & 0 \end{bmatrix}$$

. If the bilinear 0 0.25 0 interpolation kernel 1502 is applied and centred at a location of one of the input pixels in the repeating quincunx arrangement then it is equivalent to applying an identity kernel at that location (because the values immediately horizontally adjacent and immediately vertically adjacent to that location in the repeating quincunx arrangement are zero), with the effect of "passing through" that value to the output. If the bilinear interpolation kernel 1502 is applied and centred at a location that falls between locations of the input pixels in the repeating quincunx arrangement then it is equivalent to applying an average of the four adjacent input pixels (because the kernel is centred on a zero value in the repeating quincunx arrangement).

As mentioned above, the full sharp upsampling kernel has values which represent a result of convolving an interpolation kernel (e.g. the bilinear interpolation kernel 1502) with a sharpening kernel. The sharpening kernel may be different in different examples. For example, the sharpening kernel may be an unsharp mask kernel or a truncated sinc kernel (e.g. a Lanczos kernel), which are known sharpening kernels. In the main examples described below the sharpening kernel is an unsharp mask kernel.

Unsharp masking is a known technique for applying sharpening, and is described here by way of an example method for constructing a sharpening, or combined sharpening and upsampling, kernel or kernels. Conceptually, according to an unsharp masking technique: (i) a blurred version of an input image is determined, e.g. by convolving the image with a Gaussian kernel, wherein the width (i.e. the number of taps) of the Gaussian kernel and the standard deviation (or "variance" or "spread") of the Gaussian function represented by the Gaussian kernel define the amount of blurring that is applied, (ii) the difference between original input image and the blurred image is determined, and (iii) the determined difference is multiplied by some scale factor and added to the original input image to determine the sharpened image. In this way the "unsharp" (i.e. blurred) version of the image is used to create a "mask" for addition to the input image, which is why the sharpening technique is called "unsharp masking". Unsharp masking is an effective way of sharpening an image but it introduces 'overshoot' artefacts around high-contrast edges. Rather than using the three-step process described above for computing an unsharp mask, the same result may be arrived at by a single application of an unsharp mask kernel, $K(x)$, constructed as $(I(x) - G(x; \sigma^2))s + I(x)$, where $x$ is a spatial location, $I$ is the identity kernel (i.e. a kernel with a central "1" surrounded by zeroes), G is the Gaussian kernel from step (i) above which represents a Gaussian function having a variance $\sigma^2$, and $s$ is the scale factor from step (iii) above. Furthermore, this kernel may be convolved with an upsampling kernel (e.g. a bilinear interpolation kernel as described above) to arrive at a kernel that may be used to perform sharpening and upsampling in a single application. Note that there are two free parameters here, namely the scale factor $s$ and the variance $\sigma^2$ of the Gaussian kernel $G$, which in some implementations may be exposed as tuneable parameters, and in others (as in the following example) may be "baked into" the choice of fixed weights in the kernels for economy, simplicity, and ease of implementation. The variance, $\sigma^2$, governs the spatial extent of the sharpening effect, and $s$ governs the strength of the sharpening effect. The unsharp mask kernel $K$, the identity kernel $I$ and the Gaussian kernel $G$ are the same size and shape as each other, e.g. they may each be of size $p \times p$ where $p$ is an integer. It will be appreciated that this is one means by which a sharpening kernel may be constructed, and that other means will be apparent to one skilled in the art.

As an example, if the scale factor $s$ has a value of 1, then the unsharp mask kernel, $K$, has a plurality of unsharp mask values, wherein the unsharp mask value $K(x)$ at a position, $x$, relative to the centre of the unsharp mask kernel has a value given by $K(x) = I(x) + (I(x) - G(x; \sigma^2))$, where $I(x)$ is a value at position $x$ within the identity kernel representing the identity function, and where $G(x; \sigma^2)$ is a value at position $x$ within the Gaussian kernel representing a Gaussian function.

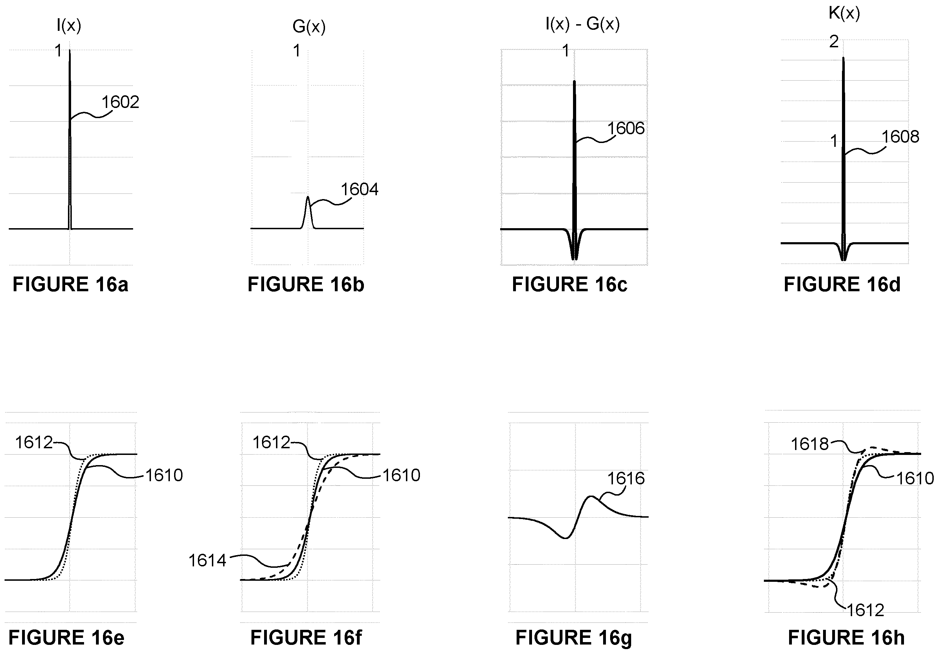

Figure 16a illustrates an identity function 1602 for the identity kernel, $I$. The identity kernel has a value of 1 at the central position and a value of 0 at every other position. The sum of the values of the identity kernel is 1 so the identity kernel is normalised.

Figure 16b illustrates a Gaussian function 1604 for the Gaussian kernel, $G$. The Gaussian function is of the form $G(x; \sigma^2) = Ae^{-\frac{x^2}{2\sigma^2}}$, where $\sigma^2$ is a parameter representing the spatial variance of the Gaussian function, $A$ is a scalar value, and $x$ is a spatial location. As an example, $A$ may be 1. The sum of the values of the Gaussian kernel is 1 so the Gaussian kernel is normalised.

Figure 16c illustrates the difference 1606 between the identity function 1602 and the Gaussian function 1604 for a difference kernel, $(I - G)$. Since $I$ and $G$ are both normalised, the sum of the values of the difference kernel is 0.

Figure 16d illustrates an unsharp mask function 1608 for the unsharp mask kernel, $K$. As described above, $K = I + (I - G)$ in an example in which the scale factor $s$ has a value of 1. Since $I$ and $G$ are both normalised, the sum of the values of the unsharp mask kernel is 1, so the unsharp mask kernel is normalised. The unsharp mask value has a large positive value (e.g. a value above 1) at the central position and has small negative values close to the central position which decrease in magnitude further from the central position.

Figure 16e shows a graph illustrating the brightness 1610 of an image across an edge in the upsampled pixels representing the image. The dotted line 1612 in the graph shown in Figure 16e illustrates an ideal brightness across a sharper version of the edge. In other words, when the edge in the upsampled pixels is sharpened, it would be ideal if the brightness profile could be changed from line 1610 to line 1612.

Figure 16f shows the graph of Figure 16e with an additional dashed line 1614 to illustrate the brightness across a smoothed version of the edge in the image when the upsampled pixels have been smoothed using the Gaussian kernel, $G$. In other words, if the Gaussian kernel (with the Gaussian function 1604 shown in Figure 16b) was applied to the upsampled pixels, the brightness profile would change from line 1610 to line 1614. It can be seen in Figure 16f that this will blur the edge rather than sharpen it.

Figure 16g illustrates the result of applying the difference kernel (with the difference function 1606 shown in Figure 16c) to the upsampled pixels representing the edge in the image. In other words, if the difference kernel were applied to the upsampled pixels, the brightness profile would change from line 1610 to line 1616.

Figure 16h shows the graph of Figure 16e with an additional dashed line 1618 to illustrate the brightness across a sharpened version of the edge in the image when the image has been sharpened using the unsharp mask kernel, *K.* In other words, if the unsharp mask kernel (with the unsharp mask function 1608 shown in Figure 16d) was applied to the upsampled pixels, the brightness profile would change from line 1610 to line 1618. It can be seen in Figure 16h that this will sharpen the edge such that on the edge the line 1618 is very close to the ideal sharpened line 1612. However, it can also be seen that the unsharp mask kernel introduces 'overshoot' near to the edge, which can be seen in Figure 16h where the line 1618 deviates from the ideal line 1612 either side of the edge.

Figure 17 illustrates a first full sharp upsampling kernel 1706 as a result of convolving a bilinear interpolation kernel 1702 with a sharpening kernel 1704. Convolving this full sharp upsampling kernel with the input quincunx image, substituting zero for missing input pixel values, would result in a sharpened, bilinear interpolated image. In this example, the sharpening kernel 1704 is an unsharp mask kernel (e.g. with the unsharp mask function 1608 shown in Figure 16d). In Figure 17, the bilinear interpolation kernel 1702 and the sharpening kernel 1704 are 5x5 kernels. In particular, the bilinear interpolation kernel 1502 is shown in Figure 15 as a 3x3 kernel and this is padded up to the 5x5 kernel 1702 shown in Figure 17 by adding values of zero around the edges of the 3x3 bilinear interpolation kernel 1502. Furthermore, as described above, the sharpening kernel 1704 has a large positive value (e.g. a value above 1, denoted "++++" in Figure 17) at the central position and has small negative values close to the central position which decrease in magnitude further from the central position (denoted "- -" and "-" in Figure 17). Figure 17 does not show the exact values in the sharpening kernel 1704 or the full sharp upsampling kernel 1706, but it is to be understood that positive values are shown with "+" symbols and negative values are shown with "-" symbols, wherein a value denoted "+++ +" has a larger magnitude than a value denoted "++", and wherein a value denoted "- -" has a larger magnitude than a value denoted "-". It will be understood that this notation is indicative of the general shape of linear spatially invariant sharpening kernels, and that variations on this are possible, for example a more "spread out" central maximum.

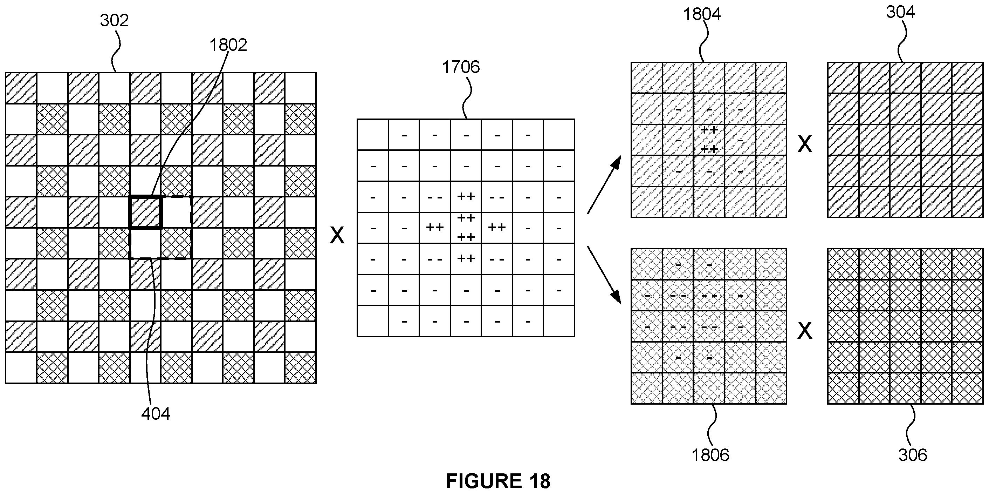

Figure 18 illustrates how the full sharp upsampling kernel 1706 can be deconstructed into: (i) a kernel 1804 to be applied to the first input block of input pixels 304, and (ii) a kernel 1806 to be applied to the second input block of input pixels 306, for determining the sharpened upsampled pixel in the top left of the block of sharpened upsampled pixels 404. The sharpened upsampled pixel in the top left of the block of sharpened upsampled pixels 404 has a location which corresponds to the location of one of the input pixels 1802, in particular one of the input pixels of the first input block 304. Conceptually, the full sharp upsampling kernel 1706 is to be applied to the input pixels. As described above, the input pixels have locations corresponding to a repeating quincunx arrangement (i.e. a chequer board pattern) of upsampled pixel locations, e.g. as denoted 302 in Figures 3 and 18. If the full sharp upsampling kernel 1706 were applied to the input pixels 302 having the repeating quincunx arrangement then the values of the full sharp upsampling kernel 1706 that correspond with zero values in the repeating quincunx arrangement of input pixels will not contribute to the result, and can therefore be ignored. As described above with reference to Figure 3, the input pixels may be received in two input blocks 304 and 306, where the first input block 304 comprises the input pixels having locations corresponding to locations within odd rows of the repeating quincunx arrangement of upsampled pixel locations (illustrated with line hatching), and the second input block 306 comprises the input pixels having locations corresponding to locations within even rows of the repeating quincunx arrangement of upsampled pixel locations (illustrated with cross-hatching).

If the kernel 1706 were applied to the input pixels 302 for determining the sharpened upsampled pixel in the top left of the block of sharpened upsampled pixels 404 then the kernel 1706 would be centred on the input pixel 1802 and then values of the kernel 1706 would be multiplied with input pixels at corresponding surrounding locations and the results would be summed. It can be seen that doing this would mean that values of the kernel 1706 would be multiplied with some, but not all, of the input pixels of the first input block 304 shown with line hatching in Figure 18. The kernel 1804 includes those values of kernel 1706 that would be multiplied with input pixels of the first input block 304. Furthermore, values of the kernel 1706 would be multiplied with some, but not all, of the input pixels of the second input block 306 shown with cross hatching in Figure 18, and the kernel 1806 includes those values of kernel 1706 that would be multiplied with input pixels of the second input block 306. Therefore, applying kernel 1706 to the input pixels 302 for determining the sharpened upsampled pixel in the top left of the block of sharpened upsampled pixels 404 will give the same result as summing the results of applying kernel 1804 to the input block 304 and applying kernel 1806 to the input block 306.

Therefore, for determining the sharpened upsampled pixel in the top left of the block of sharpened upsampled pixels 404, step S1404 comprises applying the kernel 1804 to the first input block 304, step S1406 comprises applying the kernel 1806 to the second input block 306, and step S1408 comprises summing the results of steps S1404 and S1406. The kernels 1804 and 1806 correspond to the pair of kernels $1306_{TL}$ in Figure 13.

Figure 18 shows the kernels 1804 and 1806 being padded with zeros up to 5x5 kernels. In a practical application, the zero padding may not be implemented in hardware (since a multiply by a fixed zero is always zero). The zero padding shown in Figure 18 is for the clarity of this explanation, as a way of indicating the correct alignment of the kernels with respect to the 5x5 input blocks to which they will be applied. In other words, the kernel 1804 may be implemented as a 3x3 kernel (with the zero padding around the top, bottom, left and right edges of the 5x5 kernel 1804 shown in Figure 18 removed) which can then be applied to the central 3x3 region of the 5x5 input block 304. Similarly, the kernel 1806 may be implemented as a 4x4 kernel (with the zero padding around the bottom and right edges of the 5x5 kernel 1806 shown in Figure 18 removed) which can then be applied to the top left 4x4 region of the 5x5 input block 306.

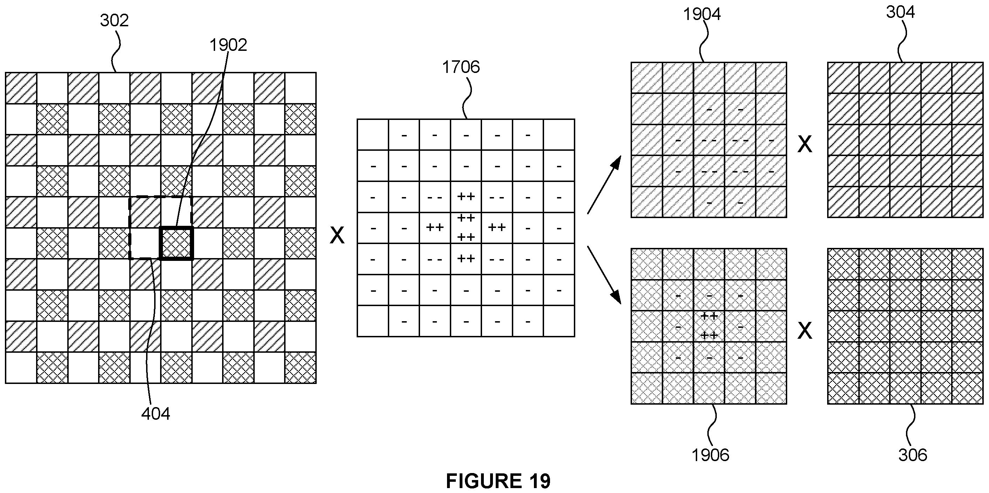

Figure 19 illustrates how the full sharp upsampling kernel 1706 can be deconstructed into: (i) a kernel 1904 to be applied to the first input block of input pixels 304, and (ii) a kernel 1906 to be applied to the second input block of input pixels 306, for determining the sharpened upsampled pixel in the bottom right of the block of sharpened upsampled pixels 404. The sharpened upsampled pixel in the bottom right of the block of sharpened upsampled pixels 404 has a location which corresponds to the location of one of the input pixels 1902, in particular one of the input pixels of the second input block 306.

If the kernel 1706 were applied to the input pixels 302 for determining the sharpened upsampled pixel in the bottom right of the block of sharpened upsampled pixels 404 then the kernel 1706 would be centred on the input pixel 1902 and values of the kernel 1706 would be multiplied with input pixels at corresponding surrounding locations and the results would be summed. It can be seen that doing this would mean that values of the kernel 1706 would be multiplied with some, but not all, of the input pixels of the first input block 304 shown with line hatching in Figure 19. The kernel 1904 includes those values of kernel 1706 that would be multiplied with input pixels of the first input block 304. Furthermore, values of the kernel 1706 would be multiplied with some, but not all, of the input pixels of the second input block 306 shown with cross hatching in Figure 19, and the kernel 1906 includes those values of kernel 1706 that would be multiplied with input pixels of the second input block 306. Therefore, applying kernel 1706 to the input pixels 302 for determining the sharpened upsampled pixel in the bottom right of the block of sharpened upsampled pixels 404 will give the same result as summing the results of applying kernel 1904 to the input block 304 and applying kernel 1906 to the input block 306.

Therefore, for determining the sharpened upsampled pixel in the bottom right of the block of sharpened upsampled pixels 404, step S1404 comprises applying the kernel 1904 to the first input block 304, step S1406 comprises applying the kernel 1906 to the second input block 306, and step S1408 comprises summing the results of steps S1404 and S1406. The kernels 1904 and 1906 correspond to the pair of kernels 1306$_{BR}$ in Figure 13.

Figure 19 shows the kernels 1904 and 1906 being padded with zeros up to 5x5 kernels. As described above, in a practical application, the zero padding may not be implemented in hardware (since a multiply by a fixed zero is always zero). The zero padding shown in Figure 19 is for the clarity of this explanation, as a way of indicating the correct alignment of the kernels with respect to the 5x5 input blocks to which they will be applied. In other words, the kernel 1904 may be implemented as a 4x4 kernel (with the zero padding around the top and left edges of the 5x5 kernel 1904 shown in Figure 19 removed) which can then be applied to the bottom right 4x4 region of the 5x5 input block 304. Similarly, the kernel 1906 may be implemented as a 3x3 kernel (with the zero padding around the top, bottom, left and right edges of the 5x5 kernel 1906 shown in Figure 19 removed) which can then be applied to the central 3x3 region of the 5x5 input block 306.

Figures 18 and 19 show how sharpened upsampled pixels can be determined at locations that correspond to locations of the input pixels (e.g. at the top left and bottom right of the block of sharpened upsampled pixels 404). We now describe how a sharpened upsampled pixel can be determined at a location which falls between corresponding locations of input pixels of the first and second input blocks (e.g. at the top right or bottom left of the block of sharpened upsampled pixels 404). To determine a value of a sharpened upsampled pixel at these locations horizontal and vertical kernels are applied to each of the input blocks and the results can be combined (e.g. summed) in accordance with the weighting parameters (e.g. $a$ and $b$). For these output pixel locations, the previously used isotropic bilinear interpolation kernel is not suitable, so directional interpolation kernels are instead used, as described below.

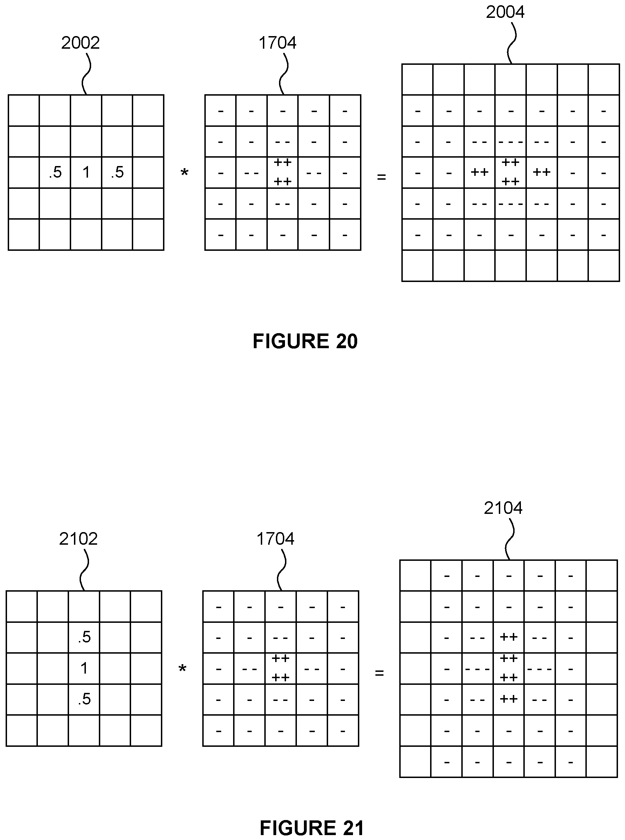

A horizontal sharp upsampling kernel can be determined as a result of convolving a linear horizontal interpolation kernel with a sharpening kernel. For example, a linear horizontal interpolation kernel may be represented as [0.5 1 0.5]. Figure 20 illustrates a full horizontal sharp upsampling kernel 2004 as a result of convolving a linear horizontal interpolation kernel 2002 with a sharpening kernel 1704. In this example, the sharpening kernel 1704 is an unsharp mask kernel (e.g. with the unsharp mask function 1608 shown in Figure 16d). In Figure 20, the linear horizontal interpolation kernel 2002 and the sharpening kernel 1704 are 5x5 kernels. In particular, the linear horizontal interpolation kernel described above as a 1x3 kernel is padded up to the 5x5 kernel 2002 shown in Figure 20 by positioning the values of the 1x3 linear horizontal interpolation kernel in the centre of the 5x5 kernel and adding values of zero to pad it up to the 5x5 kernel 2002. As described above, the sharpening kernel 1704 has a large positive value (e.g. a value above 1, denoted "++++" in Figure 17) at the central position and has small negative values close to the central position which decrease in magnitude further

13.

from the central position (denoted "- -" and "-" in Figure 17).

Similarly, a vertical sharp upsampling kernel can be determined as a result of convolving a linear vertical interpolation kernel with a sharpening kernel. For example, a linear vertical interpolation kernel may be represented as $\begin{bmatrix} 0.5 \\ 1 \\ 0.5 \end{bmatrix}$ . Figure 21 illustrates a full vertical sharp upsampling kernel 2104 as a result of convolving a linear vertical interpolation kernel 2102 with the sharpening kernel 1704. In this example, the sharpening kernel 1704 is an unsharp mask kernel (e.g. with the unsharp mask function 1608 shown in Figure 16d). In Figure 21, the linear vertical interpolation kernel 2102 and the sharpening kernel 1704 are 5x5 kernels. In particular, the linear vertical interpolation kernel described above as a 3x1 kernel is padded up to the 5x5 kernel 2102 shown in Figure 21 by positioning the values of the 3x1 linear vertical interpolation kernel in the centre of the 5x5 kernel and adding values of zero to pad it up to the 5x5 kernel 2102. It is noted that the full vertical sharp upsampling kernel 2104 is the same as the full horizontal sharp upsampling kernel 2004, but rotated through 90°.

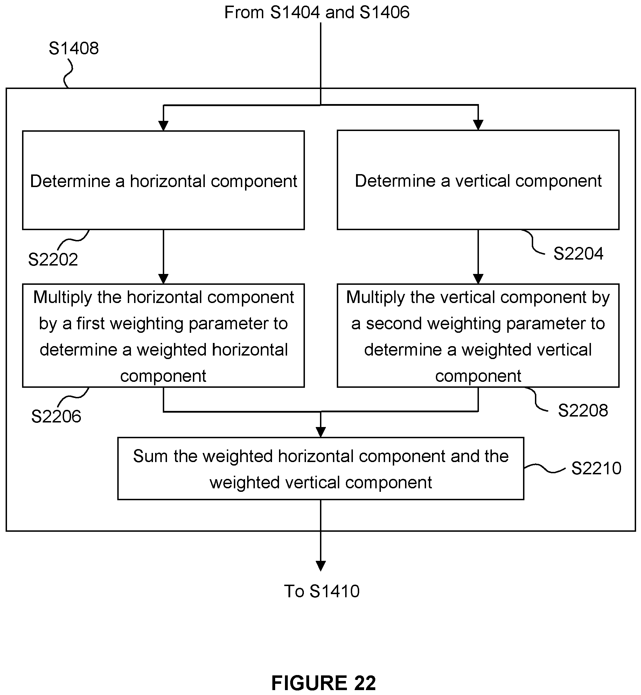

For determining a sharpened upsampled pixel at a location which falls between corresponding locations of input pixels of the first and second input blocks (e.g. at the top right or bottom left of the block of sharpened upsampled pixels 404), step S1404 comprises applying a first horizontal kernel and a first vertical kernel to input pixels of the first input block 304 (i.e. the first set of one or more kernels that are applied in step S1404 comprises a first horizontal kernel and a first vertical kernel), and step S1406 comprises applying a second horizontal kernel and a second vertical kernel to input pixels of the second input block 306 (i.e. the second set of one or more kernels that are applied in step S1406 comprises a second horizontal kernel and a second vertical kernel). Furthermore, for determining a sharpened upsampled pixel at a location which falls between corresponding locations of input pixels of the first and second input blocks (e.g. at the top right or bottom left of the block of sharpened upsampled pixels 404), step S1408 (of combining the results of steps S1404 and S1406) comprises the steps shown in Figure 22.

Figure 22 is a flow chart for a method of combining the results of applying kernels to the input blocks to determine a sharpened upsampled pixel at a location which falls between corresponding locations of the input pixels. In particular, in step S2202 the pixel determination logic 1300 determines a horizontal component by summing the result of applying the first horizontal kernel to the input pixels of the first input block 304 (in step S1404) with the result of applying the second horizontal kernel to the input pixels of the second input block 306 (in step S1406). In step S2204 the pixel determination logic 1300 determines a vertical component by summing the result of applying the first vertical kernel to the input pixels of the first input block 304 (in step S1404) with the result of applying the second vertical kernel to the input pixels of the second input block 306 (in step S1406). Steps S2202 and S2204 may be performed in series or in parallel. The pixel determination logic 1300 can then combine the determined horizontal and vertical components (e.g. by performing steps S2206, S2208 and S2210) to determine the sharpened upsampled pixel.

For example, in step S2206 the pixel determination logic 1300 multiplies the horizontal component (determined in step S2202) by a first weighting parameter (e.g. the weighting parameter *a* described above) to determine a weighted horizontal component. In step S2208 the pixel determination logic 1300 multiplies the vertical component (determined in step S2204) by a second weighting parameter (e.g. the weighting parameter *b* described above) to determine a weighted vertical component. Steps S2206 and S2208 may be performed in series or in parallel. In step S2210 the pixel determination logic sums the weighted horizontal component and the weighted vertical component to determine the sharpened upsampled pixel.

As described above, the weighting parameters are determined by analysing the input pixels of the first and second input blocks 304 and 306, and are indicative of relative horizontal and vertical variation of the input pixels. For example, as described above, an implementation of a neural network 900 may be used to determine an indication of the weighting parameters to be indicative of the relative horizontal and vertical variation of the input pixels. Using these weighting parameters to weight the sum of the horizontal and vertical components reduces blurring and other artefacts in the sharpened upsampled pixels representing anisotropic image features, such as edges, texture and high frequency content.

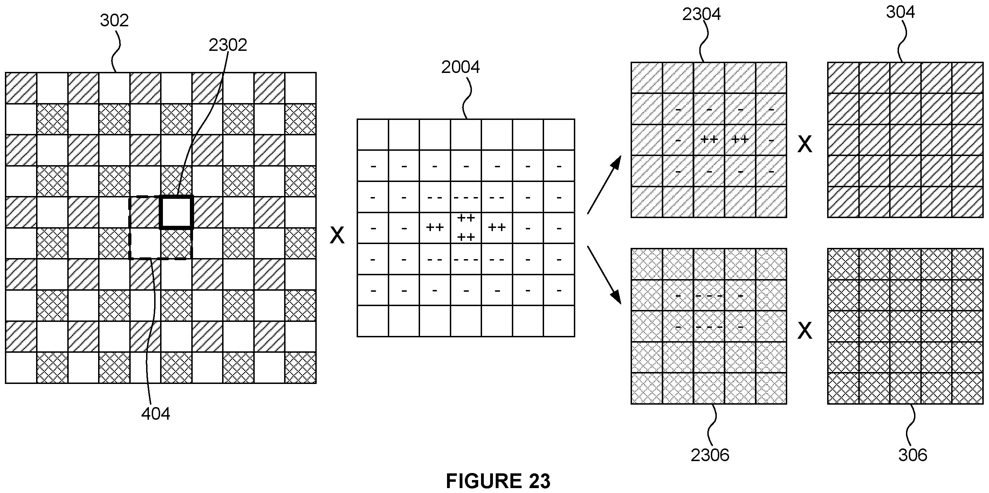

Figure 23 illustrates how the full horizontal sharp upsampling kernel 2004 can be deconstructed into: (i) a kernel 2304 to be applied to the first input block of input pixels 304, and (ii) a kernel 2306 to be applied to the second input block of input pixels 306, for use in determining the horizontal component for the sharpened upsampled pixel in the top right of the block of sharpened upsampled pixels 404. The sharpened upsampled pixel in the top right of the block of sharpened upsampled pixels 404 has a location which corresponds to a location 2302 which is horizontally adjacent to two input pixels of the first input block 304 and vertically adjacent to two input pixels of the second input block 306.

If the kernel 2004 were applied to the input pixels 302 for determining the horizontal component for the sharpened upsampled pixel in the top right of the block of sharpened upsampled pixels 404 (in step S2202) then the kernel 2004 would be centred on the location 2302 and values of the kernel 2004 would be multiplied with input pixels at corresponding surrounding locations and the results would be summed. It can be seen that doing this would mean that values of the kernel 2004 would be multiplied with some, but not all, of the input pixels of the first input block 304 shown with line hatching in Figure 23. The kernel 2304 includes those values of kernel 2004 that would be multiplied with input pixels of the first input block 304. Furthermore, values of the kernel 2004 would be multiplied with some, but not all, of the input pixels of the second input block 306 shown with cross hatching in Figure 23, and the kernel 2306 includes those values of kernel 2004 that would be multiplied with input pixels of the second input block 306. In other words, the first horizontal kernel 2304 has a first subset of values of the full horizontal sharp upsampling kernel 2004 (i.e. the values of the full horizontal sharp upsampling kernel 2004 at locations corresponding to the locations of the input pixels in the first input block 304), and the second horizontal kernel 2306 has a second subset of values of the full horizontal sharp upsampling kernel 2004 (i.e. the values of the full horizontal sharp upsampling kernel 2004 at locations corresponding to the locations of the input pixels in the second input block 306). Applying kernel 2004 to the input pixels 302 for determining the horizontal component for the sharpened upsampled pixel in the top right of the block of sharpened upsampled pixels 404 will give the same result as summing the results of applying kernel 2304 to the input block 304 and applying kernel 2306 to the input block 306.

Figure 23 shows the kernels 2304 and 2306 being padded with zeros up to 5x5 kernels. As described above, in a practical application, the zero padding may not be implemented in hardware (since a multiply by a fixed zero is always zero). The zero padding shown in Figure 23 is for the clarity of this explanation, as a way of indicating the correct alignment of the kernels with respect to the 5x5 input blocks to which they will be applied. In other words, the kernel 2304 may be implemented as a 3x4 kernel (with the zero padding around the top, bottom and left edges of the 5x5 kernel 2304 shown in Figure 23 removed) which can then be applied to the corresponding 3x4 region of the 5x5 input block 304, which is on the right of the second, third and fourth rows of input pixels within the input block 304. Similarly, the kernel 2306 may be implemented as a 2x3 kernel (with the zero padding around the top, left and right edges and along the bottom two rows of the 5x5 kernel 2306 shown in Figure 23 removed) which can then be applied to the corresponding 2x3 region of the 5x5 input block 306, which is in the second, third and fourth columns of the second and third rows of input pixels within the input block 306. The kernels 2304 and 2306 correspond to the pair of kernels 1306$_{HTR}$ in Figure 13.

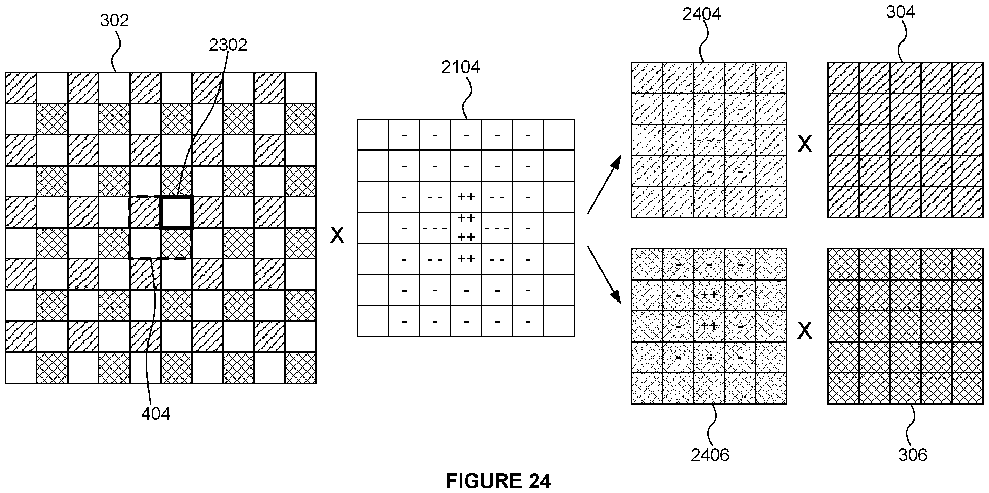

Figure 24 illustrates how the full vertical sharp upsampling kernel 2104 can be deconstructed into: (i) a kernel 2404 to be applied to the first input block of input pixels 304, and (ii) a kernel 2406 to be applied to the second input block of input pixels 306, for use in determining the vertical component for the sharpened upsampled pixel in the top right of the block of sharpened upsampled pixels 404. The sharpened upsampled pixel in the top right of the block of sharpened upsampled pixels 404 has a location which corresponds to the location 2302.

If the kernel 2104 were applied to the input pixels 302 for determining the vertical component for the sharpened upsampled pixel in the top right of the block of sharpened upsampled pixels 404 then the kernel 2104 would be centred on the location 2302 and values of the kernel 2104 would be multiplied with input pixels at corresponding surrounding locations and the results would be summed. It can be seen that doing this would mean that values of the kernel 2104 would be multiplied with some, but not all, of the input pixels of the first input block 304 shown with line hatching in Figure 24. The kernel 2404 includes those values of kernel 2104 that would be multiplied with input pixels of the first input block 304. Furthermore, values of the kernel 2104 would be multiplied with some, but not all, of the input pixels of the second input block 306 shown with cross hatching in Figure 24, and the kernel 2406 includes those values of kernel 2104 that would be multiplied with input pixels of the second input block 306. In other words, the first vertical kernel 2404 has a first subset of values of the full vertical sharp upsampling kernel 2104 (i.e. the values of the full vertical sharp upsampling kernel 2104 at locations corresponding to the locations of the input pixels in the first input block 304), and the second vertical kernel 2406 has a second subset of values of the full vertical sharp upsampling kernel 2104 (i.e. the values of the full vertical sharp upsampling kernel 2104 at locations corresponding to the locations of the input pixels in the second input block 306). Applying kernel 2104 to the input pixels 302 for determining the vertical component for the sharpened upsampled pixel in the top right of the block of sharpened upsampled pixels 404 will give the same result as summing the results of applying kernel 2404 to the input block 304 and applying kernel 2406 to the input block 306.

Figure 24 shows the kernels 2404 and 2406 being padded with zeros up to 5x5 kernels. As described above, in a practical application, the zero padding may not be implemented in hardware. The zero padding shown in Figure 24 is for the clarity of this explanation, as a way of indicating the correct alignment of the kernels with respect to the 5x5 input blocks to which they will be applied. In other words, the kernel 2404 may be implemented as a 3x2 kernel (with the zero padding around the top, bottom and right edges and down the leftmost two columns of the 5x5 kernel 2406 shown in Figure 24 removed) which can then be applied to the corresponding 3x2 region of the 5x5 input block 304, which is in the third and fourth columns of the second, third and fourth rows of input pixels within the input block 304. Similarly, the kernel 2406 may be implemented as a 4x3 kernel (with the zero padding around the bottom, left and right edges of the 5x5 kernel 2404 shown in Figure 24 removed) which can then be applied to the corresponding 4x3 region of the 5x5 input block 306, which is at the top of the second, third and fourth columns of input pixels within the input block 306. The kernels 2404 and 2406 correspond to the pair of kernels $1306_{VTR}$ in Figure 13.

As described above, steps S2206, S2208 and S2210 are performed for determining the sharpened upsampled pixel in the top right of the block of sharpened upsampled pixels 404, wherein: (i) step S2206 comprises multiplying the horizontal component (determined as described above with reference to Figure 23) by the first weighting parameter, $a$, to determine a weighted horizontal component; (ii) step S2208 comprises multiplying the vertical component (determined as described above with reference to Figure 24) by the second weighting parameter, $b$, to determine a weighted vertical component; and (iii) step S2210 comprises summing the weighted horizontal component and the weighted vertical component determined in steps S2206 and S2208 to determine the sharpened upsampled pixel in the top right of the block of sharpened upsampled pixels 404.

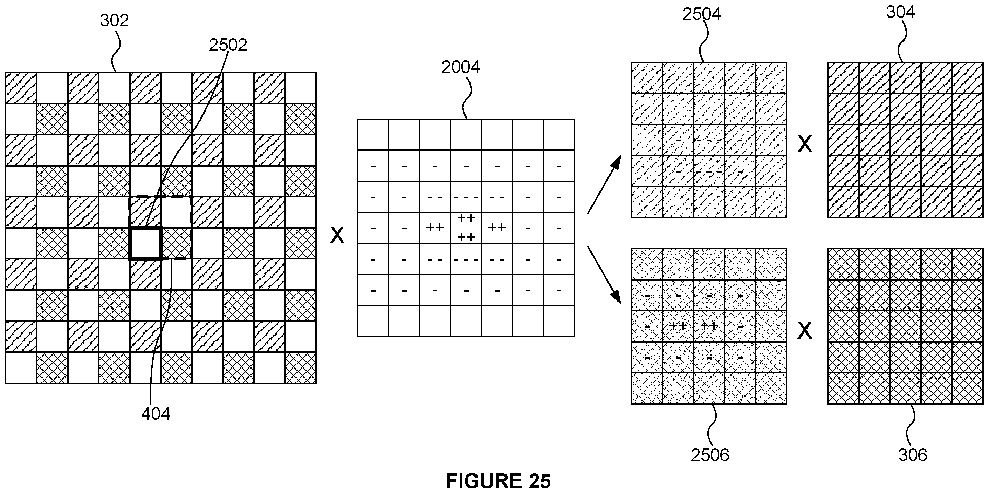

Figure 25 illustrates how the full horizontal sharp upsampling kernel 2004 can be deconstructed into: (i) a kernel 2504 to be applied to the first input block of input pixels 304, and (ii) a kernel 2506 to be applied to the second input block of input pixels 306, for use in determining the horizontal component for the sharpened upsampled pixel in the bottom left of the block of sharpened upsampled pixels 404. The sharpened upsampled pixel in the bottom left of the block of sharpened upsampled pixels 404 has a location which corresponds to a location 2502 which is vertically adjacent to two input pixels of the first input block 304 and horizontally adjacent to two input pixels of the second input block 306.

If the kernel 2004 were applied to the input pixels 302 for determining the horizontal component for the sharpened upsampled pixel in the bottom left of the block of sharpened upsampled pixels 404 then the kernel 2004 would be centred on the location 2502 and values of the kernel 2004 would be multiplied with input pixels at corresponding surrounding locations and the results would be summed. It can be seen that doing this would mean that values of the kernel 2004 would be multiplied with some, but not all, of the input pixels of the first input block 304 shown with line hatching in Figure 25. The kernel 2504 includes those values of kernel 2004 that would be multiplied with input pixels of the first input block 304. Furthermore, values of the kernel 2004 would be multiplied with some, but not all, of the input pixels of the second input block 306 shown with cross hatching in Figure 25, and the kernel 2506 includes those values of kernel 2004 that would be multiplied with input pixels of the second input block 306. In other words, the first horizontal kernel 2504 has a first subset of values of the full horizontal sharp upsampling kernel 2004 (i.e. the values of the full horizontal sharp upsampling kernel 2004 at locations corresponding to the locations of the input pixels in the first input block 304), and the second horizontal kernel 2506 has a second subset of values of the full horizontal sharp upsampling kernel 2004 (i.e. the values of the full horizontal sharp upsampling kernel 2004 at locations corresponding to the locations of the input pixels in the second input block 306). Applying kernel 2004 to the input pixels 302 for determining the horizontal component for the sharpened upsampled pixel in the bottom left of the block of sharpened upsampled pixels 404 will give the same result as summing the results of applying kernel 2504 to the input block 304 and applying kernel 2506 to the input block 306.

Figure 25 shows the kernels 2504 and 2506 being padded with zeros up to 5x5 kernels. As described above, in a practical application, the zero padding may not be implemented in hardware. The zero padding shown in Figure 25 is for the clarity of this explanation, as a way of indicating the correct alignment of the kernels with respect to the 5x5 input blocks to which they will be applied. In other words, the kernel 2504 may be implemented as a 2x3 kernel (with the zero padding around the bottom, left and right edges and along the top two rows of the 5x5 kernel 2504 shown in Figure 25 removed) which can then be applied to the corresponding 2x3 region of the 5x5 input block 304, which is in the second, third and fourth columns of the third and fourth rows of input pixels within the input block 304. Similarly, the kernel 2506 may be implemented as a 3x4 kernel (with the zero padding around the top, bottom and right edges of the 5x5 kernel 2506 shown in Figure 25 removed) which can then be applied to the corresponding 3x4 region of the 5x5 input block 306, which is on the left of the second, third and fourth rows of input pixels within the input block 306. The kernels 2504 and 2506 correspond to the pair of kernels $1306_{HBL}$ in Figure 13.

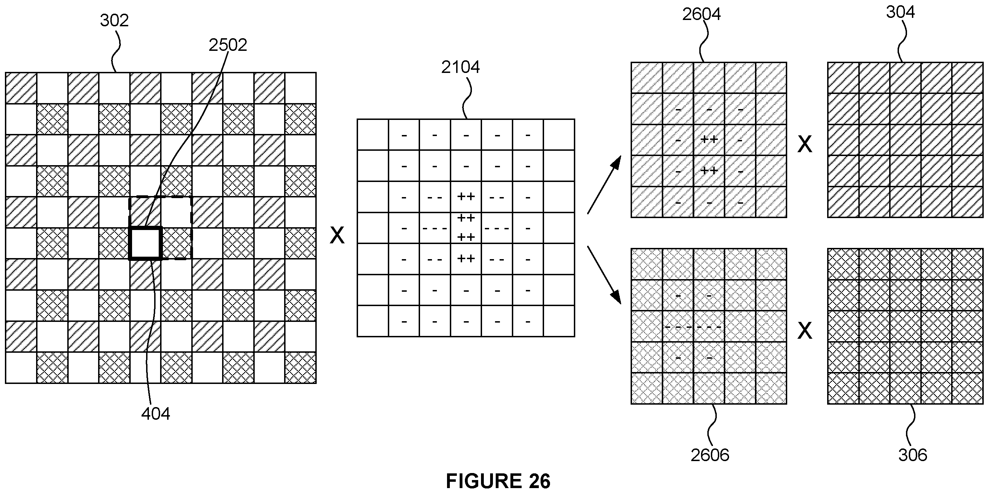

Figure 26 illustrates how the full vertical sharp upsampling kernel 2104 can be deconstructed into: (i) a kernel 2604 to be applied to the first input block of input pixels 304, and (ii) a kernel 2606 to be applied to the second input block of input pixels 306, for use in determining the vertical component for the sharpened upsampled pixel in the bottom left of the block of sharpened upsampled pixels 404. The sharpened upsampled pixel in the bottom left of the block of sharpened upsampled pixels 404 has a location which corresponds to the location 2502.

If the kernel 2104 were applied to the input pixels 302 for determining the vertical component for the sharpened upsampled pixel in the bottom left of the block of sharpened upsampled pixels 404 then the kernel 2104 would be centred on the location 2502 and values of the kernel 2104 would be multiplied with input pixels at corresponding surrounding locations and the results would be summed. It can be seen that doing this would mean that values of the kernel 2104 would be multiplied with some, but not all, of the input pixels of the first input block 304 shown with line hatching in Figure 26. The kernel 2604 includes those values of kernel 2104 that would be multiplied with input pixels of the first input block 304. Furthermore, values of the kernel 2104 would be multiplied with some, but not all, of the input pixels of the second input block 306 shown with cross hatching in Figure 26, and the kernel 2606 includes those values of kernel 2104 that would be multiplied with input pixels of the second input block 306. In other words, the first vertical kernel 2604 has a first subset of values of the full vertical sharp upsampling kernel 2104 (i.e. the values of the full vertical sharp upsampling kernel 2104 at locations corresponding to the locations of the input pixels in the first input block 304), and the second vertical kernel 2606 has a second subset of values of the full vertical sharp upsampling kernel 2104 (i.e. the values of the full vertical sharp upsampling kernel 2104 at locations corresponding to the locations of the input pixels in the second input block 306). Applying kernel 2104 to the input pixels 302 for determining the vertical component for the sharpened upsampled pixel in the bottom left of the block of sharpened upsampled pixels 404 will give the same result as summing the results of applying kernel 2604 to the input block 304 and applying kernel 2606 to the input block 306.

Figure 26 shows the kernels 2604 and 2606 being padded with zeros up to 5×5 kernels. As described above, in a practical application, the zero padding may not be implemented in hardware. The zero padding shown in Figure 26 is for the clarity of this explanation, as a way of indicating the correct alignment of the kernels with respect to the 5×5 input blocks to which they will be applied. In other words, the kernel 2604 may be implemented as a 4×3 kernel (with the zero padding around the top, left and right edges of the 5×5 kernel 2604 shown in Figure 26 removed) which can then be applied to the corresponding 4×3 region of the 5×5 input block 304, which is at the bottom of the second, third and fourth columns of input pixels within the input block 304. Similarly, the kernel 2606 may be implemented as a 3×2 kernel (with the zero padding around the top, bottom and left edges and down the rightmost two columns of the 5×5 kernel 2606 shown in Figure 26 removed) which can then be applied to the corresponding 3×2 region of the 5×5 input block 306, which is in the second and third columns of the second, third and fourth rows of input pixels within the input block 306. The kernels 2604 and 2606 correspond to the pair of kernels $1306_{VBL}$ in Figure 13.

As described above, steps S2206, S2208 and S2210 are performed for determining the sharpened upsampled pixel in the bottom left of the block of sharpened upsampled pixels 404, wherein: (i) step S2206 comprises multiplying the horizontal component (determined as described above with reference to Figure 25) by the first weighting parameter, $a$, to determine a weighted horizontal component; (ii) step S2208 comprises multiplying the vertical component (determined as described above with reference to Figure 26) by the second weighting parameter, $b$, to determine a weighted vertical component; and (iii) step S2210 comprises summing the weighted horizontal component and the weighted vertical component determined in steps S2206 and S2208 to determine the sharpened upsampled pixel in the bottom left of the block of sharpened upsampled pixels 404.

The sharpening applied by using an unsharp masking technique as described above is not 'adaptive' sharpening because it is the same for each block of input pixels. Sharpening is described as "adaptive" if the strength of it can be modified (modulated) for different blocks of input pixels, e.g. based on the values of the input pixels in the block of input pixels. For example, as described below, the sharpening applied to a block of input pixels for which upsampling is performed could be based on a measure of contrast for the block of input pixels. For example, output pixels may be sharpened to a greater extent in low contrast areas, and to a lesser extent in high contrast areas. This can help to reduce overshoot artefacts which are particularly noticeable when sharpening is applied to high-contrast image regions, whilst increasing apparent detail in low-contrast image regions by allowing low-contrast image regions to be sharpened to a greater extent.

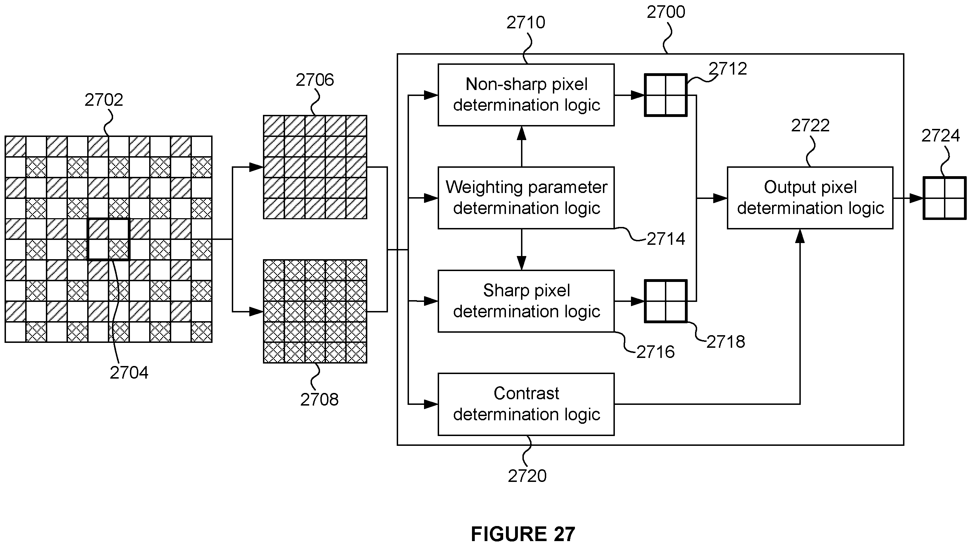

Figure 27 illustrates an adaptive sharpening unit 2700 configured to apply adaptive sharpening to input pixels 2702 representing an image region to determine a block of output pixels 2724, e.g. for use in implementing a super resolution technique. As described above, the input pixels 2702 are represented with two input blocks 2706 and 2708, which correspond to the input blocks 304 and 306 described above. In particular, one of the two input blocks (e.g. input block 2706) comprises input pixels having locations corresponding to locations within odd rows of a repeating quincunx arrangement of upsampled pixel locations, and the other of the two input blocks (e.g. input block 2708) comprises input pixels having locations corresponding to locations within even rows of the repeating quincunx arrangement of upsampled pixel locations. The block of output pixels 2724 corresponds to a location 2704 in the centre of the input pixels 2702. The adaptive sharpening unit 2700 comprises: non-sharp pixel determination logic 2710 (which may be considered to be a first processing module) configured to process the input pixels and output a block of non-sharpened upsampled pixels 2712 for the image region as described above; weighting parameter determination logic 2714 configured to determine one or more weighting parameters as described above (e.g. comprising the implementation of the neural network 900); sharp pixel determination logic 2716 (which may be considered to be a second processing module) configured to process the input pixels and output a block of sharpened upsampled pixels 2712 for the image region as described above; contrast determination logic 2720; and output pixel determination logic 2722. The logic of the adaptive sharpening unit 2700 may be implemented in hardware, software or a combination thereof. A hardware implementation normally provides for a reduced latency compared to a software implementation, at the cost of inflexibility of operation. The adaptive sharpening unit 2700 is likely to be used in the same manner a large number of times on each image being upsampled, and since latency is very important in, for example, real-time super resolution applications, it is likely that implementing the logic of the adaptive sharpening unit 2700 in hardware (e.g. in fixed function circuitry) will be preferable to implementing the logic in software. However, a software implementation is still possible and may be preferable in some situations.

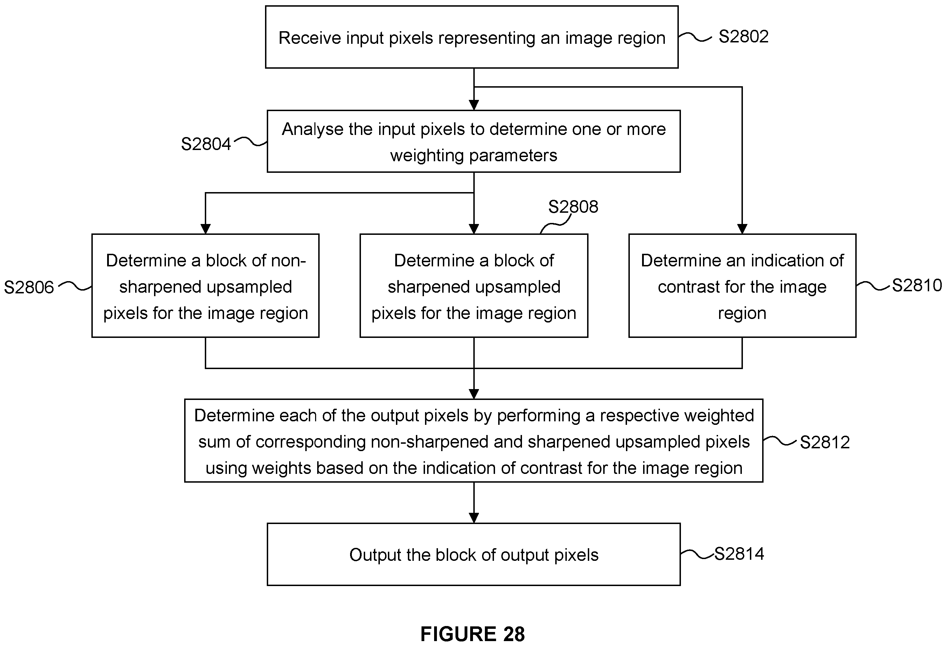

Figure 28 is a flow chart for a method of applying adaptive sharpening to the input pixels 2702 representing the image region to determine the block of output pixels 2724, e.g. for use in implementing a super resolution technique.

In step S2802 the input pixels of the input blocks 2706 and 2708 are received at the adaptive sharpening unit 2700. In the main examples described herein the input blocks 2706 and 2708 are 5x5 blocks of input pixels, but in other examples the shape and/or size of the block of input pixels may be different. The input blocks of input pixels are passed to the non-sharp pixel determination logic 2710, the weighting parameter determination logic 2714, the sharp pixel determination logic 2716 and the contrast determination logic 2720. Following step S2802, the method passes to steps S2804 and S2810. The majority of the operations performed in steps S2806 and S2808 can be performed in parallel with steps S2804 and S2810, with the directional interpolation being performed as a weighted sum controlled by the weighting parameters.

In step S2804 the weighting parameter determination logic 2714 analyses the input pixels to determine one or more weighting parameters indicative of the relative horizontal and vertical variation of the input pixels within the image region, as described above. For example, the weighting parameter determination logic 2714 may comprise an implementation of the neural network 900 described above. An indication of the weighting parameter(s) is provided to the non-sharp pixel determination logic 2710 and to the sharp pixel determination logic 2716.

In step S2806 the non-sharp pixel determination logic 2710 determines a block of non-sharpened upsampled pixels 2712 based on the input blocks of input pixels as described above. As described above, the non-sharpened upsampled pixels are determined in accordance with the relative horizontal and vertical variation of the input pixels within the image region indicated by the weighting parameter(s). The output pixels of the block of output pixels 2724 are upsampled pixels (relative to the input pixels 2702). The block of non-sharpened upsampled pixels 2712 represents a non-sharp version of the block of output pixels 2724. The block of non-sharpened upsampled pixels 2712 is passed to, and received by, the output pixel determination logic 2722.

In step S2808 the sharp pixel determination logic 2716 determines a block of sharpened upsampled pixels 2718 based on the input blocks of input pixels as described above. As described above, the non-sharpened upsampled pixels are determined in accordance with the relative horizontal and vertical variation of the input pixels within the image region indicated by the weighting parameter(s). The block of sharpened upsampled pixels 2718 represents a sharp version of the block of output pixels 2724. For example, the block of sharp upsampled pixels may be a sharp version of the block of output pixels. The block of sharpened upsampled pixels 2718 is passed to, and received by, the output pixel determination logic 2722.

In step S2810 the contrast determination logic 2720 determines an indication of contrast for the image region based on the input pixels 2702. In one example, contrast determination logic 2720 may determine indications of contrast for the image region using a window of input pixels wherein the window of input pixels covers at least a region covered by the block of output pixels. As mentioned above, the pixel values may be pixel values from the Y channel (i.e. the luminance channel). Any suitable indication of contrast could be determined. For example, the contrast determination logic 2720 could identify a minimum pixel value and a maximum pixel value within a window of input pixels, wherein the window of input pixels covers at least a region represented by the block of output pixels 2724. The contrast determination logic 2720 could determine a difference between the identified minimum and maximum pixel values within the window of input pixels, and this determined difference can be used as an indication of contrast for the image region. As another example, the contrast determination logic 810 could determine a standard deviation or a variance of the input pixel values within a window of input pixels, and this determined standard deviation or variance can be used as an indication of contrast for the image region. The determined indication of contrast for the image region is passed to, and received by, the output pixel determination logic 2722. Steps S2806, S2808 and S2810 could be performed in any order, and two or more of these steps could be performed in parallel.

In step S2812 the output pixel determination logic 2722 determines each of the output pixels of the block of output pixels 2724 by performing a respective weighted sum of: (i) a corresponding non-sharpened upsampled pixel in the block of non-sharpened upsampled pixels 2712 and (ii) a corresponding sharpened upsampled pixel in the block of sharpened upsampled pixels 2718. The weights of the weighted sums are based on the determined one or more indications of contrast for the image region. For example, the output pixel determination logic 2722 may determine two weights: $w_{non\text{-}sharp}$ and $w_{sharp}$. The first weight, $w_{non\text{-}sharp}$, is to be used for weighting non-sharp upsampled pixels in the weighted sums performed by the output pixel determination logic 2722. The second weight, $w_{sharp}$, is to be used for weighting sharp upsampled pixels in weighted sums performed by the output pixel determination logic 2722. In examples described herein $w_{non\text{-}sharp} + w_{sharp} = 1$. Furthermore, in some examples, both $w_{non\text{-}sharp}$ and $w_{sharp}$ are in a range from 0 to 1. In some examples, it may be desirable to set $w_{sharp}$ = 1 and $w_{non-sharp}$ = 0 such that the output pixels are equal to the sharp upsampled pixels. In some other examples, a sharpness boost may be applied by setting $w_{sharp}$ to be greater than 1. In other words, $w_{sharp}$ may be allowed to go above 1 and $w_{non-sharp}$ to go below 0, which can be used to achieve a sharpness boost. In these other examples, the weights ($w_{non-sharp}$ and $w_{sharp}$) are still be constrained to sum to 1. A sharpness boost, $\mu$, could be used as a scale factor to scale the sharp weight ($w_{sharp}$) to determine a boosted sharp weight ($w'_{sharp}$) as $w'_{sharp}$ = $\mu w_{sharp}$, A boosted non-sharp weight ($w'_{non-sharp}$) can be determined as $w'_{non-sharp}$ = 1 - $w'_{sharp}$. The sharpness boost, $\mu$, can be exposed as a tuneable parameter, and may take a value equal to, above or below 1. Setting $\mu > 1$ will increase the sharpness of the output pixels, whereas setting $\mu < 1$ will attenuate the sharpness of the output pixels. In the case that $\mu > 1$, the output pixels may be sharper than the sharp upsampled pixels. Though the output pixels may be sharper than the sharp upsampled pixels, the sharp upsampled pixels may still be considered to be a sharp version of the output pixels as increasing $w_{sharp}$ results in a corresponding increase in the sharpness of the output pixels. This allows the strength of the sharpening (e.g. applied by the unsharp mask) to be controlled after implementation in fixed-function hardware without changing the kernel weights. Setting $\mu$ = 1 means that the sharpness boost will not affect the sharpness of the output pixels. In the examples described below, $\mu$ is set to be 1. Setting $\mu$ to be negative is possible and would mean that the image is blurred rather than sharpened.

In general, the first weight, $w_{non\_sharp}$, is larger than the second weight, $w_{sharp}$, when the indicated contrast is relatively high (e.g. when the indicated contrast is between 0.5 and 1, if 0 is the minimum possible indicated contrast and 1 is the maximum possible indicated contrast); whereas the first weight, $w_{non-sharp}$, is smaller than the second weight, $w_{sharp}$, when the indicated contrast is relatively low (e.g. when the indicated contrast is between 0 and 0.5, if 0 is the minimum possible indicated contrast and 1 is the maximum possible indicated contrast). In this way, for regions with high contrast the block of output pixels 2724 will be more similar to the block of non-sharp upsampled pixels 2712 than to the block of sharp upsampled pixels 2718 (because $w_{non-sharp} > w_{sharp}$) such that overshoot artefacts caused by sharpening regions of high contrast are reduced; whereas for regions with low contrast the block of output pixels 2724 will be more similar to the block of sharp upsampled pixels 2718 than to the block of non-sharp upsampled pixels 2712 (because $w_{non-sharp} < w_{sharp}$) such that apparent detail in low contrast regions is enhanced.

In the example shown in Figure 27, the block of non-sharp upsampled pixels 2712 determined by the non-sharp pixel determination logic 2710, the block of sharp upsampled pixels 2718 determined by the sharp pixel determination logic 2716, and the block of output pixels 2724 are all 2x2 blocks. In this case, the top left output pixel of the block of output pixels 2724 is determined by summing: (i) the result of multiplying the top left non-sharp upsampled pixel of the block of non-sharp upsampled pixels 2712 by the weight $w_{non\_sharp}$, and (ii) the result of multiplying the top left sharp upsampled pixel of the block of sharp upsampled pixels 2718 by the weight $w_{sharp}$. The top right output pixel of the block of output pixels 2724 is determined by summing: (i) the result of multiplying the top right non-sharp upsampled pixel of the block of non-sharp upsampled pixels 2712 by the weight $w_{non\_sharp}$, and (ii) the result of multiplying the top right sharp upsampled pixel of the block of sharp upsampled pixels 2718 by the weight $w_{sharp}$. The bottom left output pixel of the block of output pixels 2724 is determined by summing: (i) the result of multiplying the bottom left non-sharp upsampled pixel of the block of non-sharp upsampled pixels 2712 by the weight $w_{non\_sharp}$, and (ii) the result of multiplying the bottom left sharp upsampled pixel of the block of sharp upsampled pixels 2718 by the weight $w_{sharp}$. The bottom right output pixel of the block of output pixels 2724 is determined by summing: (i) the result of multiplying the bottom right non-sharp upsampled pixel of the block of non-sharp upsampled pixels 2712 by the weight $w_{non-sharp}$, and (ii) the result of multiplying the bottom right sharp upsampled pixel of the block of sharp upsampled pixels 2718 by the weight $w_{sharp}$.

Therefore, the output pixel determination logic 2722 blends the non-sharp and sharp upsampled pixels using weighted sums. The weights of the weighted sums are what makes the sharpening "adaptive" because the weights are dependent upon the values of the input pixels 2702. In particular, the weights are dependent upon a measure of contrast for the input pixels 2702. Performing weighted sums and just altering the weights of the sums to make the sharpening 'adaptive' is very efficient to implement, e.g. in (low cost) hardware, whilst providing surprisingly beneficial effects. In particular, the adaptive sharpening unit 2700 which performs the adaptive sharpening technique has very low latency, power consumption and/or silicon area compared to conventional adaptive sharpening techniques. Furthermore, the contrast determination is based on the low resolution input pixels, rather than on the high resolution output pixels, so the contrast determination can take account of a larger region of the image without having to process as many pixels. Furthermore, in the adaptive sharpening unit 2700 the upsampling and adaptive sharpening is performed for input pixels 2702 in a single pass through the adaptive sharpening unit 2700, rather than implementing a two-stage process of upsampling the whole input image and then sharpening the whole upsampled image which would require some intermediate storage between the two stages to store the upsampled (but unsharpened) image. It may be beneficial in a fixed-function hardware implementation to be able to perform steps S2806 and S2808 in parallel. Furthermore, step S2810 may be implemented in parallel with one or more of steps S2804, 2806 and 2808. Operating these steps in parallel may be beneficial because (1) there are no intermediate linestores, (2) latency is minimised and (3) correct timing (i.e. synchronisation at the hardware level of the results of each part of the computation) is easier and cheaper to achieve.

In the present example $w_{non\text{-}sharp}$ and $w_{sharp}$ are the same for all pixels in the block of output pixels 804, but it will be appreciated that in other examples they may be different, for example by deriving them from measurements of contrast from different regions of the input pixels 2702. Therefore, in the main examples described herein, there is a single indication of contrast for a block of input pixels, and the weights of the weighted sums for determining the output pixels of the block of output pixels are based on the single indication of contrast; whereas in some other examples, there may be a plurality of indications of contrast for the block of input pixels, wherein for each of the output pixels of the block of output pixels, the weights of the weighted sum for determining that output pixel may be based on a respective one of the plurality of indications of contrast.

In step S2814 the block of output pixels 2724 is output from the output pixel determination logic 2722, and output from the adaptive sharpening unit 2700. The output pixels in the block of output pixels 2724 have been upsampled and adaptively sharpened. When the block of upsampled pixels 2724 has been output then the method can be repeated for the next block of input pixels by striding across the input pixels in the input blocks 2706 and 2708 with a stride of 1, and by striding the output by 2. The pixels may be processed in raster scan order, i.e. in rows from top to bottom and within each row from left to right, or in any other suitable order, e.g. boustrophedon order or Morton order. After the block of output pixels 2724 has been output from the adaptive sharpening unit 2700 it may be used in any suitable manner, e.g. it may be stored in a memory, displayed on a display or transmitted to another device.

As described above, the neural network which can be implemented in the weighting parameter determination logic is trained to output an indication of one or more weighting parameters for use in applying upsampling to input pixels to determine a block of upsampled pixels. Figure 29 shows a training module 2900 configured to train a neural network in this way. The training module 2900 comprises input logic 2904, upsampling logic 2906, an implementation of the neural network 2908 (which may correspond to the implementation of the neural network 900 described above), update logic 2910 and comparison logic 2912. The logic of the training module 2900 may be implemented in hardware (e.g. fixed function circuitry) or software, or any combination thereof.

Figure 30 is a flow chart for a method of training a neural network to output an indication of one or more weighting parameters for use in applying upsampling to input pixels to determine a block of upsampled pixels. In step S3002, a reference image 2902 is received at the input logic 2904 of the training module 2900. The reference image has pixels at upsampled pixel locations, i.e. it is a "high resolution" image in the sense that it represents a target upsampled image. In some examples, a batch of reference images may be received and processed.

The input logic 2904 determines a subset of the pixels of the reference image. The subset of the pixels of the reference image may be referred to as a "sparse" subset of the pixels of the reference image because it includes fewer than all of the pixels of the reference image. The sparse subset of the pixels are those pixels of the reference image representing an image region and having locations corresponding to a repeating quincunx arrangement (or chequer board pattern) as described above. The image region may be a portion of the reference image (e.g. represented by a 1 0x10 block of pixels of the reference image). It is noted that the network may be trained as a convolutional neural network (CNN) on a batch of one or more entire images or crops of images (e.g. including 128x128 pixels). In examples described herein, a 10x10 input window is the receptive field of the network (i.e. the region of the input that contributes to a given output block). In step S3004 the pixels in the sparse subset are provided as input pixels to the implementation of the neural network 2908. As described above, the input pixels may be provided to the implementation of the neural network 2908 in two input blocks, wherein one of the two input blocks comprises the input pixels having locations corresponding to locations within odd rows of the repeating quincunx arrangement of upsampled pixel locations, and the other of the two input blocks comprises the input pixels having locations corresponding to locations within even rows of the repeating quincunx arrangement of upsampled pixel locations. The pixels in the sparse subset are also provided to the upsampling logic 2906 in the two input blocks. The remaining pixels, i.e. the other half of the pixels of the reference image which are not included in the sparse subset are provided to the comparison logic 2912. In other examples, the input pixels used for training the neural network may not have the same format as described above in relation to the use of the implementation of the neural network. For example, for the purposes of training the neural network, all the pixels from odd rows may be put into one channel and all the pixels from even rows may be put into another channel. Then the input to the neural network during training is (B, H/2, W/2, 2), where B is the batch size, H is the height of the reference image, W is the width of the reference image, and 2 is the number of channels. In this case the output data of weighting parameters has a size (B, H/2, W/2, 1). Generally, entire tensors/images may be used when training (for simplicity), wherein the tensors/images can be broken down into patches during implementation of the neural network to achieve performance and memory benefits.

In step S3006 the implementation of the neural network 2908 processes the input pixels (i.e. the pixels of the reference image in the sparse subset) to determine an indication of one or more weighting parameters indicative of relative horizontal and vertical variation of the input pixels within the image region. The implementation of the neural network 2908 may correspond to the implementation of the neural network 900 described above, and step S3006 can be performed as described above with reference to the implementation of the neural network 900 in order to determine the indication of the one or more weighting parameters. As described above, the relative horizontal and vertical variation of the input pixels within the image region may be indicative of anisotropic image features in the image region, e.g. one or more of edges, texture and high frequency content in the image region. The indication of the one or more weighting parameters is provided to the upsampling logic 2906.

In step S3008 the upsampling logic 2906 applies upsampling to the input pixels (i.e. the pixels of the reference image in the sparse subset) to determine a block of upsampled pixels. The upsampling logic can perform any of the upsampling methods described herein, which may or may not include sharpening and/or adaptive sharpening. In particular, step S3008 comprises determining one or more of the upsampled pixels of the block of upsampled pixels in accordance with the relative horizontal and vertical variation of the input pixels within the image region indicated by the one or more weighting parameters. Upsampled pixels determined by the upsampling logic 2906 are provided to the comparison logic 2912.

In step S3010 the comparison logic 2912 compares upsampled pixels of the block of upsampled pixels determined by the upsampling logic 2906, at locations which do not correspond to locations of pixels in the sparse subset of pixels of the reference image, with pixels of the reference image at corresponding locations. The pixels of the reference image at these corresponding locations are the "remaining pixels" provided to the comparison logic 2912 by the input logic 2904, and these pixels are considered to be ground truth pixels. Therefore, differences between the upsampled pixels determined by the upsampling logic 2906 and these corresponding ground truth pixels are considered to be due to errors in the upsampling process. Step S3010 involves calculating an indication of the errors between the upsampled pixels of the block of upsampled pixels and the pixels of the reference image at the corresponding locations. As an example, the indication of the errors may be calculated using an L1 loss function (which is based on a sum of absolute differences). The neural network can be trained with a view to reducing these errors. In particular, the indication of these errors is provided to the update logic 2910.

In step S3012, the update logic 2910 updates one or more parameters of the neural network based on a result of the comparing performed in step S3010 (i.e. based on the indications of the errors). In particular, the one or more parameters of the neural network are updated based on the calculated indication of the errors. In this way, on average, with an appropriate choice of cost function and learning rate, subsequent errors in a subsequent iteration are less than the indicated errors in the current iteration. The one or more parameters of the neural network which may be updated include parameters such as weights used in the convolution layers and bit depths of values in the neural network. A person skilled in the art would know how the one or more parameters of the neural network could be trained so that the implementation of the neural network 2908 outputs an indication of the weighting parameter(s) which results in the upsampling logic 2906 determining upsampled pixels that are closer to the corresponding ground truth pixels of the reference image. The training may involve using a numerical optimiser based on gradient descent by backpropagation of error. The updating of the parameter(s) of the neural network in step S3012 may be by an amount per iteration based on a predetermined learning rate.

Furthermore, the training of the neural network may use Quantization Aware Training (QAT). Using QAT allows the neural network to be trained for sparsity and low bit depths, which can help to reduce the size and complexity of the implementation of the neural network. For example, any Multiply-Accumulate (MAC) units for missing weights can be skipped in the implementation of the neural network. It is noted that it is not necessary to use the same bit depth for all layers or weights of the neural network. A person skilled in the art would know how to use a QAT technique to train the neural network for sparsity and low bit depths. As described above, the neural network is defined using coefficients (e.g. the weights), and the trained neural network may be hardcoded in a hardware implementation of the neural network, e.g. hardcoded in silicon, rather than being implemented on general neural network inference hardware, such as a neural network accelerator (NNA) or a graphics processing unit (GPU). Each coefficient of the neural network may be determined individually, e.g. individual coefficient bit depths are possible. Each of the coefficients may be determined to have a low bit-depth, and the bit depths of the coefficients may be determined individually, e.g. learned/trained individually, thereby allowing for more optimal (i.e. smaller) bit-depths to be used (compared to determining a shared bit depth for an entire layer or channel of the neural network). Each of the coefficients may be removed from the network, e.g. by means of training for sparsity. In other words, a coefficient may be removed from the neural network if a bit depth of the coefficient is learnt to be zero. That is, each of the coefficients may be removed from the neural network if its effect on a quality of the indications of the one or more weighting parameters output from the neural network is determined to be sufficiently small. Removing coefficients from the neural network means that the latency, power consumption and/or silicon area of the implementation of the neural network can be reduced. For example, coefficients with a zero value (or with a value that is closer to zero than a threshold) can often be removed from the neural network without having a significant detrimental effect on the quality of the outputs from the neural network. When the neural network is to be hardcoded in hardware, sparsity can be implemented in an unstructured, per-coefficient manner, which would ordinarily be hard to exploit. This may allow entire multiplies to be skipped, which results in significant power and area savings.

As described above, the neural network is simple. In particular, since the neural network is used just to determine and output the indication of the weighting parameter(s) (e.g. rather than to determine and output the upsampled pixels) it can be small and implemented with low silicon area, power consumption and latency. As described above, the neural network may comprise first, second and third convolution layers and first and second ReLUs (as shown in Figure 9).

In step S3014 the training module 2900 determines whether another iteration for a different image region (e.g. in the reference image or in a different reference image) is to be performed. If another iteration is to be performed then the method passes back to step S3004 and the next iteration is performed for the next image region. When this next iteration is performed, the implementation of the neural network 2908 implements the neural network with the updated parameter(s) following step S3012. In some cases where the next image region is part of a new batch of one or more reference images then the method may pass back to step S3002 rather than to step S3004 so that the new reference image(s) can be received. If it is determined in step S3014 that another iteration is not to be performed for a different image region(e.g. because sufficient training iterations have been performed or because the magnitude of the errors determined in step S3010 are below a threshold) then the method passes from step S3014 to step S3018.

In step S3018 the parameters of the neural network (having been updated by the previous steps of the method shown in Figure 30) are stored, e.g. in a memory. When an implementation of the neural network (e.g. the implementation of the neural network 900) is to be used as part of an upsampling process then the parameters of the neural network stored in step S3018 can be retrieved and used to implement the trained neural network. In some examples, the parameters of the neural network may be "baked into" the hardware, so functionality is fixed. This means that the multiplications are by fixed numbers, which makes the hardware considerably more efficient in terms of power and area.

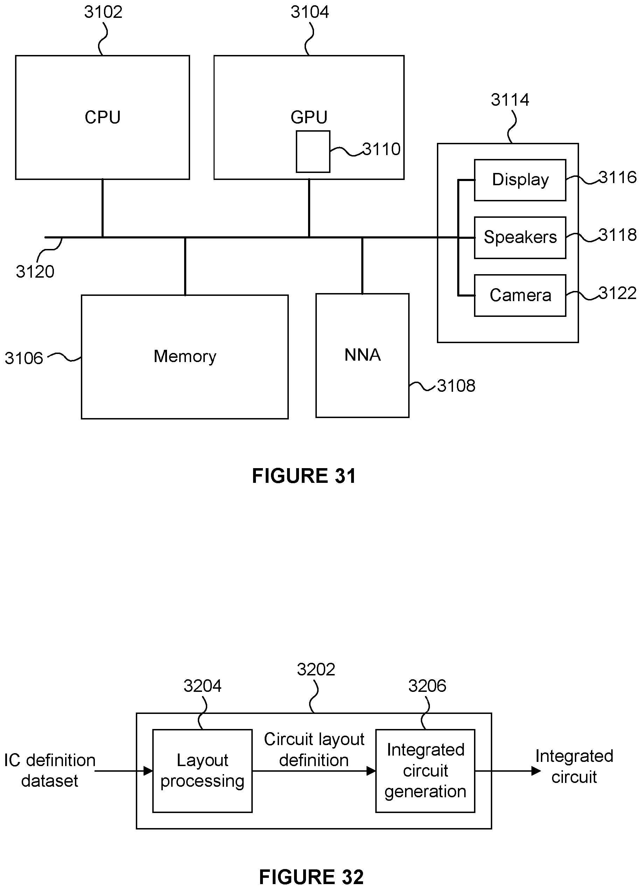

Figure 31 shows a computer system in which the processing modules described herein may be implemented. The computer system comprises a CPU 3102, a GPU 3104, a memory 3106, a neural network accelerator (NNA) 3108 and other devices 3114, such as a display 3116, speakers 3118 and a camera 3122. A processing block 3110 (corresponding to the processing modules described herein) is implemented on the GPU 3104. In other examples, one or more of the depicted components may be omitted from the system, and/or the processing block 3110 may be implemented on the CPU 3102 or within the NNA 3108 or in a separate block in the computer system. The components of the computer system can communicate with each other via a communications bus 3120.

The processing modules described herein are shown as comprising a number of functional blocks. This is schematic only and is not intended to define a strict division between different logic elements of such entities. Each functional block may be provided in any suitable manner. It is to be understood that intermediate values described herein as being formed by a processing module need not be physically generated by the processing module at any point and may merely represent logical values which conveniently describe the processing performed by the processing module between its input and output.

The processing modules described herein may be embodied in hardware on an integrated circuit. The processing modules described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a processing module configured to perform any of the methods described herein, or to manufacture a processing module comprising any apparatus described herein. An integrated circuit definition dataset may be, for example, an integrated circuit description.

Therefore, there may be provided a method of manufacturing, at an integrated circuit manufacturing system, a processing module as described herein. Furthermore, there may be provided an integrated circuit definition dataset that, when processed in an integrated circuit manufacturing system, causes the method of manufacturing a processing module to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a processing module will now be described with respect to Figure 32.

Figure 32 shows an example of an integrated circuit (IC) manufacturing system 3202 which is configured to manufacture a processing module as described in any of the examples herein. In particular, the IC manufacturing system 3202 comprises a layout processing system 3204 and an integrated circuit generation system 3206. The IC manufacturing system 3202 is configured to receive an IC definition dataset (e.g. defining a processing module as described in any of the examples herein), process the IC definition dataset, and generate an IC according to the IC definition dataset (e.g. which embodies a processing module as described in any of the examples herein). The processing of the IC definition dataset configures the IC manufacturing system 3202 to manufacture an integrated circuit embodying a processing module as described in any of the examples herein.

The layout processing system 3204 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 3204 has determined the circuit layout it may output a circuit layout definition to the IC generation system 3206. A circuit layout definition may be, for example, a circuit layout description.

The IC generation system 3206 generates an IC according to the circuit layout definition, as is known in the art. For example, the IC generation system 3206 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 3206 may be in the form of computer-readable code which the IC generation system 3206 can use to form a suitable mask for use in generating an IC.

The different processes performed by the IC manufacturing system 3202 may be implemented all in one location, e.g. by one party. Alternatively, the IC manufacturing system 3202 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a processing module without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 32 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 32, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

ANNEX

<u>Some numbered clauses are provided below, which form part of this disclosure:</u>

101. A method of applying upsampling to input pixels representing an image region to determine a block of upsampled pixels, wherein the input pixels have locations corresponding to a repeating quincunx arrangement of upsampled pixel locations, the method comprising:

analysing the input pixels to determine one or more weighting parameters, the one or more weighting parameters being indicative of a directionality of filtering to be applied when upsampling is applied to the input pixels within the image region; and

determining one or more of the upsampled pixels of the block of upsampled pixels in accordance with the directionality of filtering indicated by the determined one or more weighting parameters.

102. The method of clause 101 wherein the one or more weighting parameters are indicative of relative horizontal and vertical variation of the input pixels within the image region, and wherein the one or more of the upsampled pixels of the block of upsampled pixels are determined in accordance with the relative horizontal and vertical variation of the input pixels within the image region indicated by the determined one or more weighting parameters.

103. The method of clause 101 or 102 wherein determining each of said one or more of the upsampled pixels comprises applying one or more kernels to at least some of the input pixels in accordance with the determined one or more weighting parameters.

104. The method of any of clauses 101 to 103 wherein each of said one or more of the upsampled pixels is at a respective upsampled pixel location which does not correspond with the location of any of the input pixels.

105. The method of any of clauses 101 to 104 wherein the input pixels are represented in two input blocks, wherein one of the two input blocks comprises the input pixels having locations corresponding to locations within odd rows of the repeating quincunx arrangement of upsampled pixel locations, and the other of the two input blocks comprises the input pixels having locations corresponding to locations within even rows of the repeating quincunx arrangement of upsampled pixel locations.

106. The method of clause 105 wherein the image region is part of a current frame within a sequence of frames, wherein the input pixels of a first of the input blocks are rendered for the current frame, and wherein the input pixels of a second of the input blocks are determined by performing temporal resampling on pixels of a previous frame using motion vectors.

107. The method of clause 106 wherein pixels for the previous frame corresponding to the pixel locations of the input pixels of the second input block were rendered for the previous frame.

108. The method of any of clauses 101 to 105 wherein all of the input pixels are rendered for the image region.

109. The method of any of clauses 101 to 108 wherein determining each of said one or more of the upsampled pixels comprises, in accordance with the determined one or more weighting parameters:

applying one or more first kernels to at least a first subset of the input pixels to determine a horizontal component,

applying one or more second kernels to at least a second subset of the input pixels to determine a vertical component, and

combining the determined horizontal and vertical components,

such that each of said one or more of the upsampled pixels is determined in accordance with the directionality of filtering indicated by the determined one or more weighting parameters.

110. The method of clause 109 wherein said combining the determined horizontal and vertical components comprises:

multiplying the horizontal component by a first of the weighting parameters, $a$, to determine a weighted horizontal component;

multiplying the vertical component by a second of the weighting parameters, $b$, to determine a weighted vertical component; and

summing the weighted horizontal component and the weighted vertical component.

111. The method of any of clauses 101 to 110 wherein said analysing the input pixels to determine one or more weighting parameters comprises processing the input pixels with an implementation of a neural network, wherein the neural network has been trained to output an indication of the one or more weighting parameters to be indicative of the directionality of filtering to be applied when upsampling is applied to the input pixels within the image region.

112. The method of clause 111 wherein the neural network comprises:

a first convolution layer which determines a first intermediate tensor based on the input pixels, wherein the first intermediate tensor extends in only one of a horizontal dimension and a vertical dimension with respect to the dimensions of the image region represented by the input pixels;

a second convolution layer which determines a second intermediate tensor based on the first intermediate tensor, wherein the second intermediate tensor does not extend in either the horizontal dimension or the vertical dimension with respect to the dimensions of the image region represented by the input pixels; and

a third convolution layer which determines the indication of the one or more weighting parameters based on the second intermediate tensor.

113. The method of any of clauses 101 to 110 wherein said analysing the input pixels to determine one or more weighting parameters comprises:

determining indications of image gradients for the image region based on the input pixels; and

using the determined indications of image gradients to determine the one or more weighting parameters.

114. The method of clause 113 wherein said determining indications of image gradients for the image region comprises:

applying a first gradient kernel to the input pixels to determine an indication of an image gradient in a horizontal direction, dx; and

applying a second gradient kernel to the input pixels to determine an indication of an image gradient in a vertical direction, dy.

115. The method of clause 114 wherein said using the determined indications of image gradients to determine the one or more weighting parameters comprises:

determining a first weighting parameter, $a$, as $a =$ clip$(m(|dy| - |dx|) + 0.5, 0, 1)$, where m is a tuneable parameter; and

determining a second weighting parameter, $b$, as $b = 1 - a$.

116. The method of any of clauses 101 to 115 wherein the upsampled pixels in the block of upsampled pixels are non-sharpened upsampled pixels.

117. The method of clause 116 when dependent upon clause 109, wherein:

said applying one or more first kernels to at least a first subset of the input pixels comprises applying a single first kernel to input pixels horizontally adjacent to the upsampled pixel being determined; and

said applying one or more second kernels to at least a second subset of the input pixels comprises applying a single second kernel to input pixels vertically adjacent to the upsampled pixel being determined.

118. The method of clause 116 or 117 wherein the input pixels having locations corresponding to the repeating quincunx arrangement of upsampled pixel locations are used as the upsampled pixels at those upsampled pixel locations of the block of upsampled pixels.

119. The method of any of clauses 101 to 115 wherein the upsampled pixels in the block of upsampled pixels are sharpened upsampled pixels.

120. The method of clause 119 when dependent upon clauses 105 and 109, wherein:

said applying one or more first kernels to at least a first subset of the input pixels comprises applying a first horizontal kernel to input pixels of a first of the image blocks, applying a second horizontal kernel to input pixels of a second of the image blocks, and summing the results of applying the first and second horizontal kernels to determine the horizontal component; and

said applying one or more second kernels to at least a second subset of the input pixels comprises applying a first vertical kernel to input pixels of the first of the image blocks, applying a second vertical kernel to input pixels of the second of the image blocks, and summing the results of applying the first and second vertical kernels to determine the vertical component.

121. The method of clause 119 or 120 when dependent upon clauses 105 and 109, further comprising determining upsampled pixels at locations corresponding to the repeating quincunx arrangement of upsampled pixel locations within the block of upsampled pixels by:

applying a first sharpening kernel to input pixels of a first of the image blocks;

applying a second sharpening kernel to input pixels of a second of the image blocks; and

summing the results of applying the first and second sharpening kernels.

122. A method of applying adaptive sharpening to input pixels representing an image region to determine a block of output pixels, the method comprising:

determining a block of non-sharpened upsampled pixels for the image region according to the method of any of clauses 116 to 118;

determining a block of sharpened upsampled pixels for the image region according to the method of any of clauses 119 to 121;

determining one or more indications of contrast for the image region based on the input pixels; and

determining each of the output pixels of the block of output pixels by performing a respective weighted sum of: (i) a corresponding non-sharpened upsampled pixel in the block of non-sharpened upsampled pixels and (ii) a corresponding sharpened upsampled pixel in the block of sharpened upsampled pixels,

wherein the weights of the weighted sums are based on the determined one or more indications of contrast for the image region.

123. A processing module configured to apply upsampling to input pixels representing an image region to determine a block of upsampled pixels, wherein the input pixels have locations corresponding to a repeating quincunx arrangement of upsampled pixel locations, the processing module comprising:

weighting parameter determination logic configured to analyse the input pixels to determine one or more weighting parameters, the one or more weighting parameters being indicative of a directionality of filtering to be applied when upsampling is applied to the input pixels within the image region; and

pixel determination logic configured to determine one or more of the upsampled pixels of the block of upsampled pixels in accordance with the directionality of filtering indicated by the determined one or more weighting parameters.

124. The processing module of clause 123 wherein the weighting parameter determination logic comprises an implementation of a neural network configured to process the input pixels, wherein the neural network has been trained to output the one or more weighting parameters to be indicative of the directionality of filtering to be applied when upsampling is applied to the input pixels within the image region.

125. The processing module of clause 124 wherein the neural network comprises:

a first convolution layer configured to determine a first intermediate tensor based on the input pixels, wherein the first intermediate tensor extends in only one of a horizontal dimension and a vertical dimension with respect to the dimensions of the image region represented by the input pixels;

a second convolution layer configured to determine a second intermediate tensor based on the first intermediate tensor, wherein the second intermediate tensor does not extend in either the horizontal dimension or the vertical dimension with respect to the dimensions of the image region represented by the input pixels; and

a third convolution layer configured to determine the one or more weighting parameters based on the second intermediate tensor.

126. A processing module configured to perform the method of any of clauses 101 to 122.

127. An adaptive sharpening unit configured to apply adaptive sharpening to input pixels representing an image region to determine a block of output pixels, the adaptive sharpening unit comprising:

a first processing module according to any of clauses 123 to 126 wherein the upsampled pixels in the block of upsampled pixels determined by the first processing module are non-sharpened upsampled pixels;

a second processing module according to any of clauses 123 to 126 wherein the upsampled pixels in the block of upsampled pixels determined by the second processing module are sharpened upsampled pixels;

contrast determination logic configured to determine one or more indications of contrast for the image region based on the input pixels; and

output pixel determination logic configured to determine each of the output pixels of the block of output pixels by performing a respective weighted sum of: (i) a corresponding non-sharpened upsampled pixel in the block of non-sharpened upsampled pixels and (ii) a corresponding sharpened upsampled pixel in the block of sharpened upsampled pixels,

wherein the weights of the weighted sums are based on the determined one or more indications of contrast for the image region.

128. The processing module of any of clauses 123 to 126 or the adaptive sharpening unit of clause 127 wherein the processing module or the adaptive sharpening unit is embodied in hardware on an integrated circuit.

129. Computer readable code configured to cause the method of any of clauses 101 to 122 to be performed when the code is run.

130. An integrated circuit definition dataset that, when processed in an integrated circuit manufacturing system, configures the integrated circuit manufacturing system to manufacture a processing module or an adaptive sharpening unit as specified in any of clauses 123 to 128.

201. A method of determining a block of sharpened upsampled pixels, the method comprising:

receiving two input blocks of input pixels, wherein one of the two input blocks comprises input pixels having locations corresponding to locations within odd rows of a repeating quincunx arrangement of upsampled pixel locations, and the other of the two input blocks comprises input pixels having locations corresponding to locations within even rows of the repeating quincunx arrangement of upsampled pixel locations; and

for each of the sharpened upsampled pixels in the block of sharpened upsampled pixels:

determining the sharpened upsampled pixel by: (i) applying a respective first set of one or more kernels to input pixels of a first of the input blocks, (ii) applying a respective second set of one or more kernels to input pixels of a second of the input blocks, and (iii) combining the results of applying the first set of one or more kernels and applying the second set of one or more kernels,

wherein one of the kernels of the first set has a first subset of values of a full sharp upsampling kernel and one of the kernels of the second set has a second subset of values of the full sharp upsampling kernel, wherein the full sharp upsampling kernel has values which correspond to the upsampled pixel locations and which represent a result of convolving an interpolation kernel with a sharpening kernel, wherein the first subset includes the values of the full sharp upsampling kernel at locations corresponding to the locations of the input pixels in the first of the input blocks, and wherein the second subset includes the values of the full sharp upsampling kernel at locations corresponding to the locations of the input pixels in the second of the input blocks.

202. The method of clause 201 wherein for determining the sharpened upsampled pixel at a location corresponding to the location of an input pixel of the first or second input blocks:

the respective first set of one or more kernels comprises a first single kernel which is applied to the input pixels of the first input block,

the respective second set of one or more kernels comprises a second single kernel which is applied to the input pixels of the second input block, and

said combining the results comprises summing the result of applying the first single kernel to the input pixels of the first input block with the result of applying the second single kernel to the input pixels of the second input block.

203. The method of clause 202 wherein, for determining the sharpened upsampled pixel at the location corresponding to the location of an input pixel of the first or second input blocks, said interpolation kernel is a bilinear interpolation kernel.

204. The method of clause 203 wherein said bilinear interpolation kernel can be represented as

$$\begin{bmatrix} 0 & 0.25 & 0 \\ 0.25 & 1 & 0.25 \\ 0 & 0.25 & 0 \end{bmatrix}.$$

205. The method of any of clauses 201 to 204 wherein for determining the sharpened upsampled pixel at a location which falls between corresponding locations of input pixels of the first and second input blocks:

the respective first set of one or more kernels comprises a first horizontal kernel and a first vertical kernel which are applied to the input pixels of the first input block,

the respective second set of one or more kernels comprises a second horizontal kernel and a second vertical kernel which are applied to the input pixels of the second input block, and

said combining the results comprises:

determining a horizontal component by summing the result of applying the first horizontal kernel to the input pixels of the first input block with the result of applying the second horizontal kernel to the input pixels of the second input block;

determining a vertical component by summing the result of applying the first vertical kernel to the input pixels of the first input block with the result of applying the second vertical kernel to the input pixels of the second input block; and

combining the determined horizontal and vertical components.

206. The method of clause 205 wherein said combining the determined horizontal and vertical components comprises:

multiplying the horizontal component by a first weighting parameter to determine a weighted horizontal component;

multiplying the vertical component by a second weighting parameter to determine a weighted vertical component; and

summing the weighted horizontal component and the weighted vertical component.

207. The method of clause 206 further comprising analysing the input pixels of the first and second input blocks to determine the first and second weighting parameters, wherein the first and second weighting parameters are indicative of a directionality of filtering to be applied when upsampling is applied to the input pixels.

208. The method of clause 207 wherein the first and second weighting parameters are indicative of relative horizontal and vertical variation of the input pixels.

209. The method of clause 207 or 208 wherein said analysing the input pixels of the first and second input blocks to determine the first and second weighting parameters comprises processing the input pixels with an implementation of a neural network, wherein the neural network has been trained to output an indication of the weighting parameters to be indicative of the directionality of filtering to be applied when upsampling is applied to the input pixels.

210. The method of clause 209 wherein the neural network comprises:

a first convolution layer which determines a first intermediate tensor based on the input pixels, wherein the first intermediate tensor extends in only one of a horizontal dimension and a vertical dimension with respect to the dimensions of an image region represented by the input pixels;

a second convolution layer which determines a second intermediate tensor based on the first intermediate tensor, wherein the second intermediate tensor does not extend in either the horizontal dimension or the vertical dimension with respect to the dimensions of the image region represented by the input pixels; and

a third convolution layer which determines the indication of the weighting parameters based on the second intermediate tensor.

211. The method of any of clauses 205 to 210 wherein the first horizontal kernel has a first subset of values of a full horizontal sharp upsampling kernel and the second horizontal kernel has a second subset of values of the full horizontal sharp upsampling kernel, wherein the full horizontal sharp upsampling kernel has values which correspond to the upsampled pixel locations and which represent a result of convolving a linear horizontal interpolation kernel with the sharpening kernel, and
wherein the first vertical kernel has a first subset of values of a full vertical sharp upsampling kernel and the second vertical kernel has a second subset of values of the full vertical sharp upsampling kernel, wherein the full vertical sharp upsampling kernel has values which correspond to the upsampled pixel locations and which represent a result of convolving a linear vertical interpolation kernel with the sharpening kernel.

212. The method of clause 211 wherein the first subset of values of the full horizontal sharp upsampling kernel includes the values of the full horizontal sharp upsampling kernel at locations corresponding to the locations of the input pixels in the first of the input blocks, and wherein the second subset of values of the full horizontal sharp upsampling kernel includes the values of the full horizontal sharp upsampling kernel at locations corresponding to the locations of the input pixels in the second of the input blocks, and
wherein the first subset of values of the full vertical sharp upsampling kernel includes the values of the full vertical sharp upsampling kernel at locations corresponding to the locations of the input pixels in the first of the input blocks, and wherein the second subset of values of the full vertical sharp upsampling kernel includes the values of the full vertical sharp upsampling kernel at locations corresponding to the locations of the input pixels in the second of the input blocks.

213. The method of clause 211 or 212 wherein said linear horizontal interpolation kernel can be represented as [0.5 1 0.5], and wherein said linear vertical interpolation kernel can be represented as $\begin{bmatrix} 0.5 \\ 1 \\ 0.5 \end{bmatrix}$.

214. The method of any of clauses 201 to 213 wherein the sharpening kernel is an unsharp mask kernel.

215. The method of any of clauses 201 to 213 wherein the sharpening kernel is a truncated sinc kernel.

216. The method of any of clauses 201 to 215 wherein the input pixels of the first of the input blocks are rendered for a current frame within a sequence of frames, and wherein the input pixels of the second of the input blocks are determined by performing temporal resampling on pixels of a previous frame using motion vectors.

217. The method of clause 216 wherein pixels for the previous frame corresponding to the pixel locations of the input pixels of the second input block were rendered for the previous frame.

218. The method of any of clauses 201 to 215 wherein all of the input pixels of the first and second input blocks are rendered for a current frame within a sequence of frames.

219. A method of applying adaptive sharpening to input pixels representing an image region to determine a block of output pixels, wherein the input pixels are represented in two input blocks, the method comprising:

    determining a block of non-sharpened upsampled pixels for the image region;

    determining a block of sharpened upsampled pixels for the image region according to the method of any of clauses 201 to 218;

    determining one or more indications of contrast for the image region based on the input pixels; and

    determining each of the output pixels of the block of output pixels by performing a respective weighted sum of: (i) a corresponding non-sharpened upsampled pixel in the block of non-sharpened upsampled pixels and (ii) a corresponding sharpened upsampled pixel in the block of sharpened upsampled pixels,

    wherein the weights of the weighted sums are based on the determined one or more indications of contrast for the image region.

220. A processing module comprising pixel determination logic configured to determine a block of sharpened upsampled pixels, the pixel determination logic being configured to:

    receive two input blocks of input pixels, wherein one of the two input blocks comprises input pixels having locations corresponding to locations within odd rows of a repeating quincunx arrangement of upsampled pixel locations, and the other of the two input blocks comprises input pixels having locations corresponding to locations within even rows of the repeating quincunx arrangement of upsampled pixel locations; and

    for each of the sharpened upsampled pixels in the block of sharpened upsampled pixels:

        determine the sharpened upsampled pixel by: (i) applying a respective first set of one or more kernels to input pixels of a first of the input blocks, (ii) applying a respective second set of one or more kernels to input pixels of a second of the input blocks, and (iii) combining the results of applying the first set of one or more kernels and applying the second set of one or more kernels,

        wherein one of the kernels of the first set has a first subset of values of a full sharp upsampling kernel and one of the kernels of the second set has a second subset of values of the full sharp upsampling kernel, wherein the full sharp upsampling kernel has values which correspond to the upsampled pixel locations and which represent a result of convolving an interpolation kernel with a sharpening kernel, wherein the first subset includes the values of the full sharp upsampling kernel at locations corresponding to the locations of the input pixels in the first of the input blocks, and wherein the second subset includes the values of the full sharp upsampling kernel at locations corresponding to the locations of the input pixels in the second of the input blocks.

221. The processing module of clause 220 further comprising weighting parameter determination logic configured to analyse the input pixels of the first and second input blocks to determine the first and second weighting parameters, wherein the first and second weighting parameters are indicative of a directionality of filtering to be applied when upsampling is applied to the input pixels.

222. The processing module of clause 221 wherein the weighting parameter determination logic comprises an implementation of a neural network configured to process the input pixels, wherein the neural network has been trained to output an indication of the weighting parameters to be indicative of the directionality of filtering to be applied when upsampling is applied to the input pixels.

223. The processing module of clause 222 wherein the neural network comprises:

    a first convolution layer configured to determine a first intermediate tensor based on the input pixels, wherein the first intermediate tensor extends in only one of a horizontal dimension and a vertical dimension with respect to the dimensions of an image region represented by the input pixels;

a second convolution layer configured to determine a second intermediate tensor based on the first intermediate tensor, wherein the second intermediate tensor does not extend in either the horizontal dimension or the vertical dimension with respect to the dimensions of the image region represented by the input pixels; and

a third convolution layer configured to determine the indication of the weighting parameters based on the second intermediate tensor.

224. A processing module configured to perform the method of any of clauses 201 to 219.

225. An adaptive sharpening unit configured to apply adaptive sharpening to input pixels representing an image region to determine a block of output pixels, wherein the input pixels are represented in two input blocks, the adaptive sharpening unit comprising:

a processing module according to any of clauses 219 to 223 configured to determine a block of sharpened upsampled pixels for the image region;

further pixel determination logic configured to determine a block of non-sharpened upsampled pixels for the image region;

contrast determination logic configured to determine one or more indications of contrast for the image region based on the input pixels; and

output pixel determination logic configured to determine each of the output pixels of the block of output pixels by performing a respective weighted sum of: (i) a corresponding non-sharpened upsampled pixel in the block of non-sharpened upsampled pixels and (ii) a corresponding sharpened upsampled pixel in the block of sharpened upsampled pixels,

wherein the weights of the weighted sums are based on the determined one or more indications of contrast for the image region.

226. The processing module of any of clauses 220 to 224 or the adaptive sharpening unit of clause 224 wherein the processing module or the adaptive sharpening unit is embodied in hardware on an integrated circuit.

227. Computer readable code configured to cause the method of any of clauses 201 to 219 to be performed when the code is run.

228. An integrated circuit definition dataset that, when processed in an integrated circuit manufacturing system, configures the integrated circuit manufacturing system to manufacture a processing module or an adaptive sharpening unit as specified in any of clauses 220 to 226.

301. A method of determining an indication of one or more weighting parameters for use in applying upsampling to input pixels representing an image region to determine a block of upsampled pixels, the method comprising:

receiving the input pixels at an implementation of a neural network, wherein the neural network has been trained to output an indication of the one or more weighting parameters to be indicative of a directionality of filtering to be applied when upsampling is applied to the input pixels within the image region;

processing the input pixels with the implementation of the neural network to determine the indication of the one or more weighting parameters; and

outputting the determined indication of the one or more weighting parameters for use in applying upsampling to the input pixels representing the image region to determine a block of upsampled pixels.

302. The method of clause 301 wherein the one or more weighting parameters are indicative of relative horizontal and vertical variation of the input pixels within the image region.

303. The method of clause 301 or 302 wherein the neural network comprises a first convolution layer, and wherein said processing the input pixels with the implementation of the neural network comprises:
using the first convolution layer to determine a first intermediate tensor based on the input pixels, wherein the first intermediate tensor extends in only one of a horizontal dimension and a vertical dimension with respect to the dimensions of the image region represented by the input pixels.

304. The method of clause 303 wherein the image region is part of an input image, and wherein the upsampling is to be performed iteratively for a plurality of partially overlapping image regions within the input image,

wherein said processing the input pixels with the implementation of the neural network further comprises storing the first intermediate tensor in a buffer, and

wherein the first convolution layer operates on input pixels within a first portion of a current image region that does not overlap with a previous image region, but does not operate on input pixels within a second portion of the current image region that does overlap with the previous image region, to determine the first intermediate tensor.

305. The method of clause 303 or 304 wherein the neural network further comprises a second convolution layer and a third convolution layer, and wherein said processing the input pixels with the implementation of the neural network further comprises:

using the second convolution layer to determine a second intermediate tensor based on the first intermediate tensor, wherein the second intermediate tensor does not extend in either the horizontal dimension or the vertical dimension with respect to the dimensions of the image region represented by the input pixels; and

using the third convolution layer to determine the indication of the one or more weighting parameters based on the second intermediate tensor.

306. The method of clause 305 wherein the neural network further comprises a first rectified linear unit implemented between the first convolution layer and the second convolution layer, and a second rectified linear unit implemented between the second convolution layer and the third convolution layer, and wherein said processing the input pixels with the implementation of the neural network further comprises:

using the first rectified linear unit to set negative values in the first intermediate tensor to zero; and

using the second rectified linear unit to set negative values in the second intermediate tensor to zero.

307. The method of any of clauses 301 to 306 wherein the input pixels have locations corresponding to a repeating quincunx arrangement of upsampled pixel locations.

308. The method of clause 307 wherein the input pixels are represented in two input blocks, wherein one of the two input blocks comprises the input pixels having locations corresponding to locations within odd rows of the repeating quincunx arrangement of upsampled pixel locations, and the other of the two input blocks comprises the input pixels having locations corresponding to locations within even rows of the repeating quincunx arrangement of upsampled pixel locations.

309. The method of any of clauses 301 to 308 wherein the neural network has been trained using Quantization Aware Training (QAT).

310. The method of any of clauses 301 to 309 wherein the neural network is hardcoded in hardware of the implementation of the neural network, wherein each coefficient of the neural network has been determined individually, and wherein the determining of each of the coefficients comprises one or both of: (i) learning an individual bit depth of the coefficient, and (ii) removing the coefficient from the neural network if a bit depth of the coefficient is learnt to be zero.

311. The method of any of clauses 301 to 310 further comprising applying upsampling to the input pixels representing the image region, said upsampling comprising determining one or more of the upsampled pixels of the block of upsampled pixels in accordance with the directionality of filtering indicated by the one or more weighting parameters.

312. The method of clause 311 wherein each of said one or more of the upsampled pixels is at a respective upsampled pixel location which does not correspond with the location of any of the input pixels.

313. The method of clause 311 or 312 wherein determining each of said one or more of the upsampled pixels comprises, in accordance with the determined one or more weighting parameters:

applying one or more first kernels to at least a first subset of the input pixels to determine a horizontal component,

applying one or more second kernels to at least a second subset of the input pixels to determine a vertical component, and

combining the determined horizontal and vertical components,

such that each of said one or more of the upsampled pixels is determined in accordance with the directionality of filtering indicated by the determined one or more weighting parameters.

314. The method of clause 313 wherein said combining the determined horizontal and vertical components comprises:

multiplying the horizontal component by a first of the weighting parameters to determine a weighted horizontal component;

multiplying the vertical component by a second of the weighting parameters to determine a weighted vertical component; and

summing the weighted horizontal component and the weighted vertical component.

315. The method of any of clauses 301 to 314 wherein the upsampled pixels in the block of upsampled pixels are non-sharpened upsampled pixels.

316. The method of any of clauses 301 to 314 wherein the upsampled pixels in the block of upsampled pixels are sharpened upsampled pixels.

317. A processing module configured to determine an indication of one or more weighting parameters for use in applying upsampling to input pixels representing an image region to determine a block of upsampled pixels, the processing module comprising:
an implementation of a neural network, wherein the neural network has been trained to output an indication of the one or more weighting parameters to be indicative of a directionality of filtering to be applied when upsampling is applied to the input pixels within the image region, wherein the implementation of the neural network is configured to:

receive the input pixels;

process the input pixels to determine the indication of the one or more weighting parameters; and

output the determined indication of the one or more weighting parameters for use in applying upsampling to the input pixels representing the image region to determine a block of upsampled pixels.

318. The processing module of clause 317 wherein the neural network comprises:
a first convolution layer configured to determine a first intermediate tensor based on the input pixels, wherein the first intermediate tensor extends in only one of a horizontal dimension and a vertical dimension with respect to the dimensions of the image region represented by the input pixels.

319. The processing module of clause 318 wherein the image region is part of an input image, and wherein the upsampling is to be performed iteratively for a plurality of partially overlapping image regions within the input image,

wherein the neural network further comprises a buffer configured to store the first intermediate tensor, and

wherein the first convolution layer is configured to operate on input pixels within a first portion of a current image region that does not overlap with a previous image region, but to not operate on input pixels within a second portion of the current image region that does overlap with the previous image region, to determine the first intermediate tensor.

320. The processing module of clause 318 or 319 wherein the neural network further comprises:

a second convolution layer configured to determine a second intermediate tensor based on the first intermediate tensor, wherein the second intermediate tensor does not extend in either the horizontal dimension or the vertical dimension with respect to the dimensions of the image region represented by the input pixels; and
a third convolution layer configured to determine the indication of the one or more weighting parameters based on the second intermediate tensor.

321. The processing module of clause 320 wherein the neural network further comprises a first rectified linear unit implemented between the first convolution layer and the second convolution layer, and a second rectified linear unit implemented between the second convolution layer and the third convolution layer,

wherein the first rectified linear unit is configured to set negative values in the first intermediate tensor to zero, and

wherein the second rectified linear unit is configured to set negative values in the second intermediate tensor to zero.

322. The processing module of any of clauses 317 to 321 wherein the implementation of the neural network does not comprise any linestores.

323. The processing module of any of clauses 317 to 322 wherein the neural network has been trained using Quantization Aware Training (QAT).

324. The processing module of any of clauses 317 to 323 further comprising pixel determination logic configured to determine one or more of the upsampled pixels of the block of upsampled pixels in accordance with the directionality of filtering indicated by the determined one or more weighting parameters.

325. A processing module configured to perform the method of any of clauses 301 to 316.

326. The processing module of any of clauses 317 to 325 wherein the processing module is embodied in hardware on an integrated circuit.

327. Computer readable code configured to cause the method of any of clauses 301 to 316 to be performed when the code is run.

328. An integrated circuit definition dataset that, when processed in an integrated circuit manufacturing system, configures the integrated circuit manufacturing system to manufacture a processing module as specified in any of clauses 317 to 326.

401. A method of training a neural network to output an indication of one or more weighting parameters for use in applying upsampling to input pixels to determine a block of upsampled pixels, the method comprising:
receiving a reference image having pixels at upsampled pixel locations; and iteratively:

   providing input pixels to an implementation of the neural network, wherein the input pixels are a subset of the pixels of the reference image representing an image region;

   processing the input pixels with the implementation of the neural network to determine an indication of one or more weighting parameters indicative of a directionality of filtering to be applied when upsampling is applied to the input pixels within the image region;

   applying upsampling to the input pixels to determine a block of upsampled pixels, said applying upsampling comprising determining one or more of the upsampled pixels of the block of upsampled pixels in accordance with the directionality of filtering indicated by the one or more weighting parameters;

   comparing upsampled pixels of the block of upsampled pixels, at locations which do not correspond to locations of pixels in the subset of pixels of the reference image, with pixels of the reference image at corresponding locations; and

   updating one or more parameters of the neural network based on a result of said comparing.

402. The method of clause 401 wherein the one or more weighting parameters are indicative of relative horizontal and vertical variation of the input pixels within the image region, and wherein the one or more of the upsampled pixels of the block of upsampled pixels are determined in accordance with the relative horizontal and vertical variation of the input pixels within the image region indicated by the determined one or more weighting parameters.

403. The method of clause 401 or 402 wherein the input pixels have locations corresponding to a repeating quincunx arrangement of upsampled pixel locations.

404. The method of clause 403 wherein said providing input pixels to an implementation of the neural network comprises providing two input blocks to the implementation of the neural network, wherein one of the two input blocks comprises the input pixels having locations corresponding to locations within odd rows of the repeating quincunx arrangement of upsampled pixel locations, and the other of the two input blocks comprises the input pixels having locations corresponding to locations within even rows of the repeating quincunx arrangement of upsampled pixel locations.

405. The method of any of clauses 401 to 404 wherein said comparing comprises calculating an indication of errors between the upsampled pixels of the block of upsampled pixels, at locations which do not correspond to locations of pixels in the subset of pixels of the reference image, and the pixels of the reference image at the corresponding locations, and wherein in a current iteration said updating comprises updating the one or more parameters of the neural network based on the calculated indication of the errors.

406. The method of clause 405 wherein the indication of the errors is calculated using an L1 loss function.

407. The method of any of clauses 401 to 406 wherein said updating comprises updating the one or more parameters of the neural network by an amount per iteration based on a predetermined learning rate.

408. The method of any of clauses 401 to 407 wherein the neural network comprises a first convolution layer, and wherein said processing the input pixels with the implementation of the neural network comprises:
using the first convolution layer to determine a first intermediate tensor based on the input pixels, wherein the first intermediate tensor extends in only one of a horizontal dimension and a vertical dimension with respect to the dimensions of the image region represented by the input pixels.

409. The method of clause 408 wherein the neural network further comprises a second convolution layer and a third convolution layer, and wherein said processing the input pixels with the implementation of the neural network further comprises:

using the second convolution layer to determine a second intermediate tensor based on the first intermediate tensor, wherein the second intermediate tensor does not extend in either the horizontal dimension or the vertical dimension with respect to the dimensions of the image region represented by the input pixels; and

using the third convolution layer to determine the indication of the one or more weighting parameters based on the second intermediate tensor.

410. The method of clause 409 wherein said updating one or more parameters of the neural network comprises updating a parameter of one or more of the first, second and third convolution layers.

411. The method of clause 409 or 410 wherein the neural network further comprises a first rectified linear unit implemented between the first convolution layer and the second convolution layer, and a second rectified linear unit implemented between the second convolution layer and the third convolution layer, and wherein said processing the input pixels with the implementation of the neural network further comprises:

using the first rectified linear unit to set negative values in the first intermediate tensor to zero; and

using the second rectified linear unit to set negative values in the second intermediate tensor to zero.

412. The method of any of clauses 401 to 411 wherein the neural network is trained using Quantization Aware Training (QAT).

413. The method of any of clauses 401 to 412 wherein each coefficient of the neural network is determined individually, and wherein the determining of each of the coefficients comprises one or both of: (i) learning an individual bit depth of the coefficient, and (ii) removing the coefficient from the neural network if a bit depth of the coefficient is learnt to be zero.

414. The method of any of clauses 401 to 413 wherein the trained neural network is hardcoded in a hardware implementation of the neural network, wherein the hardware implementation of the neural network is configured to process input pixels representing an image region and output an indication of one or more weighting parameters for use in applying upsampling to the input pixels to determine a block of upsampled pixels.

415. The method of any of clauses 401 to 414 wherein determining each of said one or more of the upsampled pixels comprises, in accordance with the determined one or more weighting parameters:

applying one or more first kernels to at least a first subset of the input pixels to determine a horizontal component,

applying one or more second kernels to at least a second subset of the input pixels to determine a vertical component, and

combining the determined horizontal and vertical components,

such that each of said one or more of the upsampled pixels is determined in accordance with the directionality of filtering indicated by the determined one or more weighting parameters.

416. The method of clause 415 wherein said combining the determined horizontal and vertical components comprises:

multiplying the horizontal component by a first of the weighting parameters to determine a weighted horizontal component;

multiplying the vertical component by a second of the weighting parameters to determine a weighted vertical component; and

summing the weighted horizontal component and the weighted vertical component.

417. A training module configured to train a neural network to output an indication of one or more weighting parameters for use in applying upsampling to input pixels to determine a block of upsampled pixels, the training module comprising:

an implementation of the neural network;

upsampling logic;

comparison logic; and

updating logic,

wherein the training module is configured to:

receive a reference image having pixels at upsampled pixel locations; and iteratively:

provide input pixels to the implementation of the neural network, wherein the input pixels are a subset of the pixels of the reference image representing an image region;

process the input pixels with the implementation of the neural network to determine an indication of one or more weighting parameters indicative of a directionality of filtering to be applied when upsampling is applied to the input pixels within the image region;

use the upsampling logic to apply upsampling to the input pixels to determine a block of upsampled pixels, said applying upsampling comprising determining one or more of the upsampled pixels of the block of upsampled pixels in accordance with the directionality of filtering indicated by the one or more weighting parameters;

use the comparison logic to compare upsampled pixels of the block of upsampled pixels, at locations which do not correspond to locations of pixels in the subset of pixels of the reference image, with pixels of the reference image at corresponding locations; and

use the updating logic to update one or more parameters of the neural network based on a result of said comparing.

418. The training module of clause 417 wherein said comparison logic is configured to calculate an indication of errors between the upsampled pixels of the block of upsampled pixels, at locations which do not correspond to locations of pixels in the subset of pixels of the reference image, and the pixels of the reference image at the corresponding locations, and wherein said updating logic is configured to, in a current iteration, update the one or more parameters of the neural network based on the calculated indication of the errors.

419. The training module of clause 417 or 418 wherein the neural network comprises:
a first convolution layer configured to determine a first intermediate tensor based on the input pixels, wherein the first intermediate tensor extends in only one of a horizontal dimension and a vertical dimension with respect to the dimensions of the image region represented by the input pixels.

420. The training module of clause 419 wherein the neural network further comprises:

a second convolution layer configured to determine a second intermediate tensor based on the first intermediate tensor, wherein the second intermediate tensor does not extend in either the horizontal dimension or the vertical dimension with respect to the dimensions of the image region represented by the input pixels; and

a third convolution layer configured to determine the indication of the one or more weighting parameters based on the second intermediate tensor.

421. The training module of clause 420 wherein the neural network further comprises a first rectified linear unit implemented between the first convolution layer and the second convolution layer, and a second rectified linear unit implemented between the second convolution layer and the third convolution layer,

wherein the first rectified linear unit is configured to set negative values in the first intermediate tensor to zero, and

wherein the second rectified linear unit is configured to set negative values in the second intermediate tensor to zero.

422. The training module of any of clauses 417 to 421 wherein the implementation of the neural network does not comprise any linestores.

423. The training module of any of clauses 417 to 422 configured to train the neural network using Quantization Aware Training (QAT).

424. A training module configured to perform the method of any of clauses 401 to 416.

425. The training module of any of clauses 417 to 424 wherein the training module is embodied in hardware on an integrated circuit.

426. Computer readable code configured to cause the method of any of clauses 401 to 416 to be performed when the code is run.

427. An integrated circuit definition dataset that, when processed in an integrated circuit manufacturing system, configures the integrated circuit manufacturing system to manufacture a training module as specified in any of clauses 417 to 425.

**Claims**

1. A method of determining an indication of one or more weighting parameters for use in applying upsampling to input pixels representing an image region to determine a block of upsampled pixels, the method comprising:

   receiving the input pixels at an implementation of a neural network, wherein the neural network has been trained to output an indication of the one or more weighting parameters to be indicative of a directionality of filtering to be applied when upsampling is applied to the input pixels within the image region;
   processing the input pixels with the implementation of the neural network to determine the indication of the one or more weighting parameters; and
   outputting the determined indication of the one or more weighting parameters for use in applying upsampling to the input pixels representing the image region to determine a block of upsampled pixels.

2. The method of claim 1 wherein the one or more weighting parameters are indicative of relative horizontal and vertical variation of the input pixels within the image region.

3. The method of claim 1 or 2 wherein the neural network comprises a first convolution layer, and wherein said processing the input pixels with the implementation of the neural network comprises:
   using the first convolution layer to determine a first intermediate tensor based on the input pixels, wherein the first intermediate tensor extends in only one of a horizontal dimension and a vertical dimension with respect to the dimensions of the image region represented by the input pixels.

4. The method of claim 3 wherein the image region is part of an input image, and wherein the upsampling is to be performed iteratively for a plurality of partially overlapping image regions within the input image,

   wherein said processing the input pixels with the implementation of the neural network further comprises storing the first intermediate tensor in a buffer, and
   wherein the first convolution layer operates on input pixels within a first portion of a current image region that does not overlap with a previous image region, but does not operate on input pixels within a second portion of the current image region that does overlap with the previous image region, to determine the first intermediate tensor.

5. The method of claim 3 or 4 wherein the neural network further comprises a second convolution layer and a third convolution layer, and wherein said processing the input pixels with the implementation of the neural network further comprises:

   using the second convolution layer to determine a second intermediate tensor based on the first intermediate tensor, wherein the second intermediate tensor does not extend in either the horizontal dimension or the vertical dimension with respect to the dimensions of the image region represented by the input pixels; and
   using the third convolution layer to determine the indication of the one or more weighting parameters based on the second intermediate tensor,
   optionally wherein the neural network further comprises a first rectified linear unit implemented between the first convolution layer and the second convolution layer, and a second rectified linear unit implemented between the second convolution layer and the third convolution layer, and wherein said processing the input pixels with the implementation of the neural network further comprises:

   using the first rectified linear unit to set negative values in the first intermediate tensor to zero; and
   using the second rectified linear unit to set negative values in the second intermediate tensor to zero.

6. The method of any preceding claim wherein the input pixels have locations corresponding to a repeating quincunx arrangement of upsampled pixel locations. optionally wherein the input pixels are represented in two input blocks, wherein one of the two input blocks comprises the input pixels having locations corresponding to locations within odd rows of the repeating quincunx arrangement of upsampled pixel locations, and the other of the two input blocks comprises the input pixels having locations corresponding to locations within even rows of the repeating quincunx arrangement of upsampled pixel locations.

7. The method of any preceding claim wherein the neural network has been trained using Quantization Aware Training (QAT).

8. The method of any preceding claim wherein the neural network is hardcoded in hardware of the implementation of the neural network, wherein each coefficient of the neural network has been determined individually, and wherein the determining of each of the coefficients comprises one or both of: (i) learning an individual bit depth of the coefficient, and (ii) removing the coefficient from the neural network if a bit depth of the coefficient is learnt to be zero.

9. The method of any preceding claim further comprising applying upsampling to the input pixels representing the image region, said upsampling comprising determining one or more of the upsampled pixels of the block of upsampled pixels in accordance with the directionality of filtering indicated by the one or more weighting parameters,
optionally wherein each of said one or more of the upsampled pixels is at a respective upsampled pixel location which does not correspond with the location of any of the input pixels.

10. A training module configured to train a neural network to output an indication of one or more weighting parameters for use in applying upsampling to input pixels to determine a block of upsampled pixels, the training module comprising:

   an implementation of the neural network;
   upsampling logic;
   comparison logic; and
   updating logic,
   wherein the training module is configured to:
   receive a reference image having pixels at upsampled pixel locations; and iteratively:

      provide input pixels to the implementation of the neural network, wherein the input pixels are a subset of the pixels of the reference image representing an image region;
      process the input pixels with the implementation of the neural network to determine an indication of one or more weighting parameters indicative of a directionality of filtering to be applied when upsampling is applied to the input pixels within the image region;
      use the upsampling logic to apply upsampling to the input pixels to determine a block of upsampled pixels, said applying upsampling comprising determining one or more of the upsampled pixels of the block of upsampled pixels in accordance with the directionality of filtering indicated by the one or more weighting parameters;
      use the comparison logic to compare upsampled pixels of the block of upsampled pixels, at locations which do not correspond to locations of pixels in the subset of pixels of the reference image, with pixels of the reference image at corresponding locations; and
use the updating logic to update one or more parameters of the neural network based on a result of said comparing.

11. The training module of claim 10 wherein said comparison logic is configured to calculate an indication of errors between the upsampled pixels of the block of upsampled pixels, at locations which do not correspond to locations of pixels in the subset of pixels of the reference image, and the pixels of the reference image at the corresponding locations, and wherein said updating logic is configured to, in a current iteration, update the one or more parameters of the neural network based on the calculated indication of the errors.

12. The training module of claim 10 or 11 wherein the neural network comprises:
a first convolution layer configured to determine a first intermediate tensor based on the input pixels, wherein the first intermediate tensor extends in only one of a horizontal dimension and a vertical dimension with respect to the dimensions of the image region represented by the input pixels.

13. The training module of claim 12 wherein the neural network further comprises:

   a second convolution layer configured to determine a second intermediate tensor based on the first intermediate tensor, wherein the second intermediate tensor does not extend in either the horizontal dimension or the vertical dimension with respect to the dimensions of the image region represented by the input pixels; and
   a third convolution layer configured to determine the indication of the one or more weighting parameters based on the second intermediate tensor
   optionally wherein the neural network further comprises a first rectified linear unit implemented between the first convolution layer and the second convolution layer, and a second rectified linear unit implemented between the second convolution layer and the third convolution layer, wherein the first rectified linear unit is configured to set negative values in the first intermediate tensor to zero, and
   wherein the second rectified linear unit is configured to set negative values in the second intermediate tensor to zero.

14. The training module of any of claims 10 to 13 wherein the implementation of the neural network does not comprise any linestores.

**15.** The training module of any of claims 10 to 14 configured to train the neural network using Quantization Aware Training (QAT).

FIGURE 1

FIGURE 2

FIGURE 3

402

302

Processing module

Pixel determination
logic

406

404

Weighting parameter
determination logic

408

410

**FIGURE 4**

Receive input pixels representing an image region

S502

Analyse the input pixels to determine one or more
weighting parameters

S504

Determine one or more of the upsampled pixels of the
block of upsampled pixels in accordance with the
weighting parameter(s)

S506

Output the block of upsampled pixels

S508

**FIGURE 5**

S506                          From S504

Apply one or more first kernels to a first subset of input pixels to determine a horizontal component

S602

Apply one or more second kernels to a second subset of input pixels to determine a vertical component

S604

Multiply the horizontal component by a first weighting parameter to determine a weighted horizontal component

S606

Multiply the vertical component by a second weighting parameter to determine a weighted vertical component

S608

Sum the weighted horizontal component and the weighted vertical component

S610

To S508

**FIGURE 6**

$704_{2,1}$   $704_{1,1}$  $704_{2,2}$

702

$704_{1,2}$

$704_{2,3}$

TR

BL

706

$704_{1,4}$

$704_{1,3}$   $704_{2,4}$

**FIGURE 7**

802

| | | |
|---|---|---|
| a/2 | | a/2 |
| | | |

**FIGURE 8a**

804

| | b/2 | |
|---|---|---|
| | | |
| | b/2 | |

**FIGURE 8b**

FIGURE 9

Receive input pixels at the implementation of the neural network ⟩∼S1002

↓

Use the first convolution layer to determine a first intermediate tensor ⟩∼S1004

↓

Use the first ReLU to set negative values in the first intermediate tensor to zero ⟩∼S1006

↓

Use the second convolution layer to determine a second intermediate tensor ⟩∼S1008

↓

Use the second ReLU to set negative values in the second intermediate tensor to zero ⟩∼S1010

↓

Use the third convolution layer to determine an indication of one or more weighting parameters ⟩∼S1012

↓

Output the determined indication of the weighting parameter(s) ⟩∼S1014

# FIGURE 10

1102

Weighting parameter determination logic

Input pixels → Gradient determination logic

dx, dy → Weighting parameter calculation logic → a, b

1104

1106

**FIGURE 11**

Determine indications of image gradients for the image region — S1202

Use the indications of image gradients to determine the weighting parameter(s) — S1204

**FIGURE 12**

**FIGURE 13**

Receive two input blocks of input pixels representing an image region — S1402

For each sharpened upsampled pixel

Apply a first set of one or more kernels to input pixels of the first input block — S1404

Apply a second set of one or more kernels to input pixels of the second input block

S1406

Combine the results to determine the sharpened upsampled pixel — S1408

Output the block of sharpened upsampled pixels — S1410

**FIGURE 14**

1502

|  | .25 |  |
|---|---|---|
| .25 | 1 | .25 |
|  | .25 |  |

**FIGURE 15**

1702

|  |  |  |  |  |
|---|---|---|---|---|
|  |  | .25 |  |  |
|  | .25 | 1 | .25 |  |
|  |  | .25 |  |  |
|  |  |  |  |  |

*

1704

|  |  |  |  |  |
|---|---|---|---|---|
| - | - | - | - | - |
| - | - | - - | - | - |
| - | - - | ++ ++ | - - | - |
| - | - | - - | - | - |
| - | - | - | - | - |

=

1706

|  |  |  |  |  |  |
|---|---|---|---|---|---|
|  | - | - | - | - | - |
| - | - | - | - | - | - |
| - | - | - - | ++ | - - | - |
| - | - | ++ | ++ ++ | ++ | - |
| - | - | - - | ++ | - - | - |
| - | - | - | - | - | - |
|  | - | - | - | - | - |

**FIGURE 17**

61

I(x)

1

1602

**FIGURE 16a**

G(x)

1

1604

**FIGURE 16b**

I(x) - G(x)

1

1606

**FIGURE 16c**

K(x)

2

1

1608

**FIGURE 16d**

1612

1610

**FIGURE 16e**

1612

1610

1614

**FIGURE 16f**

1616

**FIGURE 16g**

1618

1610

1612

**FIGURE 16h**

EP 4 575 974 A1

**FIGURE 18**

FIGURE 19

**FIGURE 20**

**FIGURE 21**

From S1404 and S1406

S1408

Determine a horizontal component

S2202

Determine a vertical component

S2204

Multiply the horizontal component by a first weighting parameter to determine a weighted horizontal component

S2206

Multiply the vertical component by a second weighting parameter to determine a weighted vertical component

S2208

Sum the weighted horizontal component and the weighted vertical component

S2210

To S1410

FIGURE 22

FIGURE 23

EP 4 575 974 A1

FIGURE 24

EP 4 575 974 A1

FIGURE 25

FIGURE 26

EP 4 575 974 A1

**FIGURE 27**

EP 4 575 974 A1

Receive input pixels representing an image region ⟩∽ S2802

S2804 ⟨ Analyse the input pixels to determine one or more weighting parameters

S2806 ⟨ Determine a block of non-sharpened upsampled pixels for the image region

S2808

Determine a block of sharpened upsampled pixels for the image region

Determine an indication of contrast for the image region ∽ S2810

Determine each of the output pixels by performing a respective weighted sum of corresponding non-sharpened and sharpened upsampled pixels using weights based on the indication of contrast for the image region ∽ S2812

Output the block of output pixels ∽ S2814

**FIGURE 28**

**FIGURE 29**

EP 4 575 974 A1

```
┌─────────────────────────────────────────┐
│         Receive a reference image         │───╮ S3002
└─────────────────────────────────────────┘
                      │
                      ▼
┌─────────────────────────────────────────┐
│  Provide input pixels to the implementation of the  │───╮ S3004
│              neural network               │
└─────────────────────────────────────────┘
                      │
                      ▼
┌─────────────────────────────────────────┐
│  Process the input pixels with the implementation of │
│  the neural network to determine one or more        │───╮ S3006
│            weighting parameters           │
└─────────────────────────────────────────┘
                      │
                      ▼
┌─────────────────────────────────────────┐
│  Apply upsampling to the input pixels to determine a │
│  block of upsampled pixels in accordance with the   │───╮ S3008
│            weighting parameter(s)         │
└─────────────────────────────────────────┘
                      │
                      ▼
┌─────────────────────────────────────────┐
│  Compare upsampled pixels with pixels of the        │───╮ S3010
│   reference image at corresponding locations        │
└─────────────────────────────────────────┘
                      │
                      ▼
┌─────────────────────────────────────────┐
│   Update one or more parameters of the neural       │───╮ S3012
│                  network                  │
└─────────────────────────────────────────┘
                      │
                      ▼
Yes          ◇ Perform another iteration for a different ◇───╮ S3014
                       image region?
                      │
                      │ No
                      ▼
┌─────────────────────────────────────────┐
│        Store parameters of neural network │───╮ S3018
└─────────────────────────────────────────┘
```

**FIGURE 30**

3102          3104

**CPU**        **GPU**

3110

3114

Display   3116

Speakers   3118

Camera   3122

3120

3106   **Memory**      **NNA**

3108

## FIGURE 31

3202

3204          3206

IC definition dataset → Layout processing → Circuit layout definition → Integrated circuit generation → Integrated circuit

## FIGURE 32

# EUROPEAN SEARCH REPORT

**Application Number**

EP 24 22 0674

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 617 220 A (IMAGINATION TECH LTD [GB]) 4 October 2023 (2023-10-04) | 1-4,7-9, 11,12, 14,15 | INV. G06T3/4007 G06T3/4053 |
| Y | * paragraph [0107] - paragraph [0110]; | 6 | G06T3/4046 |
| A | claims 1,6,8; figures 3a,3b,8 * * paragraph [0005] * | 5,13 | |
| Y | US 2013/113884 A1 (LEONTARIS ATHANASIOS [US] ET AL) 9 May 2013 (2013-05-09) | 6 | |
| A | * figure 4 * | 1-5,7-15 | |

TECHNICAL FIELDS
SEARCHED     (IPC)

G06T
H04N

The present search report has been drawn up for all claims

| Place of search | Date of completion of the search | Examiner |
|---|---|---|
| The Hague | 19 March 2025 | Nowbakht Irani, Ali |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 22 0674

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2025

| Patent document cited in search report | | Publication date | Patent family member(s) | | Publication date |
|---|---|---|---|---|---|
| GB 2617220 | A | 04-10-2023 | CN | 117830145 A | 05-04-2024 |
| | | | GB | 2617220 A | 04-10-2023 |
| US 2013113884 | A1 | 09-05-2013 | CN | 103262532 A | 21-08-2013 |
| | | | EP | 2596635 A2 | 29-05-2013 |
| | | | US | 2013113884 A1 | 09-05-2013 |
| | | | WO | 2012012444 A2 | 26-01-2012 |

EPO FORM P0459

For more details about this annex : see Official Journal of the European Patent Office, No. 12/82

**EP 4 575 974 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2319651 A